# EUROPEAN PATENT APPLICATION

(11) **EP 4 027 753 A1**
(43) Date of publication of application: **13.07.2022**
(21) Application number: 20860158.3
(22) Date of filing: 27.08.2020
(51) Int. Cl.: H04W 92/18, H04W 4/44, H04W 48/10

(54) **COMMUNICATION SYSTEM, COMMUNICATION TERMINAL, AND BASE STATION**

(30) Priority: 04.09.2019 JP 2019161018
(71) Applicant: MITSUBISHI ELECTRIC CORPORATION, Chiyoda-ku Tokyo 100-8310 (JP)
(72) Inventor: MOCHIZUKI Mitsuru, Tokyo 100-8310 (JP); SHIMODA Tadahiro, Tokyo 100-8310 (JP); HASEGAWA Fumiki, Tokyo 100-8310 (JP)
(74) Representative: Sajda, Wolf E.
(86) International application number: PCT/JP2020/032344
(87) International publication number: WO 2021/044936

(57) **Abstract**

Provided is a technology for implementing a service using Device-to-Device communication such as the V2X communication. A communication system includes: a base station configured to perform communication with a core network; and a communication terminal configured to perform radio communication with the base station. The base station supports a Non-Public Network. The communication terminal is configured to implement a service using Device-to-Device Communication. The communication terminal determines whether the base station is accessible, based on information indicating in which Non-Public Network various services using the Device-to-Device Communication are available.

## Description

### Technical Field

The present invention relates to a radio communication technology.

### Background Art

The 3rd generation partnership project (3GPP), the standard organization regarding the mobile communication system, is studying communication systems referred to as long term evolution (LTE) regarding radio sections and system architecture evolution (SAE) regarding the overall system configuration including a core network and a radio access network which is hereinafter collectively referred to as a network as well (for example, see Non-Patent Documents 1 to 5). This communication system is also referred to as 3.9 generation (3.9 G) system.

As the access scheme of the LTE, orthogonal frequency division multiplexing (OFDM) is used in a downlink direction and single carrier frequency division multiple access (SC-FDMA) is used in an uplink direction. Further, differently from the wideband code division multiple access (W-CDMA), circuit switching is not provided but a packet communication system is only provided in the LTE.

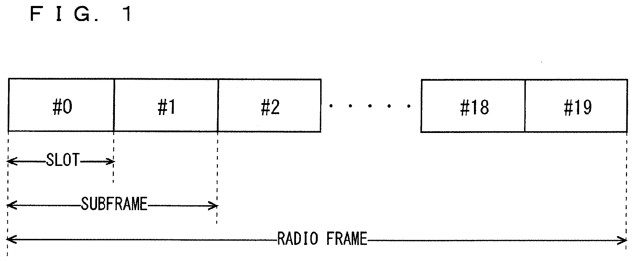

The decisions taken in 3GPP regarding the frame configuration in the LTE system described in Non-Patent Document 1 (Chapter 5) are described with reference to FIG. 1. FIG. 1 is a diagram illustrating the configuration of a radio frame used in the LTE communication system. With reference to FIG. 1, one radio frame is 10 ms. The radio frame is divided into ten equally sized subframes. The subframe is divided into two equally sized slots. The first and sixth subframes contain a downlink synchronization signal per radio frame. The synchronization signals are classified into a primary synchronization signal (P-SS) and a secondary synchronization signal (S-SS).

Non-Patent Document 1 (Chapter 5) describes the decisions by 3GPP regarding the channel configuration in the LTE system. It is assumed that the same channel configuration is used in a closed subscriber group (CSG) cell as that of a non-CSG cell.

A physical broadcast channel (PBCH) is a channel for downlink transmission from a base station device (hereinafter may be simply referred to as a "base station") to a communication terminal device (hereinafter may be simply referred to as a "communication terminal") such as a user equipment device (hereinafter may be simply referred to as a "user equipment"). A BCH transport block is mapped to four subframes within a 40 ms interval. There is no explicit signaling indicating 40 ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted per subframe.

A physical downlink control channel (PDCCH) is a channel for downlink transmission from a base station to a communication terminal. The PDCCH notifies of the resource allocation information for downlink shared channel (DL-SCH) being one of the transport channels described below, resource allocation information for a paging channel (PCH) being one of the transport channels described below, and hybrid automatic repeat request (HARQ) information related to DL-SCH. The PDCCH carries an uplink scheduling grant. The PDCCH carries acknowledgment (Ack) / negative acknowledgment (Nack) that is a response signal to uplink transmission. The PDCCH is referred to as an L1/L2 control signal as well.

A physical downlink shared channel (PDSCH) is a channel for downlink transmission from a base station to a communication terminal. A downlink shared channel (DL-SCH) that is a transport channel and a PCH that is a transport channel are mapped to the PDSCH.

A physical multicast channel (PMCH) is a channel for downlink transmission from a base station to a communication terminal. A multicast channel (MCH) that is a transport channel is mapped to the PMCH.

A physical uplink control channel (PUCCH) is a channel for uplink transmission from a communication terminal to a base station. The PUCCH carries Ack/Nack that is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in the MIMO. The PMI is information of a precoding weight matrix to be used in the MIMO. The CQI is quality information indicating the quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) that is one of the transport channels is mapped to the PUSCH.

A physical hybrid ARQ indicator channel (PHICH) is a channel for downlink transmission from a base station to a communication terminal. The PHICH carries Ack/Nack that is a response signal to uplink transmission. A physical random access channel (PRACH) is a channel for uplink transmission from the communication terminal to the base station. The PRACH carries a random access preamble.

A downlink reference signal (RS) is a known symbol in the LTE communication system. The following five types of downlink reference signals are defined as: a cell-specific reference signal (CRS), an MBSFN reference signal, a data demodulation reference signal (DM-RS) being a UE-specific reference signal, a positioning reference signal (PRS), and a channel state information reference signal (CSI-RS). The physical layer measurement objects of a communication terminal include reference signal received powers (RSRPs).

An uplink reference signal is also a known symbol in the LTE communication system. The following two types of uplink reference signals are defined, that is, a demodulation reference signal (DM-RS) and a sounding reference signal (SRS).

The transport channels described in Non-Patent Document 1 (Chapter 5) are described. A broadcast channel (BCH) among the downlink transport channels is broadcast to the entire coverage of a base station (cell). The BCH is mapped to the physical broadcast channel (PBCH).

Retransmission control according to a hybrid ARQ (HARQ) is applied to a downlink shared channel (DL-SCH). The DL-SCH can be broadcast to the entire coverage of the base station (cell). The DL-SCH supports dynamic or semi-static resource allocation. The semi-static resource allocation is also referred to as persistent scheduling. The DL-SCH supports discontinuous reception (DRX) of a communication terminal for enabling the communication terminal to save power. The DL-SCH is mapped to the physical downlink shared channel (PDSCH).

The paging channel (PCH) supports DRX of the communication terminal for enabling the communication terminal to save power. The PCH is required to be broadcast to the entire coverage of the base station (cell). The PCH is mapped to physical resources such as the physical downlink shared channel (PDSCH) that can be used dynamically for traffic.

The multicast channel (MCH) is used for broadcasting the entire coverage of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control according to a hybrid ARQ (HARQ) is applied to an uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH involves a collision risk. The RACH is mapped to the physical random access channel (PRACH).

The HARQ is described. The HARQ is the technique for improving the communication quality of a channel by combination of automatic repeat request (ARQ) and error correction (forward error correction). The HARQ is advantageous in that error correction functions effectively by retransmission even for a channel whose communication quality changes. In particular, it is also possible to achieve further quality improvement in retransmission through combination of the reception results of the first transmission and the reception results of the retransmission.

An example of the retransmission method is described. If the receiver fails to successfully decode the received data, in other words, if a cyclic redundancy check (CRC) error occurs (CRC = NG), the receiver transmits "Nack" to the transmitter. The transmitter that has received "Nack" retransmits the data. If the receiver successfully decodes the received data, in other words, if a CRC error does not occur (CRC = OK), the receiver transmits "Ack" to the transmitter. The transmitter that has received "Ack" transmits the next data.

The logical channels described in Non-Patent Document 1 (Chapter 6) are described. A broadcast control channel (BCCH) is a downlink channel for broadcast system control information. The BCCH that is a logical channel is mapped to the broadcast channel (BCH) or downlink shared channel (DL-SCH) that is a transport channel.

A paging control channel (PCCH) is a downlink channel for transmitting paging information and system information change notifications. The PCCH is used when the network does not know the cell location of a communication terminal. The PCCH that is a logical channel is mapped to the paging channel (PCH) that is a transport channel.

A common control channel (CCCH) is a channel for transmission control information between communication terminals and a base station. The CCCH is used in a case where the communication terminals have no RRC connection with the network. In the downlink direction, the CCCH is mapped to the downlink shared channel (DL-SCH) that is a transport channel. In the uplink direction, the CCCH is mapped to the uplink shared channel (UL-SCH) that is a transport channel.

A multicast control channel (MCCH) is a downlink channel for point-to-multipoint transmission. The MCCH is used for transmission of MBMS control information for one or several MTCHs from a network to a communication terminal. The MCCH is used only by a communication terminal during reception of the MBMS. The MCCH is mapped to the multicast channel (MCH) that is a transport channel.

A dedicated control channel (DCCH) is a channel that transmits dedicated control information between a communication terminal and a network on a point-to-point basis. The DCCH is used when the communication terminal has an RRC connection. The DCCH is mapped to the uplink shared channel (UL-SCH) in uplink and mapped to the downlink shared channel (DL-SCH) in downlink.

A dedicated traffic channel (DTCH) is a point-to-point communication channel for transmission of user information to a dedicated communication terminal. The DTCH exists in uplink as well as downlink. The DTCH is mapped to the uplink shared channel (UL-SCH) in uplink and mapped to the downlink shared channel (DL-SCH) in downlink.

A multicast traffic channel (MTCH) is a downlink channel for traffic data transmission from a network to a communication terminal. The MTCH is a channel used only by a communication terminal during reception of the MBMS. The MTCH is mapped to the multicast channel (MCH).

CGI represents a cell global identifier. ECGI represents an E-UTRAN cell global identifier. A closed subscriber group (CSG) cell is introduced into the LTE, and the long term evolution advanced (LTE-A) and universal mobile telecommunication system (UMTS) described below.

The locations of communication terminals are tracked based on an area composed of one or more cells. The locations are tracked for enabling tracking the locations of communication terminals and calling communication terminals, in other words, incoming calling to communication terminals even in an idle state. An area for tracking locations of communication terminals is referred to as a tracking area.

Further, specifications of long term evolution advanced (LTE-A) are pursued as Release 10 in 3GPP (see Non-Patent Documents 3 and 4). The LTE-A is based on the LTE radio communication system and is configured by adding several new techniques to the system.

Carrier aggregation (CA) is studied for the LTE-A system in which two or more component carriers (CCs) are aggregated to support wider transmission bandwidths up to 100 MHz. Non-Patent Document 1 describes the CA.

In a case where CA is configured, a UE has a single RRC connection with a network (NW). In RRC connection, one serving cell provides NAS mobility information and security input. This cell is referred to as a primary cell (PCell). In downlink, a carrier corresponding to PCell is a downlink primary component carrier (DL PCC). In uplink, a carrier corresponding to PCell is an uplink primary component carrier (UL PCC).

A secondary cell (SCell) is configured to form a serving cell group with a PCell, in accordance with the UE capability. In downlink, a carrier corresponding to SCell is a downlink secondary component carrier (DL SCC). In uplink, a carrier corresponding to SCell is an uplink secondary component carrier (UL SCC).

A serving cell group of one PCell and one or more SCells is configured for one UE.

The new techniques in the LTE-A include the technique of supporting wider bands (wider bandwidth extension) and the coordinated multiple point transmission and reception (CoMP) technique. The CoMP studied for LTE-A in 3GPP is described in Non-Patent Document 1.

Furthermore, the use of small eNBs (hereinafter also referred to as "small-scale base station devices") configuring small cells is studied in 3GPP to satisfy tremendous traffic in the future. In an example technique under study, a large number of small eNBs is installed to configure a large number of small cells, which increases spectral efficiency and communication capacity. The specific techniques include dual connectivity (abbreviated as DC) with which a UE communicates with two eNBs through connection thereto. Non-Patent Document 1 describes the DC.

For eNBs that perform dual connectivity (DC), one may be referred to as a master eNB (abbreviated as MeNB), and the other may be referred to as a secondary eNB (abbreviated as SeNB).

The traffic flow of a mobile network is on the rise, and the communication rate is also increasing. It is expected that the communication rate is further increased when the operations of the LTE and the LTE-A are fully initiated.

For increasingly enhanced mobile communications, the fifth generation (hereinafter also referred to as "5G") radio access system is studied whose service is aimed to be launched in 2020 and afterward. For example, in the Europe, an organization named METIS summarizes the requirements for 5G (see Non-Patent Document 5).

The requirements in the 5G radio access system show that a system capacity shall be 1000 times as high as, a data transmission rate shall be 100 times as high as, a data latency shall be one tenth (1/10) as low as, and simultaneously connected communication terminals 100 times as many as those of the LTE system, to further reduce the power consumption and device cost.

To satisfy such requirements, the study of 5G standards is pursued as Release 15 in 3GPP (see Non-Patent Documents 6 to 18). The techniques on 5G radio sections are referred to as "New Radio Access Technology" ("New Radio" is abbreviated as NR).

The NR system has been studied based on the LTE system and the LTE-A system. The NR system includes additions and changes from the LTE system and the LTE-A system in the following points.

As the access schemes of the NR, the orthogonal frequency division multiplexing (OFDM) is used in the downlink direction, and the OFDM and the DFT-spread-OFDM (DFT-s-OFDM) are used in the uplink direction.

In NR, frequencies higher than those in the LTE are available for increasing the transmission rate and reducing the latency.

In NR, a cell coverage is maintained by forming a transmission/reception range shaped like a narrow beam (beamforming) and also changing the orientation of the beam (beam sweeping).

In NR, various subcarrier spacings, that is, various numerologies are supported. Regardless of the numerologies, 1 subframe is 1 millisecond long, and 1 slot consists of 14 symbols in NR. Furthermore, the number of slots in 1 subframe is one in a numerology at a subcarrier spacing of 15 kHz. The number of slots increases in proportion to the subcarrier spacing in the other numerologies (see Non-Patent Document 13 (TS38.211 V15.2.0)).

The base station transmits a downlink synchronization signal in NR as synchronization signal burst (may be hereinafter referred to as SS burst) with a predetermined period for a predetermined duration. The SS burst includes synchronization signal blocks (may be hereinafter referred to as SS blocks) for each beam of the base station. The base station transmits the SS blocks for each beam during the duration of the SS burst with the beam changed. The SS blocks include the P-SS, the S-SS, and the PBCH.

In NR, addition of a phase tracking reference signal (PTRS) as a downlink reference signal has reduced the influence of phase noise. The PTRS has also been added as an uplink reference signal similarly to the downlink.

In NR, a slot format indication (SFI) has been added to information included in the PDCCH for flexibly switching between the DL and the UL in a slot.

Also in NR, the base station preconfigures, for the UE, a part of a carrier frequency band (may be hereinafter referred to as a Bandwidth Part (BWP)). Then, the UE performs transmission and reception with the base station in the BWP. Consequently, the power consumption in the UE is reduced.

The DC patterns studied in 3GPP include the DC to be performed between an LTE base station and an NR base station that are connected to the EPC, the DC to be performed by the NR base stations that are connected to the 5G core system, and the DC to be performed between the LTE base station and the NR base station that are connected to the 5G core system (see Non-Patent Documents 12, 16, and 19).

Furthermore, several new technologies have been studied in 3GPP. For example, supporting the V2X communication not only in LTE but also in the 5G core system has been studied (Non-Patent Documents 1, 20, and 21). For example, connection to Non-Public Networks (NPNs) has been studied (see Non-Patent Documents 22 and 23).

### Prior-Art Documents

### Non-Patent Documents

Non-Patent Document 1: 3GPP TS 36.300 V15.4.0
Non-Patent Document 2: 3GPP S1-083461
Non-Patent Document 3: 3GPP TR 36.814 V9.2.0
Non-Patent Document 4: 3GPP TR 36.912 V15.0.0
Non-Patent Document 5: "Scenarios, requirements and KPIs for 5G mobile and wireless system", ICT-317669-METIS/D1.1
Non-Patent Document 6: 3GPP TR 23.799 V14.0.0
Non-Patent Document 7: 3GPP TR 38.801 V14.0.0
Non-Patent Document 8: 3GPP TR 38.802 V14.2.0
Non-Patent Document 9: 3GPP TR 38.804 V14.0.0
Non-Patent Document 10: 3GPP TR 38.912 V14.1.0
Non-Patent Document 11: 3GPP RP-172115
Non-Patent Document 12: 3GPP TS 37.340 V15.2.0
Non-Patent Document 13: 3GPP TS 38.211 V15.2.0
Non-Patent Document 14: 3GPP TS 38.213 V15.2.0
Non-Patent Document 15: 3GPP TS 38.214 V15.2.0
Non-Patent Document 16: 3GPP TS 38.300 V15.2.0
Non-Patent Document 17: 3GPP TS 38.321 V15.2.0
Non-Patent Document 18: 3GPP TS 38.212 V15.2.0
Non-Patent Document 19: 3GPP RP-161266
Non-Patent Document 20: 3GPP TS 23.285 V15.2.0
Non-Patent Document 21: 3GPP TS 23.287 V1.0.0
Non-Patent Document 22: 3GPP TS 23.501 V16.1.0
Non-Patent Document 23: 3GPP R2-1900408
Non-Patent Document 24: 3GPP TR 23.734 V16.2.0
Non-Patent Document 25: 3GPP S1-191338
Non-Patent Document 26: 3GPP S1-191580
Non-Patent Document 27: 3GPP RP-182111

### Summary

### Problems to be Solved by the Invention

Supporting the V2X communication not only in LTE but also in the 5G core system has been studied (Non-Patent Documents 1, 20, and 21). The sidelink communication (also referred to as the PC5 communication) is supported in the V2X communication. Enabling the D2D communication using the PC5 communication has been studied. Supporting the PC5 communication involves problems of how to satisfy the QoS required for the service using the PC5 communication and how to reduce the interference between services.

As described above, introduction of the NPNs using the 5G communication system (hereinafter may be referred to as the 5G system) has been studied in 3GPP. Introduction of the NPNs using the 5G system for indoor use, for example, inside factories has been studied (see Non-Patent Document 24 (3GPP TR23.734 V16.2.0)). Configuring a NPN indoors, for example, inside a factory and supporting services in the communication between a base station and a device in the NPN or the Device-to-Device communication (D2D communication) are required (see Non-Patent Document 25 (3GPP S1-191338) and Non-Patent Document 26 (3GPP S1-191580)).

Although, how to conduct the V2X communication in a conventional public network is disclosed, none discloses how to conduct the V2X communication in the NPNs. For example, although the NPNs require access control, none discloses how to conduct the V2X communication in the NPNs in which the access control is exercised. This causes a problem of failing to conduct the V2X communication and the D2D communication in the NPNs.

This further causes a problem of failing to establish a radio communication technology appropriate for various industries, such as radio communication inside factories or the V2X communication.

In view of the problems, one of the objects of the present invention is to provide a technology for implementing services using the Device-to-Device communication such as the V2X communication.

### Means to Solve the Problems

The present invention provides a communication system including: a base station configured to perform communication with a core network; and a communication terminal configured to perform radio communication with the base station, wherein the base station supports a Non-Public Network, the communication terminal is configured to implement a service using Device-to-Device communication, and the communication terminal determines whether the base station is accessible, based on information indicating in which Non-Public Network various services using the Device-to-Device communication are available.

The present invention provides a communication terminal configured to perform radio communication with a base station, wherein the base station supports a Non-Public Network, the communication terminal is configured to implement a service
using Device-to-Device communication, and the communication terminal determines whether the base station is accessible, based on information indicating in which Non-Public Network various services using the Device-to-Device communication are available.

The present invention provides a base station configured to perform radio communication with a communication terminal, wherein the base station supports a Non-Public Network, the communication terminal is configured to implement a service using Device-to-Device communication, the communication terminal determines whether the base station is accessible, based on identification information on the Non-Public Network supported by the base station, a type of the service implemented by the communication terminal, and information indicating in which Non-Public Network various services using the Device-to-Device communication are available, and the base station transmits, to the communication terminal, the identification information on the Non-Public Network supported by the base station.

### Effects of the Invention

The present invention can implement a service using the Device-to-Device communication.

The object, features, aspects and advantages of the present invention will become more apparent from the following detailed description and the accompanying drawings of the present invention.

### Brief Description of Drawings

- FIG. 1: is a diagram illustrating the configuration of a radio frame for use in an LTE communication system.
- FIG. 2: is a block diagram showing the overall configuration of an LTE communication system 200 under discussion of 3GPP.
- FIG. 3: is a block diagram illustrating an overall configuration of a NR communication system 210 that has been discussed in 3GPP.
- FIG. 4: illustrates a structure of the DC to be performed by an eNB and a gNB that are connected to the EPC.
- FIG. 5: illustrates a structure of the DC to be performed by gNBs that are connected to the NG core.
- FIG. 6: illustrates a structure of the DC to be performed by the eNB and the gNB that are connected to the NG core.
- FIG. 7: illustrates a structure of the DC to be performed by the eNB and the gNB that are connected to the NG core.
- FIG. 8: is a block diagram showing the configuration of a user equipment 202 shown in FIG. 2.
- FIG. 9: is a block diagram showing the configuration of a base station 203 shown in FIG. 2.
- FIG. 10: is a block diagram showing the configuration of an MME.
- FIG. 11: is a block diagram illustrating a configuration of the 5GC.
- FIG. 12: is a flowchart showing an outline from a cell search to an idle state operation performed by a communication terminal (UE) in LTE communication system.
- FIG. 13: illustrates an example structure of a cell in an NR system.
- FIG. 14: illustrates an example sequence for performing the V2X Uu communication through its own NPN cell according to the first embodiment.
- FIG. 15: illustrates the example sequence for performing the V2X Uu communication through its own NPN cell according to the first embodiment.
- FIG. 16: illustrates an example sequence for performing the V2X PC5 communication through its own NPN cell according to the first modification of the first embodiment.
- FIG. 17: illustrates the example sequence for performing the V2X PC5 communication through its own NPN cell according to the first modification of the first embodiment.
- FIG. 18: illustrates an example sequence for performing the V2X PC5 communication through its own NPN cell according to the second modification of the first embodiment.
- FIG. 19: illustrates the example sequence for performing the V2X PC5 communication through its own NPN cell according to the second modification of the first embodiment.
- FIG. 20: illustrates the first example sequence for performing the PC5 communication outside a coverage of a cell belonging to its own NPN, according to the third modification of the first embodiment.
- FIG. 21: illustrates the second example sequence for performing the PC5 communication outside the coverage of the cell belonging to its own NPN, according to the third modification of the first embodiment.
- FIG. 22: illustrates an example sequence for performing the PC5 communication through a cell that does not belong to its own NPN, according to the fourth modification of the first embodiment.
- FIG. 23: illustrates the example sequence for performing the PC5 communication through the cell that does not belong to its own NPN, according to the fourth modification of the first embodiment.
- FIG. 24: illustrates the first example sequence for performing the PC5 communication through the cell that does not belong to its own NPN, according to the fifth modification of the first embodiment.
- FIG. 25: illustrates the first example sequence for performing the PC5 communication through the cell that does not belong to its own NPN, according to the fifth modification of the first embodiment.
- FIG. 26: illustrates the second example sequence for performing the PC5 communication through the cell that does not belong to its own NPN, according to the fifth modification of the first embodiment.
- FIG. 27: illustrates the second example sequence for performing the PC5 communication through the cell that does not belong to its own NPN, according to the fifth modification of the first embodiment.
- FIG. 28: illustrates an example sequence for monitoring the QoS in the PC5 communication according to the second embodiment.
- FIG. 29: illustrates the example sequence for monitoring the QoS in the PC5 communication according to the second embodiment.
- FIG. 30: illustrates an example sequence for monitoring the QoS in the PC5 communication according to the first modification of the second embodiment.
- FIG. 31: illustrates the example sequence for monitoring the QoS in the PC5 communication according to the first modification of the second embodiment.
- FIG. 32: illustrates the example sequence for monitoring the QoS in the PC5 communication according to the first modification of the second embodiment.
- FIG. 33: illustrates the first example sequence for monitoring the QoS in the PC5 communication according to the third modification of the second embodiment.
- FIG. 34: illustrates the first example sequence for monitoring the QoS in the PC5 communication according to the third modification of the second embodiment.
- FIG. 35: illustrates the second example sequence for monitoring the QoS in the PC5 communication according to the third modification of the second embodiment.
- FIG. 36: illustrates the second example sequence for monitoring the QoS in the PC5 communication according to the third modification of the second embodiment.
- FIG. 37: illustrates the third example sequence for monitoring the QoS in the PC5 communication according to the third modification of the second embodiment.
- FIG. 38: illustrates an example sequence for monitoring the QoS in the PC5 communication according to the fourth modification of the second embodiment.
- FIG. 39: illustrates the first example sequence for performing the network slicing in the V2X service using the PC5 communication according to the third embodiment.
- FIG. 40: illustrates the second example sequence for performing the network slicing in the V2X service using the PC5 communication according to the third embodiment.
- FIG. 41: illustrates the second example sequence for performing the network slicing in the V2X service using the PC5 communication according to the third embodiment.
- FIG. 42: illustrates the third example sequence for performing the network slicing in the V2X service using the PC5 communication according to the third embodiment.

### Description of Embodiments

### The first embodiment

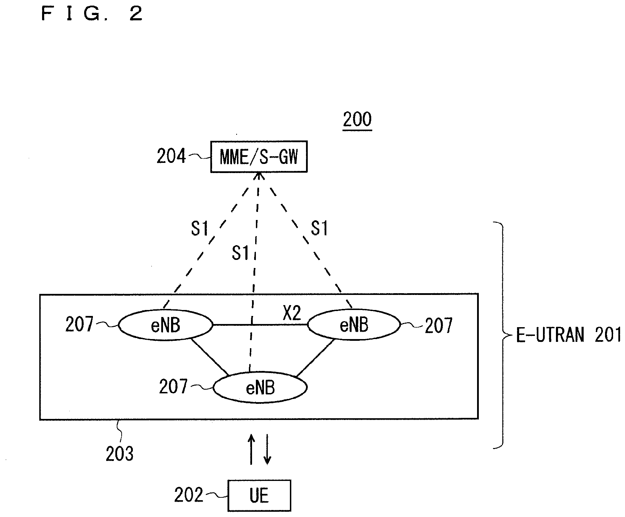

FIG. 2 is a block diagram showing an overall configuration of an LTE communication system 200 which is under discussion of 3GPP. FIG. 2 is described here. A radio access network is referred to as an evolved universal terrestrial radio access network (E-UTRAN) 201. A user equipment device (hereinafter, referred to as a "user equipment (UE)") 202 that is a communication terminal device is capable of radio communication with a base station device (hereinafter, referred to as a "base station (E-UTRAN Node B: eNB)") 203 and transmits and receives signals through radio communication.

Here, the "communication terminal device" covers not only a user equipment device such as a mobile phone terminal device, but also an unmovable device such as a sensor. In the following description, the "communication terminal device" may be simply referred to as a "communication terminal".

The E-UTRAN is composed of one or a plurality of base stations 203, provided that a control protocol for the user equipment 202 such as a radio resource control (RRC), and user planes (hereinafter also referred to as "U-planes") such as a packet data convergence protocol (PDCP), radio link control (RLC), medium access control (MAC), or physical layer (PHY) are terminated in the base station 203.

The control protocol radio resource control (RRC) between the user equipment 202 and the base station 203 performs, for example, broadcast, paging, and RRC connection management. The states of the base station 203 and the user equipment 202 in RRC are classified into RRC_IDLE and RRC_CONNECTED.

In RRC_IDLE, public land mobile network (PLMN) selection, system information (SI) broadcast, paging, cell reselection, mobility, and the like are performed. In RRC_CONNECTED, the user equipment has RRC connection and is capable of transmitting and receiving data to and from a network. In RRC_CONNECTED, for example, handover (HO) and measurement of a neighbor cell are performed.

The base stations 203 includes one or more eNBs 207. A system, composed of an evolved packet core (EPC) being a core network and an E-UTRAN 201 being a radio access network, is referred to as an evolved packet system (EPS). The EPC being a core network and the E-UTRAN 201 being a radio access network may be collectively referred to as a "network".

The eNB 207 is connected to an MME/S-GW unit (hereinafter, also referred to as an "MME unit") 204 including a mobility management entity (MME), a serving gateway (S-GW) or an MME and an S-GW by means of an S1 interface, and control information is communicated between the eNB 207 and the MME unit 204. A plurality of MME units 204 may be connected to one eNB 207. The eNBs 207 are connected to each other by means of an X2 interface, and control information is communicated between the eNBs 207.

The MME unit 204 is a high-level device, specifically, a high-level node, and controls connection between the user equipment (UE) 202 and the eNBs 207 comprising a base station. The MME unit 204 configures the EPC that is a core network. The base station 203 configures the E-UTRAN 201.

The base station 203 may configure one or more cells. Each of the cells has a predefined range as a coverage that is a range in which communication with the user equipment 202 is possible, and performs radio communication with the user equipment 202 within the coverage. When the one base station 203 configures a plurality of cells, each of the cells is configured to communicate with the user equipment 202.

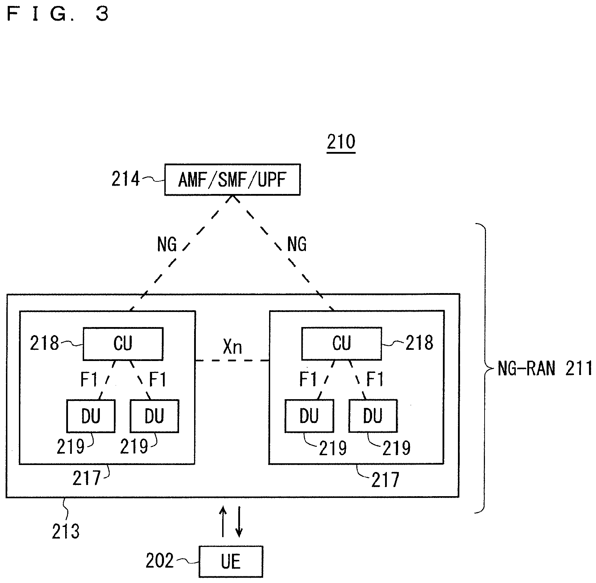

FIG. 3 is a block diagram illustrating an overall configuration of a 5G communication system 210 that has been discussed in 3GPP. FIG. 3 is described. A radio access network is referred to as a next generation radio access network (NG-RAN) 211. The UE 202 can perform radio communication with an NR base station device (hereinafter referred to as a "NR base station (NG-RAN NodeB (gNB))") 213, and transmits and receives signals to and from the NR base station 213 via radio communication. Furthermore, the core network is referred to as a 5G Core (5GC).

When control protocols for the UE 202, for example, Radio Resource Control (RRC) and user planes (may be hereinafter referred to as U-Planes), e.g., Service Data Adaptation Protocol (SDAP), Packet Data Convergence Protocol (PDCP), Radio Link Control (RLC), Medium Access Control (MAC), and Physical Layer (PHY) are terminated in the NR base station 213, one or more NR base stations 213 configure the NG-RAN.

The functions of the control protocol of the Radio Resource Control (RRC) between the UE 202 and the NR base station 213 are identical to those in LTE. The states of the NR base station 213 and the UE 202 in RRC include RRC_IDLE, RRC CONNECTED, and RRC INACTIVE.

RRC_IDLE and RRC_CONNECTED are identical to those in LTE. In RRC INACTIVE, for example, broadcast of system information (SI), paging, cell reselection, and mobility are performed while the connection between the 5G Core and the NR base station 213 is maintained.

Through an NG interface, gNBs 217 are connected to the Access and Mobility Management Function (AMF), the Session Management Function (SMF), the User Plane Function (UPF), or an AMF/SMF/UPF unit (may be hereinafter referred to as a 5GC unit) 214 including the AMF, the SMF, and the UPF. The control information and/or user data are communicated between each of the gNBs 217 and the 5GC unit 214. The NG interface is a generic name for an N2 interface between the gNBs 217 and the AMF, an N3 interface between the gNBs 217 and the UPF, an N11 interface between the AMF and the SMF, and an N4 interface between the UPF and the SMF. A plurality of the 5GC units 214 may be connected to one of the gNBs 217. The gNBs 217 are connected through an Xn interface, and the control information and/or user data are communicated between the gNBs 217.

The NR base station 213 may configure one or more cells in the same manner as the base station 203. When the one NR base station 213 configures a plurality of cells, each of the cells is configured to communicate with the UE 202.

Each of the gNBs 217 may be divided into a Central Unit (may be hereinafter referred to as a CU) 218 and Distributed Units (may be hereinafter referred to as DUs) 219. The one CU 218 is configured in the gNB 217. The number of the DUs 219 configured in the gNB 217 is one or more. The CU 218 is connected to the DUs 219 via an F1 interface, and the control information and/or user data are communicated between the CU 218 and each of the DUs 219.

The 5G communication system may further include the Unified Data Management (UDM) function and the Policy Control Function (PCF) described in Non-Patent Document 22 (3GPP TS23.501 V16.1.0). The UDM and/or the PCF may be included in the 5GC unit in FIG. 3.

The 5G communication system may further include the Non-3GPP Interworking Function (N3IWF) described in Non-Patent Document 22 (3GPP TS23.501 V16.1.0). The N3IWF may terminate an Access Network (AN) in a non-3GPP access with the UE.

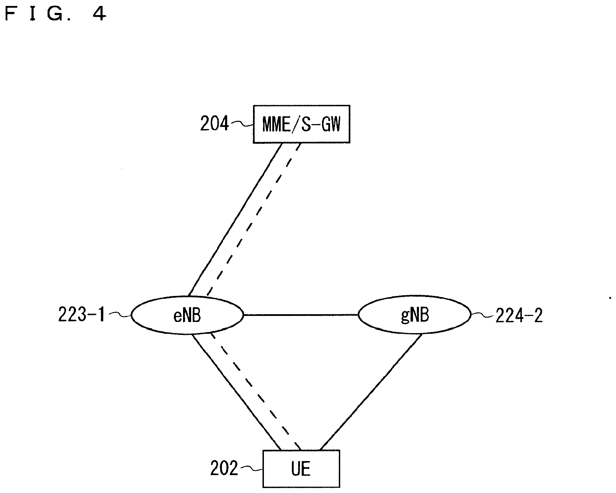

FIG. 4 illustrates a structure of the DC to be performed by an eNB and a gNB that are connected to the EPC. In FIG. 4, solid lines represent connection to the U-planes, and dashed lines represent connection to the C-planes. In FIG. 4, an eNB 223-1 becomes a master base station, and a gNB 224-2 becomes a secondary base station (this DC structure may be referred to as EN-DC). Although FIG. 4 illustrates an example U-Plane connection between the MME unit 204 and the gNB 224-2 through the eNB 223-1, the U-Plane connection may be established directly between the MME unit 204 and the gNB 224-2.

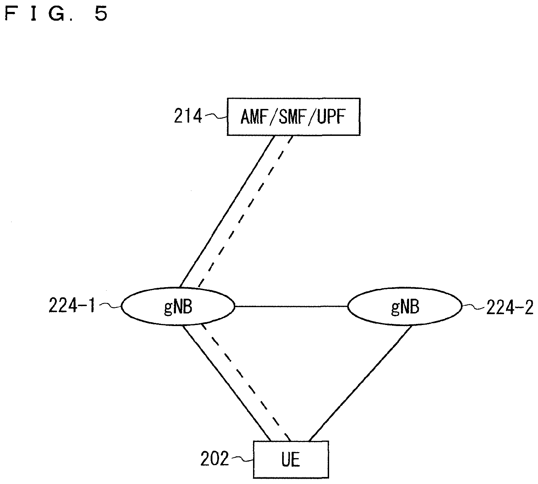

FIG. 5 illustrates a structure of the DC to be performed by gNBs that are connected to the NG core. In FIG. 5, solid lines represent connection to the U-planes, and dashed lines represent connection to the C-planes. In FIG. 5, a gNB 224-1 becomes a master base station, and the gNB 224-2 becomes a secondary base station (this DC structure may be referred to as NR-DC). Although FIG. 5 illustrates an example U-Plane connection between the 5GC unit 214 and the gNB 224-2 through the gNB 224-1, the U-Plane connection may be established directly between the 5GC unit 214 and the gNB 224-2.

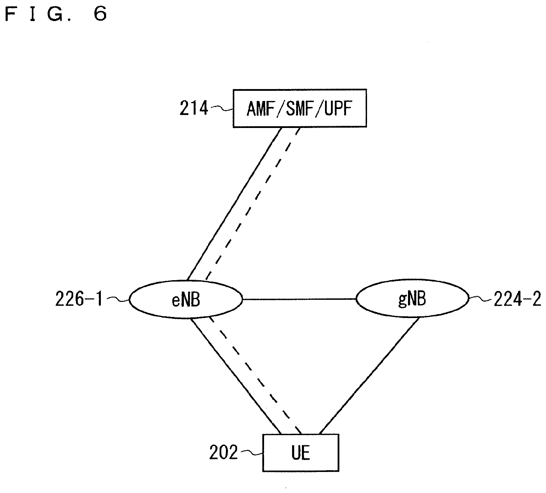

FIG. 6 illustrates a structure of the DC to be performed by an eNB and a gNB that are connected to the NG core. In FIG. 6, solid lines represent connection to the U-planes, and dashed lines represent connection to the C-planes. In FIG. 6, an eNB 226-1 becomes a master base station, and the gNB 224-2 becomes a secondary base station (this DC structure may be referred to as NG-EN-DC). Although FIG. 6 illustrates an example U-Plane connection between the 5GC unit 214 and the gNB 224-2 through the eNB 226-1, the U-Plane connection may be established directly between the 5GC unit 214 and the gNB 224-2.

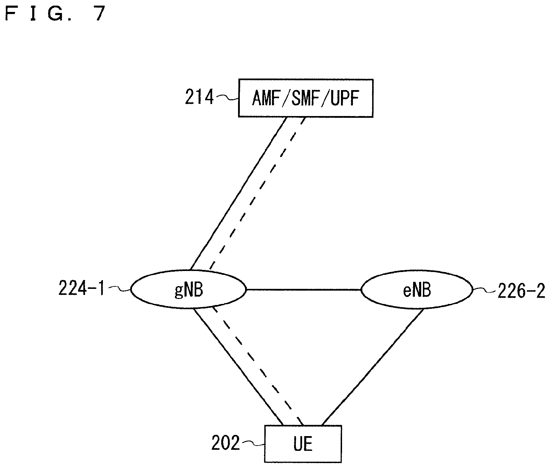

FIG. 7 illustrates another structure of the DC to be performed by an eNB and a gNB that are connected to the NG core. In FIG. 7, solid lines represent connection to the U-planes, and dashed lines represent connection to the C-planes. In FIG. 7, the gNB 224-1 becomes a master base station, and an eNB 226-2 becomes a secondary base station (this DC structure may be referred to as NE-DC). Although FIG. 7 illustrates an example U-Plane connection between the 5GC unit 214 and the eNB 226-2 through the gNB 224-1, the U-Plane connection may be established directly between the 5GC unit 214 and the eNB 226-2.

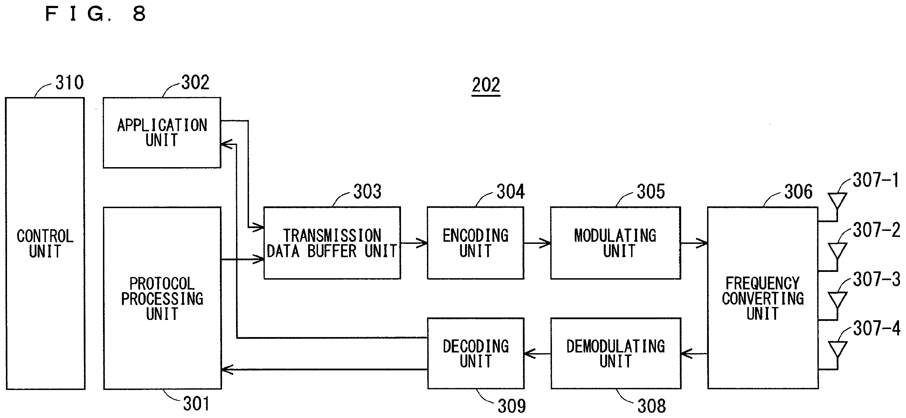

FIG. 8 is a block diagram showing the configuration of the user equipment 202 of FIG. 2. The transmission process of the user equipment 202 shown in FIG. 8 is described. First, a transmission data buffer unit 303 stores the control data from a protocol processing unit 301 and the user data from an application unit 302. The data stored in the transmission data buffer unit 303 is passed to an encoding unit 304, and is subjected to an encoding process such as error correction. There may exist the data output from the transmission data buffer unit 303 directly to a modulating unit 305 without the encoding process. The data encoded by the encoding unit 304 is modulated by the modulating unit 305. The modulating unit 305 may perform precoding in the MIMO. The modulated data is converted into a baseband signal, and the baseband signal is output to a frequency converting unit 306 and is then converted into a radio transmission frequency. After that, transmission signals are transmitted from antennas 307-1 to 307-4 to the base station 203. Although FIG. 8 exemplifies a case where the number of antennas is four, the number of antennas is not limited to four.

The user equipment 202 executes the reception process as follows. The radio signal from the base station 203 is received through each of the antennas 307-1 to 307-4. The received signal is converted from a radio reception frequency into a baseband signal by the frequency converting unit 306 and is then demodulated by a demodulating unit 308. The demodulating unit 308 may calculate a weight and perform a multiplication operation.

The demodulated data is passed to a decoding unit 309, and is subjected to a decoding process such as error correction. Among the pieces of decoded data, the control data is passed to the protocol processing unit 301, and the user data is passed to the application unit 302. A series of processes by the user equipment 202 is controlled by a control unit 310. This means that, though not shown in FIG. 8, the control unit 310 is connected to the individual units 301 to 309. In FIG. 8, the number of antennas for transmission of the user equipment 202 may be identical to or different from that for its reception.

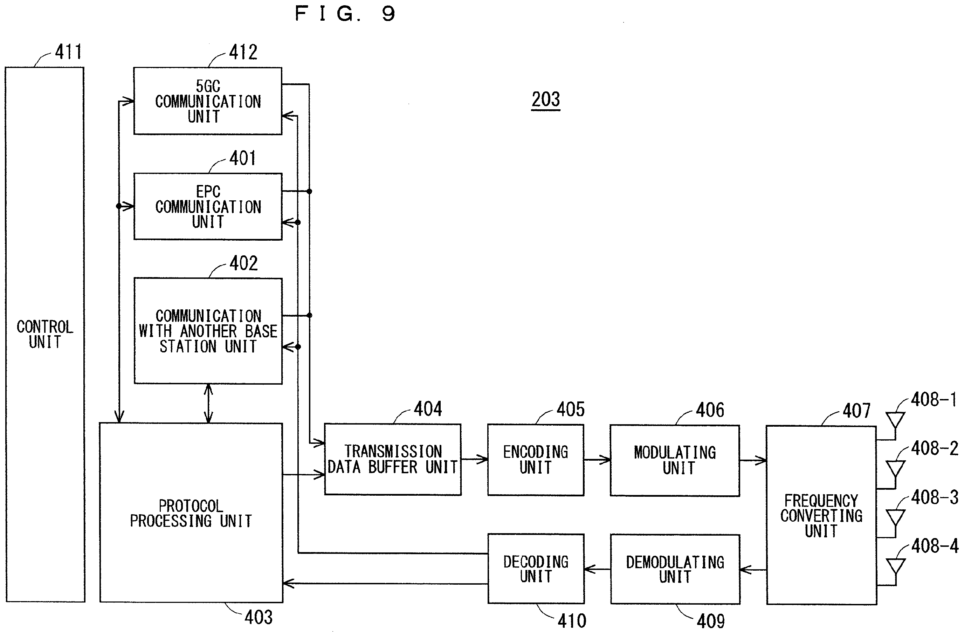

FIG. 9 is a block diagram showing the configuration of the base station 203 of FIG. 2. The transmission process of the base station 203 shown in FIG. 9 is described. An EPC communication unit 401 performs data transmission and reception between the base station 203 and the EPC (such as the MME unit 204). A 5GC communication unit 412 transmits and receives data between the base station 203 and the 5GC (e.g., the 5GC unit 214). A communication with another base station unit 402 performs data transmission and reception to and from another base station. The EPC communication unit 401, the 5GC communication unit 412, and the communication with another base station unit 402 each transmit and receive information to and from a protocol processing unit 403. The control data from the protocol processing unit 403, and the user data and the control data from the EPC communication unit 401, the 5GC communication unit 412, and the communication with another base station unit 402 are stored in a transmission data buffer unit 404.

The data stored in the transmission data buffer unit 404 is passed to an encoding unit 405, and then an encoding process such as error correction is performed for the data. There may exist the data output from the transmission data buffer unit 404 directly to a modulating unit 406 without the encoding process. The encoded data is modulated by the modulating unit 406. The modulating unit 406 may perform precoding in the MIMO. The modulated data is converted into a baseband signal, and the baseband signal is output to a frequency converting unit 407 and is then converted into a radio transmission frequency. After that, transmission signals are transmitted from antennas 408-1 to 408-4 to one or a plurality of user equipments 202. Although FIG. 9 exemplifies a case where the number of antennas is four, the number of antennas is not limited to four.

The reception process of the base station 203 is executed as follows. A radio signal from one or a plurality of user equipments 202 is received through the antenna 408. The received signal is converted from a radio reception frequency into a baseband signal by the frequency converting unit 407, and is then demodulated by a demodulating unit 409. The demodulated data is passed to a decoding unit 410 and then subject to a decoding process such as error correction. Among the pieces of decoded data, the control data is passed to the protocol processing unit 403, the 5GC communication unit 412, the EPC communication unit 401, or the communication with another base station unit 402, and the user data is passed to the 5GC communication unit 412, the EPC communication unit 401, and the communication with another base station unit 402. A series of processes by the base station 203 is controlled by a control unit 411. This means that, though not shown in FIG. 9, the control unit 411 is connected to the individual units 401 to 410. In FIG. 9, the number of antennas for transmission of the base station 203 may be identical to or different from that for its reception.

Although FIG. 9 is the block diagram illustrating the configuration of the base station 203, the base station 213 may have the same configuration. Furthermore, in FIGS. 8 and 9, the number of antennas of the user equipment 202 may be identical to or different from that of the base station 203.

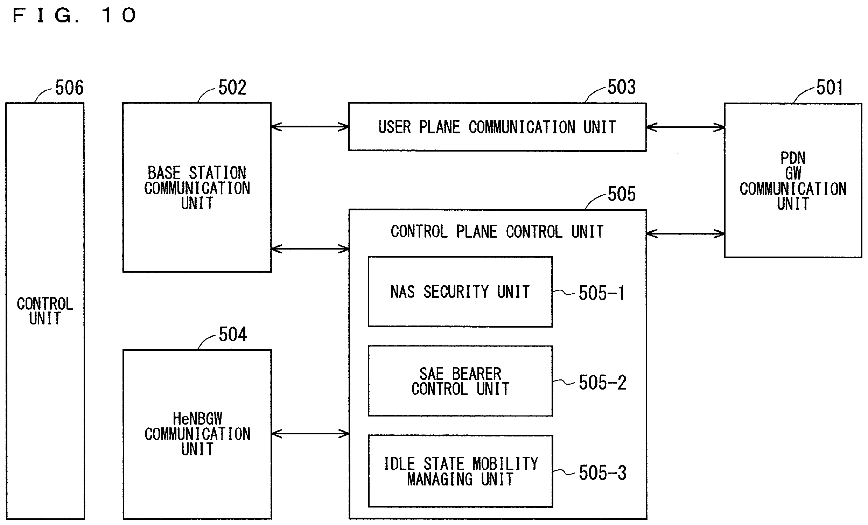

FIG. 10 is a block diagram showing the configuration of the MME. FIG. 10 shows the configuration of an MME 204a included in the MME unit 204 shown in FIG. 2 described above. A PDN GW communication unit 501 performs data transmission and reception between the MME 204a and the PDN GW. A base station communication unit 502 performs data transmission and reception between the MME 204a and the base station 203 by means of the S1 interface. In a case where the data received from the PDN GW is user data, the user data is passed from the PDN GW communication unit 501 to the base station communication unit 502 via a user plane communication unit 503 and is then transmitted to one or a plurality of base stations 203. In a case where the data received from the base station 203 is user data, the user data is passed from the base station communication unit 502 to the PDN GW communication unit 501 via the user plane communication unit 503 and is then transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

The control plane control unit 505 includes a NAS security unit 505-1, an SAE bearer control unit 505-2, and an idle state mobility managing unit 505-3, and performs an overall process for the control plane (hereinafter also referred to as a "C-plane"). The NAS security unit 505-1 provides, for example, security of a non-access stratum (NAS) message. The SAE bearer control unit 505-2 manages, for example, a system architecture evolution (SAE) bearer. The idle state mobility managing unit 505-3 performs, for example, mobility management of an idle state (LTE-IDLE state which is merely referred to as idle as well), generation and control of a paging signal in the idle state, addition, deletion, update, and search of a tracking area of one or a plurality of user equipments 202 being served thereby, and tracking area list management.

The MME 204a distributes a paging signal to one or a plurality of base stations 203. In addition, the MME 204a performs mobility control of an idle state. When the user equipment is in the idle state and an active state, the MME 204a manages a list of tracking areas. The MME 204a begins a paging protocol by transmitting a paging message to the cell belonging to a tracking area in which the UE is registered. The idle state mobility managing unit 505-3 may manage the CSG of the eNBs 207 to be connected to the MME 204a, CSG IDs, and a whitelist.

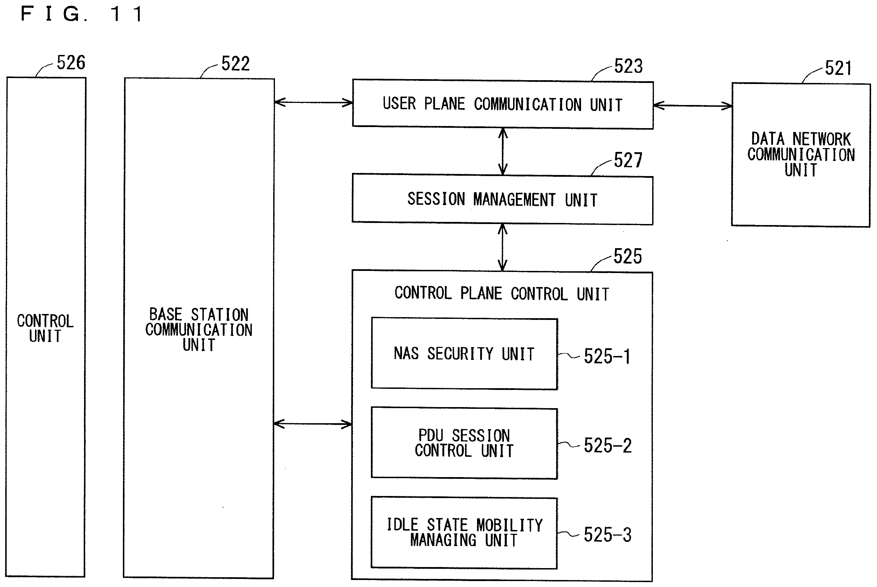

FIG. 11 is a block diagram illustrating a configuration of the 5GC. FIG. 11 illustrates a configuration of the 5GC unit 214 in FIG. 3. FIG. 11 illustrates a case where the 5GC unit 214 in FIG. 5 includes configurations of the AMF, the SMF, and the UPF. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213.

When the data received through the data network is user data, the data network communication unit 521 passes the user data to the base station communication unit 522 through a user plane communication unit 523 to transmit the user data to one or more base stations, specifically, the base station 203 and/or the base station 213. When the data received from the base station 203 and/or the base station 213 is user data, the base station communication unit 522 passes the user data to the data network communication unit 521 through the user plane communication unit 523 to transmit the user data to the data network.

When the data received from the data network is control data, the data network communication unit 521 passes the control data to a session management unit 527 through the user plane control unit 523. The session management unit 527 passes the control data to a control plane control unit 525. When the data received from the base station 203 and/or the base station 213 is control data, the base station communication unit 522 passes the control data to the control plane control unit 525. The control plane control unit 525 passes the control data to the session management unit 527.

The control plane control unit 525 includes, for example, a NAS security unit 525-1, a PDU session control unit 525-2, and an idle state mobility managing unit 525-3, and performs overall processes on the control planes (may be hereinafter referred to as C-Planes). The NAS security unit 525-1, for example, provides security for a Non-Access Stratum (NAS) message. The PDU session control unit 525-2, for example, manages a PDU session between the user equipment 202 and the 5GC unit 214. The idle state mobility managing unit 525-3, for example, manages mobility of an idle state (an RRC_IDLE state or simply referred to as idle), generates and controls paging signals in the idle state, and adds, deletes, updates, and searches for tracking areas of one or more user equipments 202 being served thereby, and manages a tracking area list.

The 5GC unit 214 distributes the paging signals to one or more base stations, specifically, the base station 203 and/or the base station 213. Furthermore, the 5GC unit 214 controls mobility of the idle state. The 5GC unit 214 manages the tracking area list when a user equipment is in an idle state, an inactive state, and an active state. The 5GC unit 214 starts a paging protocol by transmitting a paging message to a cell belonging to a tracking area in which the UE is registered.

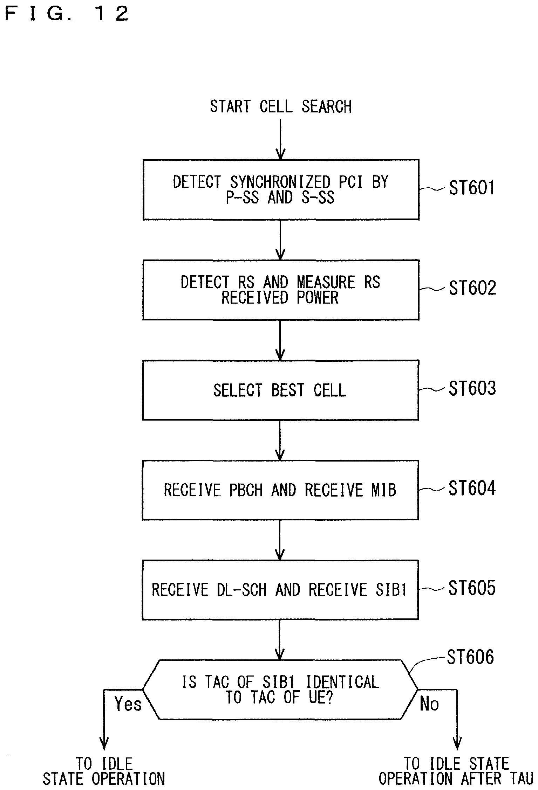

An example of a cell search method in a mobile communication system is described next. FIG. 12 is a flowchart showing an outline from a cell search to an idle state operation performed by a communication terminal (UE) in the LTE communication system. When starting a cell search, in Step ST601, the communication terminal synchronizes slot timing and frame timing by a primary synchronization signal (P-SS) and a secondary synchronization signal (S-SS) transmitted from a neighbor base station.

The P-SS and S-SS are collectively referred to as a synchronization signal (SS). Synchronization codes, which correspond one-to-one to PCIs assigned per cell, are assigned to the synchronization signals (SSs). The number of PCIs is currently studied in 504 ways. The 504 ways of PCIs are used for synchronization, and the PCIs of the synchronized cells are detected (specified).

In Step ST602, next, the user equipment detects a cell-specific reference signal (CRS) being a reference signal (RS) transmitted from the base station per cell and measures the reference signal received power (RSRP). The codes corresponding one-to-one to the PCIs are used for the reference signal RS. Separation from another cell is enabled by correlation using the code. The code for RS of the cell is calculated from the PCI specified in Step ST601, so that the RS can be detected and the RS received power can be measured.

In Step ST603, next, the user equipment selects the cell having the best RS received quality, for example, the cell having the highest RS received power, that is, the best cell, from one or more cells that have been detected up to Step ST602.

In Step ST604, next, the user equipment receives the PBCH of the best cell and obtains the BCCH that is the broadcast information. A master information block (MIB) containing the cell configuration information is mapped to the BCCH over the PBCH. Accordingly, the MIB is obtained by obtaining the BCCH through reception of the PBCH. Examples of the MIB information include the downlink (DL) system bandwidth (also referred to as a transmission bandwidth configuration (dl-bandwidth)), the number of transmission antennas, and a system frame number (SFN).

In Step ST605, next, the user equipment receives the DL-SCH of the cell based on the cell configuration information of the MIB, to thereby obtain a system information block (SIB) 1 of the broadcast information BCCH. The SIB1 contains the information about the access to the cell, information about cell selection, and scheduling information on another SIB (SIBk; k is an integer equal to or greater than two). In addition, the SIB1 contains a tracking area code (TAC).

In Step ST606, next, the communication terminal compares the TAC of the SIB1 received in Step ST605 with the TAC portion of a tracking area identity (TAI) in the tracking area list that has already been possessed by the communication terminal. The tracking area list is also referred to as a TAI list. TAI is the identification information for identifying tracking areas and is composed of a mobile country code (MCC), a mobile network code (MNC), and a tracking area code (TAC). MCC is a country code. MNC is a network code. TAC is the code number of a tracking area.

If the result of the comparison of Step ST606 shows that the TAC received in Step ST605 is identical to the TAC included in the tracking area list, the user equipment enters an idle state operation in the cell. If the comparison shows that the TAC received in Step ST605 is not included in the tracking area list, the communication terminal requires a core network (EPC) including MME to change a tracking area through the cell for performing tracking area update (TAU).

Although FIG. 12 exemplifies the operations from the cell search to the idle state in LTE, the best beam may be selected in NR in addition to the best cell in Step ST603. In NR, information on a beam, for example, an identifier of the beam may be obtained in Step ST604. Furthermore, scheduling information on the Remaining Minimum SI (RMSI) in NR may be obtained in Step ST604. The RMSI in NR may be obtained in Step ST605.

The device configuring a core network (hereinafter, also referred to as a "core-network-side device") updates the tracking area list based on an identification number (such as UE-ID) of a communication terminal transmitted from the communication terminal together with a TAU request signal. The core-network-side device transmits the updated tracking area list to the communication terminal. The communication terminal rewrites (updates) the TAC list of the communication terminal based on the received tracking area list. After that, the communication terminal enters the idle state operation in the cell.

Widespread use of smartphones and tablet terminal devices explosively increases traffic in cellular radio communications, causing a fear of insufficient radio resources all over the world. To increase spectral efficiency, thus, it is studied to downsize cells for further spatial separation.

In the conventional configuration of cells, the cell configured by an eNB has a relatively-wide-range coverage. Conventionally, cells are configured such that relatively-wide-range coverages of a plurality of cells configured by a plurality of macro eNBs cover a certain area.

When cells are downsized, the cell configured by an eNB has a narrow-range coverage compared with the coverage of a cell configured by a conventional eNB. Thus, in order to cover a certain area as in the conventional case, a larger number of downsized eNBs than the conventional eNBs are required.

In the description below, a "macro cell" refers to a cell having a relatively wide coverage, such as a cell configured by a conventional eNB, and a "macro eNB" refers to an eNB configuring a macro cell. A "small cell" refers to a cell having a relatively narrow coverage, such as a downsized cell, and a "small eNB" refers to an eNB configuring a small cell.

The macro eNB may be, for example, a "wide area base station" described in Non-Patent Document 7.

The small eNB may be, for example, a low power node, local area node, or hotspot. Alternatively, the small eNB may be a pico eNB configuring a pico cell, a femto eNB configuring a femto cell, HeNB, remote radio head (RRH), remote radio unit (RRU), remote radio equipment (RRE), or relay node (RN). Still alternatively, the small eNB may be a "local area base station" or "home base station" described in Non-Patent Document 7.

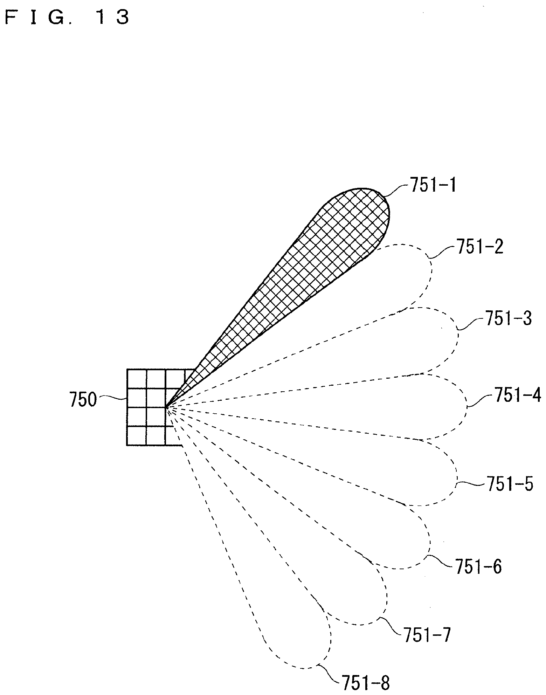

FIG. 13 illustrates an example structure of a cell in NR. In the cell in NR, a narrow beam is formed and transmitted in a changed direction. In the example of FIG. 13, a base station 750 performs transmission and reception with a user equipment via a beam 751-1 at a certain time. The base station 750 performs transmission and reception with the user equipment via a beam 751-2 at another time. Similarly, the base station 750 performs transmission and reception with the user equipment via one or more of beams 751-3 to 751-8. As such, the base station 750 configures a cell with a wide range.

Although FIG. 13 exemplifies that the number of beams to be used by the base station 750 is eight, the number of beams may be different from eight. Although FIG. 13 also exemplifies that the number of beams to be simultaneously used by the base station 750 is one, the number of such beams may be two or more.

In 3GPP, the Side Link (SL) is supported for the Device-to-Device (D2D) communication and the Vehicle-to-vehicle (V2V) communication (see Non-Patent Document 1). The SL is defined by a PC5 interface.

The physical channels (see Non-Patent Document 1) to be used for the SL are described. A physical sidelink broadcast channel (PSBCH) carries information related to systems and synchronization, and is transmitted from the UE.

A physical sidelink discovery channel (PSDCH) carries a sidelink discovery message from the UE.

A physical sidelink control channel (PSCCH) carries control information from the UE for sidelink communication and V2X sidelink communication.

A physical sidelink shared channel (PSSCH) carries data from the UE for sidelink communication and V2X sidelink communication.

The transport channels to be used for the SL (see Non-Patent Document 1) are described. A sidelink broadcast channel (SL-BCH) has a predetermined transport format, and is mapped to the PSBCH that is a physical channel.

A sidelink discovery channel (SL-DCH) has periodic broadcast transmission of a fixed size and a predetermined format. The SL-DCH supports both of the UE autonomous resource selection and the resource allocation scheduled by the eNB. The SL-DCH has a collision risk in the UE autonomous resource selection. The SL-DCH has no collision when the eNB allocates dedicated resources to the UE. Although the SL-DCH supports the HARQ combining, it does not support the HARQ feedback. The SL-DCH is mapped to the PSDCH that is a physical channel.

A sidelink shared channel (SL-SCH) supports broadcast transmission. The SL-SCH supports both of the UE autonomous resource selection and the resource allocation scheduled by the eNB. The SL-SCH has a collision risk in the UE autonomous resource selection. The SL-SCH has no collision when the eNB allocates dedicated resources to the UE. Although the SL-SCH supports the HARQ combining, it does not support the HARQ feedback. The SL-SCH supports dynamic link adaptation by varying the transmission power, modulation, and coding. The SL-SCH is mapped to the PSSCH that is a physical channel.

The logical channels to be used for the SL (see Non-Patent Document 1) are described. A Sidelink Broadcast Control Channel (SBCCH) is a sidelink channel for broadcasting sidelink system information from one UE to other UEs. The SBCCH is mapped to the SL-BCH that is a transport channel.

A Sidelink Traffic Channel (STCH) is a point-to-multipoint sidelink traffic channel for transmitting user information from one UE to other UEs. This STCH is used only by sidelink communication capable UEs and V2X sidelink communication capable UEs. Point-to-point communication between two sidelink communication capable UEs is realized with the STCH. The STCH is mapped to the SL-SCH that is a transport channel.

Supporting the V2X communication also in NR has been studied in 3GPP. Study of the V2X communication in NR has been pursued based on the LTE system and the LTE-A system. There are changes and additions from the LTE system and the LTE-A system in the following points.

In LTE, the SL communication relies only on broadcasts. Support of not only broadcasts but also unicasts and groupcasts in the SL communication in NR has been studied (see Non-Patent Document 27 (3GPP RP-182111)).

Support of, for example, the HARQ feedback (Ack/Nack) or the CSI report in the unicast communication or the groupcast communication has been studied.

Support of the PC5-S signaling has been studied to support not only broadcasts but also unicasts and groupcasts in the SL communication (see Non-Patent Document 21 (TS23.287)). For example, the PC5-S signaling is performed for establishing the SL or a link for performing the PC5 communication. The link is implemented by the V2X layer, and is also referred to as a Layer-2 link.

Supporting the RRC signaling in the SL communication has also been studied (see Non-Patent Document 21 (TS23.287)). The RRC signaling in the SL communication is also referred to as PC5 RRC signaling. Example proposals include notifying, between the UEs performing the PC5 communication, the UE capability or configuration of the AS layer for performing the V2X communication using the PC5 communication.

Support of the SL communication (hereinafter may be referred to as the PC5 communication) in the NPNs has been proposed in 3GPP. For example, building a NPN in a factory environment and performing the Device-to-Device communication using the PC5 communication in the NPN has been proposed (see Non-Patent Document 25 (3GPP S1-191338)). Cooperative operations of automated guided vehicles (AGVs) using the PC5 communication and/or the Uu communication between a base station and a device in a NPN of a factory have also been proposed (see Non-Patent Document 26 (3GPP SI-191580)). Thus, there is a demand for the PC5 communication and/or the Uu communication between a base station and a device in a NPN.

The NPNs include standalone NPNs (S-NPNs) and non-standalone NPNs (NS-NPNs) using a Closed Access Group (CAG). The S-NPNs are NPNs configured without support of any public network, and identified by PLMN IDs and Network IDs (NIDs). The NS-NPNs are NPNs configured with support of public networks, and the CAG is used for preventing connection of unauthorized UEs. The CAG is identified by a CAG ID in a range of PLMN IDs. Unless otherwise specified, the NPNs indicate both of the S-NPNs and the NS-NPNs without any distinction in this Description.

Under conventional technologies, provision of the V2X service in the NPNs is not assumed. Thus, the UE does not recognize in which NPN services using the D2D communication, the V2V communication, or the V2X communication (these services may be hereinafter referred to as V2X services) are supported. This causes problems. For example, the UE cannot recognize a NPN in which a desired V2X service can be implemented, and cannot implement the V2X service.

Conversely, when an arbitrary V2X service can be implemented in any NPNs, every UE can implement the V2X service in the NPNs. This causes a problem of failing to limit the UEs that can access the NPNs in the V2X service.

A method for solving such problems is disclosed.

The UE can implement an arbitrary V2X service in an accessible NPN. The UE can use, in the accessible NPN, the D2D communication, the V2V communication, or the V2X communication for the arbitrary V2X service. The UE can use, in the accessible NPN, the Uu communication or the PC5 communication for the arbitrary V2X service. When the UE performs, in the accessible NPN, the Uu communication or the PC5 communication for the arbitrary V2X service, the access is permitted or not rejected.

These enable the UE to identify the NPN in which the V2X service can be implemented.

However, the aforementioned methods cause another problem. The problem occurs, for example, when the UE implements a plurality of V2X services. With application of the aforementioned methods, all the V2X services can be implemented in the same NPN. For example, even when a plurality of NPNs are built in a factory, a problem of failing to vary V2X services supported by the respective NPNs occurs.

A method for solving such a problem is disclosed.

The V2X services are associated with the NPNs. The NPNs in which the V2X services are available should be configured. One NPN in which one or more V2X services are available may be configured. One or more NPNs in which one V2X service is available may be configured. Information associating information on the V2X service with information on the NPN in which the V2X service is available may be used.

Identifiers for identifying the V2X services may be used as V2X service information. For example, Provider Service Identifiers (PSIDs) and Intelligent Transport Systems Application Identifiers (ITS-AIDs) may be used. As information on the NPNs, identifiers of S-NPNs should be used when the NPNs are the S-NPNs, and identifiers of NS-NPNs should be used when the NPNs are the NS-NPNs. The PLMN IDs and/or NIDs may be used as the identifiers of the S-NPNs, and identifiers of CAGs may be used as the identifiers of the NS-NPNs. CAG-IDs and/or a CAG allowed list that is a list of the CAG-IDs may be used as the identifiers of the CAGs.

Information on the NPN in which the V2X service is available may be stored in a Core Network (CN). The information on the NPN in which the V2X service is available may be stored in the Unified Data Management (UDM) and the Unified Data Repository (UDR) for managing and recording, for example, the registered information on the UE, in the CN. The information on the NPN in which the V2X service is available may be stored in the Policy Control Function (PCF) for controlling policies, the Access and Mobility Management function (AMF) for managing access and mobility, or the Session Management function (SMF) for managing sessions.

A node with the information on the NPN in which the V2X service is available may notify the UE of the information. For example, when the PCF has the information on the NPN in which the V2X service is available, the PCF may notify the UE of the information. The PCF may notify the UE of the information through the AMF. The node with the information on the NPN in which the V2X service is available may notify a RAN node (e.g., the gNB) of the information. The node with the information on the NPN in which the V2X service is available may notify the RAN node of the information through the AMF

The AMF may obtain the information on the NPN in which the V2X service is available from the UDM, the UDR, or the PCF. The AMF may notify the UDM, the UDR, or the PCF of a message requesting the information on the NPN in which the V2X service is available. Upon receipt of the request, the UDM, the UDR, or the PCF may notify the AMF of the information. The SMF may obtain the information from the AMF. Consequently, each of the nodes can obtain the information on the NPN in which the V2X service is available, and use the information as necessary.

The information on the NPN in which the V2X service is available may be stored in the Operations, Administration, and Maintenance (OAM) having a maintenance management function. The AMF may obtain, from the OAM, the information on the NPN in which the V2X service is available. Consequently, the OAM can provide a network node with the information on the NPN in which the V2X service is available.

The information on the NPN in which the V2X service is available may be stored in the UE. The information on the NPN in which the V2X service is available may be stored in a Universal Subscriber Identity Module ((U) SIM) or a universal integrated circuit card (UICC). This enables the UE to use the information on the NPN in which the V2X service is available as necessary.

The V2X service information and the information on the NPN in which the V2X service is available may be included in V2X service relevant information (hereinafter may be referred to as V2X communication relevant information). The V2X service relevant information may include a V2X policy or a V2X parameter, the V2X service information, and information on the NPNs in which the V2X service information is available. The V2X policy or the V2X parameter may include the V2X service information, and a V2X parameter on the NPN in which the V2X service information is available. The V2X service relevant information may be a V2X policy or a V2X parameter including the V2X service information and the V2X parameter on the NPN in which the V2X service information is available.

The V2X policy or the V2X parameter may be, for example, a V2X policy or a V2X parameter in the Uu (also referred to as a Uu reference point). The V2X policy or the V2X parameter may be, for example, mapping information on a V2X service to be provided to the UE for the V2X communication in the Uu.

The PCF may notify the UE of the V2X service information and the information on the NPN in which the V2X service is available. For example, the PCF may include, in the V2X service relevant information, the V2X service information and the information on the NPN in which the V2X service is available and notify the UE of the information. The PCF may notify the UE of the information through the AMF and the RAN node. This enables the UE to recognize the V2X service information and the information on the NPN in which the V2X service is available.

The PCF may notify the RAN node (e.g., the gNB) of the V2X service information and the information on the NPN in which the V2X service is available. For example, the PCF may include, in the V2X service relevant information, the V2X service information and the information on the NPN in which the V2X service is available and notify the RAN node of the information. The V2X service relevant information may be, for example, a QoS parameter of the V2X service.

The PCF may notify the RAN node of the information through the AMF. The RAN node may obtain, from the OAM, the V2X service information and the information on the NPN in which the V2X service is available. This enables the RAN node to recognize the V2X service information and the information on the NPN in which the V2X service is available. The RAN node can recognize the V2X service that can be implemented in the NPN supported by a cell. The RAN node can schedule, for the UE, the Uu communication in the V2X service that can be implemented in the NPN supported by the cell, using the V2X service relevant information obtained from the PCF.

The UE may determine an accessible cell, using the V2X service information and the information on the NPN in which the V2X service is available. The UE may determine an accessible cell, using information on the NPNs broadcast by the cell. For example, the UE calculates a NPN available in the V2X service to be implemented, using the V2X service information and the information on the NPN in which the V2X service is available, and checks the calculated NPN with information on the accessible NPNs broadcast by the cell.

When the information on the accessible NPNs broadcast by the cell includes the calculated NPN, the UE determines that the NPN is accessible, and accesses the cell. When the information on the accessible NPNs broadcast by the cell does not include the calculated NPN, the UE determines that the NPN is inaccessible, and does not access the cell. When the NPN is inaccessible, the UE may reselect an accessible cell.

Information on the NPNs may include information for enabling a person to identify the NW. For example, information for enabling identification of the name of the PLMN to which the person subscribes may be used. When the UE receives the information for enabling identification of the NW, the UE may display the information to the person. For example, the information may be displayed on a display device of the UE to be mounted on a vehicle. The person may determine whether the NPN is accessible. As described above, the information for enabling a person to identify the NW is provided so that the person can recognize the information. This enables the person to determine whether the NPN is accessible. Thus, whether the NPN is accessible can be determined according to the preference of the person.

The AMF may notify the UE of not only the V2X service and information on the NPN in which the V2X service is available but also information on an adjacent RAN node that supports the V2X service and the NPN in which the V2X service is available. The RAN node may be the gNB or a cell. The AMF may notify the information on the adjacent RAN node through a RAN node on which the UE camps. The RAN node may notify the UE of the information on the adjacent RAN node that supports the V2X service and the NPN in which the V2X service is available.

The AMF may notify the UE of the V2X service supported by a RAN node adjacent to the RAN node on which the UE camps, and information on the NPN in which the V2X service is available. The AMF may notify the information on the adjacent RAN node through the RAN node on which the UE camps. The RAN node may notify the UE of the V2X service supported by the adjacent RAN node and information on the NPN in which the V2X service is available.

The RAN node may notify the adjacent RAN node of information on the NPN supported by its own node. The information on the NPN supported by the RAN node may be information on the NPN supported for each cell. The RAN node may notify information on the NPN supported not for each cell but for each carrier frequency. Alternatively, the RAN node may notify information on the NPN supported for each PLMN. The RAN node may notify the information through the Xn interface between base stations.

The RAN node may notify the adjacent RAN node of information on the V2X service supported by its own node. The information on the V2X service supported by the RAN node may be information on the V2X service supported for each cell. The RAN node may notify information on the V2X service supported not for each cell but for each carrier frequency. Alternatively, the RAN node may notify information on the V2X service supported for each PLMN. The RAN node may notify the information through the Xn interface between base stations.

The RAN node may notify the adjacent RAN node of the information on the V2X service supported by its own node and information on the NPN in which the V2X service is available. The RAN node may notify the information for each cell, for each carrier frequency, or for each PLMN. The RAN node may notify the information through the Xn interface between base stations.

The notification of these pieces of information from the RAN node to the adjacent RAN node can save the AMF from having to give the notification to the UE. Saving the processing in the core network (CN) can reduce the processing load in the CN, and reduce the amount of signaling between the CN and the RAN node.

This enables the UE to select and access a RAN node in which the V2X service is available. Furthermore, the UE determines that the RAN node that does not support the NPNs in which the V2X services are available is inaccessible, and does not access the RAN node. In NPNs other than the NPNs in which the V2X services are available, the UE cannot use the V2X service. In other words, the V2X services available in the NPNs can be limited.

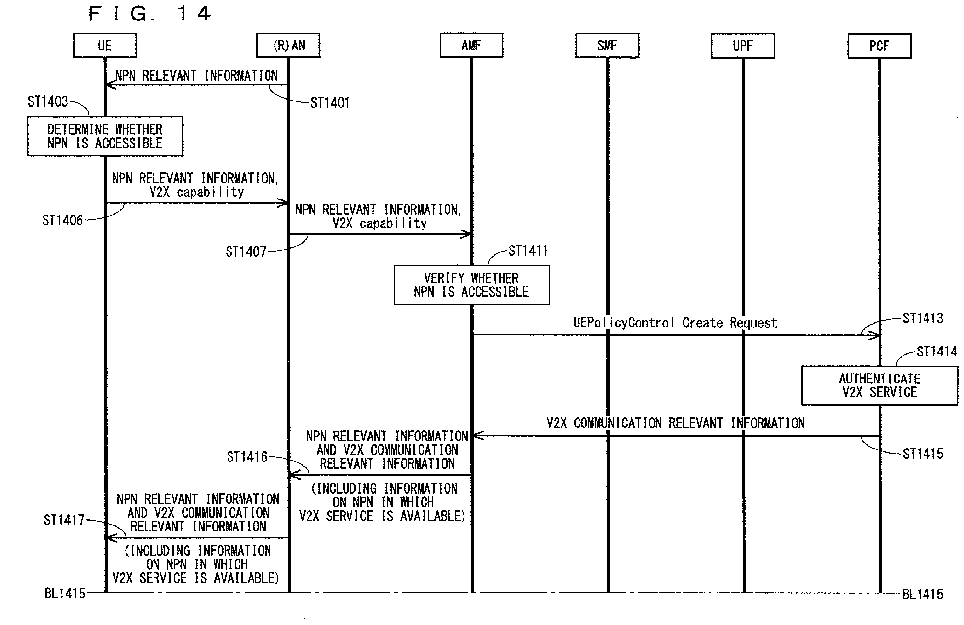

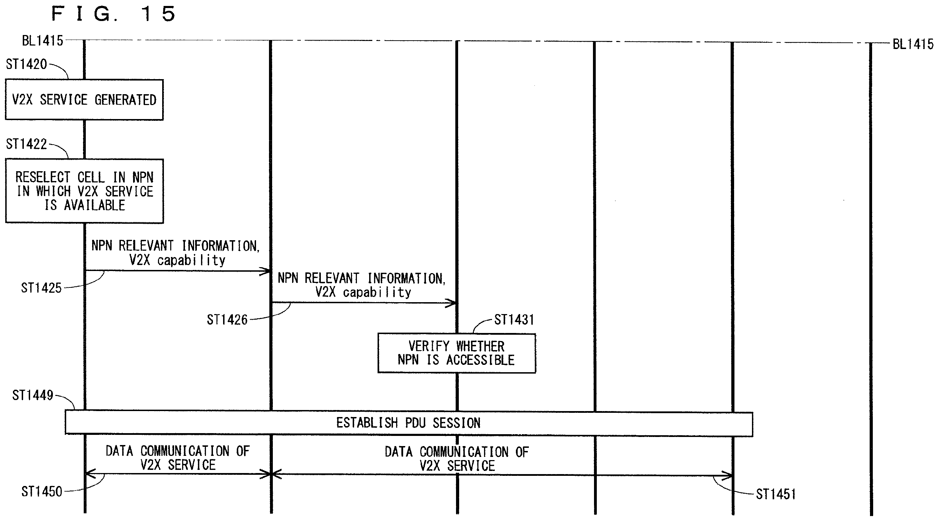

FIGS. 14 and 15 illustrate an example sequence for performing the V2X Uu communication through its own NPN cell according to the first embodiment. FIGS. 14 and 15 are connected across a location of a border BL1415. FIGS. 14 and 15 illustrate operations of the UE, a RAN node, the AMF, the SMF, the UPF, and the PCF. In Step ST1401, the RAN node broadcasts NPN relevant information to the UE. The UE receives the NPN relevant information, and determines in Step ST1403 whether the UE can access the RAN node, using the received NPN relevant information.

For example, when identifiers of the NPNs which are held by its own UE include an identifier of the NPN broadcast from the RAN node, the UE determines that the UE can access the RAN node. Otherwise, the UE determines that the RAN node is inaccessible. When determining that the RAN node is inaccessible, the UE may perform a process of reselecting another RAN node. When determining that the UE can access the RAN node, the UE notifies the RAN node of the NPN relevant information and the V2X capability in Step ST1406. In Step ST1407, the RAN node notifies the AMF of the NPN relevant information and the V2X capability that have been received from the UE.

The UE may notify the NPN relevant information and the V2X capability, for example, via the NAS signaling. For example, the UE may include the NPN relevant information and the V2X capability in a message for a registration process, and notify the information. For example, the UE may include the NPN relevant information and the V2X capability in a message for a service request process, and notify the information.

The UE may notify the RAN node of the NPN relevant information and the V2X capability, for example, via the RRC signaling. The UE may notify the NPN relevant information and the V2X capability when using the RRC signaling, for example, in a process of establishing the RRC connection.

The RAN node may notify the AMF of the NPN relevant information and the V2X capability, for example, via the NG signaling. The NG signaling may be the N2 signaling.

In Step ST1411, the AMF verifies whether the UE can access the NPN. The AMF determines whether the UE can access the NW, using the NPN relevant information notified from the UE. The AMF determines that the UE can access the NW, when the NPN in which the UE is registered includes the NPN relevant information notified from the UE. Otherwise, the AMF determines that the UE cannot access the NW. When determining that the UE cannot access the NW, the AMF may notify an access rejection message to the UE. The access rejection message may include cause information. The cause information may be information indicating access rejection due to inconsistency in NPN.

When determining that the UE can access the NW, the AMF recognizes that the V2X service is providable, using the V2X capability received from the UE. The UE may notify V2X service provision request information together with the V2X capability. The AMF can recognize that the UE specifically requests the AMF to provide the V2X service.

In Step ST1413, the AMF notifies the PCF of the V2X capability received from the UE. The AMF may give the notification using, for example, the Npcf interface or the UE policy control create request message.

The UE may notify the PCF of a V2X policy provision request. The UE may include the request in a UE Policy Container to be notified to the PCF, and notify the request. The UE may notify the PCF of the request through the AMF. The UE may give the notification to the AMF, for example, via the NAS signaling. The UE may give the notification, for example, using the UE policy provision request message. The AMF may give the notification to the PCF using, for example, the Npcf interface or the UE policy control update message.

Upon receipt of the information from the UE, the PCF authenticates the V2X service using data registered in the UE, in Step ST1414. Furthermore, the PCF determines to provide the UE with the V2X policy. Furthermore, the PCF determines to provide the UE with the V2X service and information on the NPN in which the V2X service is available. The V2X policy may include a V2X parameter. The V2X policy may include the V2X service and information on the NPN in which the V2X service is available.

In Step ST1415, the PCF notifies the AMF of the V2X communication relevant information. The V2X communication relevant information includes the V2X service and information on the NPN in which the V2X service is available. The V2X communication relevant information may include the V2X policy. The V2X policy may include the V2X service and information on the NPN in which the V2X service is available.

The V2X service and information on the NPN in which the V2X service is available may be associated with a V2X parameter. Examples of the V2X parameter include a QoS parameter for each V2X service. The PCF may notify the AMF of the V2X communication relevant information, using a process of providing the UE policy. The PCF may give the notification using, for example, the Namf interface or the Communication N1N2 MessageTransfer message.

In Step ST1416, the AMF notifies the RAN node of the V2X communication relevant information received from the PCF. Here, the AMF may notify the NPN relevant information. The NPN relevant information may include information on an updated list of the NPNs which the UE is permitted to access. The AMF may give the notification via the N2 signaling. This enables the RAN node to obtain V2X communication relevant information for the UE. The RAN node can schedule the V2X service using the Uu communication, through obtainment of the V2X communication relevant information for the UE.

The AMF may notify the UE of the V2X communication relevant information received from the PCF. For example, the AMF may notify the UE of the V2X communication relevant information through Steps ST1416 and ST1417. In Step ST1417, the RAN node notifies the UE of the NPN relevant information and the V2X communication relevant information. The AMF may give the notification to the UE via the NAS signaling. The RAN node may give the notification to the UE via the UE-dedicated RRC signaling. Consequently, the UE can obtain the V2X communication relevant information. Furthermore, the UE can obtain the NPN relevant information.

Although notification of the NPN relevant information and the V2X communication relevant information via the same signaling is described, the notification may be given via different signalings. The use of the dedicated signaling enables, for example, the AMF to notify the NPN relevant information without waiting for a process of providing the V2X policy between the AMF and the PCF. Earlier notification of the NPN relevant information enables, for example, earlier application of information on the updated NPNs.

In Step ST1420, a V2X service using the Uu communication is generated in the UE. When the UE does not camp on a cell in the NPN in which the V2X service is available, the UE selects or reselects a cell in the NPN in which the V2X service is available in Step ST1422. The UE should select/reselect the cell, using the V2X service and the information on the NPN in which the V2X service is available which have been obtained in Step ST1417. This enables the UE to implement a desired V2X service in a NPN which the UE is permitted to access.

In Step ST1425, the UE notifies the selected/reselected cell of the NPN relevant information and the V2X capability. In Step ST1426, the RAN node included in the cell notifies the AMF of the NPN relevant information and the V2X capability that have been obtained from the UE. This enables the AMF to obtain the NPN relevant information and the V2X capability from the UE.

In Step ST1431, the AMF verifies whether the UE can access the NPN. The AMF determines whether the UE can access the NW, using the NPN relevant information notified from the UE. When determining that the UE can access the NW, the AMF establishes a PDU session for the V2X service using the Uu communication in Step ST1449. The PDU session is established in Step ST1449. After establishment of the PDU session, data communication for the V2X service using the Uu communication is performed between the UE and the RAN node in Step ST1450 and between the RAN node and the UPF in Step ST1451.

The V2X capability to be notified from the UE to the AMF through the RAN node may include information indicating that the V2X policy has already been provided to the UE. Alternatively, when the V2X policy has already been provided to the UE, the UE need not notify the AMF of the V2X policy provision request. When the AMF is notified of the information, the AMF need not request the V2X communication relevant information from the PCF. This can eliminate a process of providing the V2X communication relevant information.

FIGS. 14 and 15 illustrate an example where the UE performs, in advance, processes of access authentication of the V2X communication and providing its policy through an accessible RAN node. In contrast, the UE may perform the processes after the V2X service is generated. The UE and the CN need not maintain an unnecessary registration state or an unnecessary connected state. The UE and the CN can avoid using resources required in such a state until the V2X service is generated. This can increase the use efficiency of the resources.

When the V2X policy is changed, the process of providing the PCF with the V2X policy may be performed again. For example, the V2X policy may be configured for each PLMN. When a cell in a NPN in which the V2X service is available is reselected, a cell in a different PLMN may be reselected. This should be applied when cells in different NPNs belong to different PLMNs. When the PLMNs are different, the V2X policies are also different. Since a cell in a different PLMN is reselected, the V2X policy is changed. When the V2X policy is changed, the process of providing the PCF with the V2X policy may be performed again.

The methods disclosed in the first embodiment enable implementation of the V2X service using the Uu communication in the NPNs. While the UE can access the NPNs in which the V2X services are available, the UE cannot access the NPNs in which the V2X services are unavailable. The V2X services available in the NPNs can be limited. The UE can perform the Uu communication of the V2X service that can be supported for each NPN. It is possible to inhibit the UE from performing the Uu communication of the V2X service that cannot be supported for each NPN.

### The first modification of the first embodiment

The first modification discloses methods for implementing, in the NPNs, the V2X services using the Device-to-Device communication (hereinafter may be referred to as the PC5 communication) such as the D2D communication and the V2V communication.

The UE sometimes implements a plurality of V2X services, not only in the V2X service using the Uu communication between the base station and a device but also in the V2X service using the PC5 communication between devices. This causes the problems as disclosed in the first embodiment. For example, even when a plurality of NPNs are built in a factory, a problem of failing to vary V2X services using the PC5 communication that are supported by the respective NPNs occur.

The method for associating the V2X services with the NPNs, which is disclosed in the first embodiment, may be applied to such a problem in the V2X service using the PC5 communication. The NPNs in which the V2X services are available should be configured. One NPN in which one or more V2X services are available may be configured. One or more NPNs in which one V2X service is available may be configured. Information associating information on the V2X service with information on the NPN in which the V2X service is available may be used.

The first embodiment discloses the V2X service using the Uu communication in the example sequence of FIGS. 14 and 15. In contrast, the first modification discloses the V2X service using the PC5 communication.

The base station in the NPN which the UE performing the PC5 communication can access schedules the PC5 communication for the UE. The PC5 communication methods include a scheduling method performed by the base station (hereinafter may be referred to as mode 1). The first modification should be applied to implementation of the V2X service using the PC5 communication in mode 1.

The methods disclosed in the first embodiment may be appropriately applied to a method for implementing the V2X service using the PC5 communication. Examples of the methods include: a method for configuring a NPN in which the V2X service is available; a method for including, in the V2X service relevant information, the V2X service information and the information on the NPN in which the V2X service is available; a method for notifying the V2X service information and the information on the NPN in which the V2X service is available from the PCF to the UE; a method for notifying the V2X service information and the information on the NPN in which the V2X service is available from the PCF to the RAN node (e.g., the gNB); and a method for the UE to determine an accessible cell, using the V2X service information and the information on the NPN in which the V2X service is available. The V2X service relevant information may be, for example, a V2X policy or a V2X parameter in the PC5 (also referred to as a PC5 reference point).

The V2X service relevant information may be separated into information on the Uu communication and information on the PC5 communication. For example, information on the NPN in which the V2X service using the Uu communication is available may be separated from information on the NPN in which the V2X service using the PC5 communication is available, in the method for configuring the NPN in which the V2X service is available. The information on the NPN in which the V2X service using the Uu communication is available may be used in the first embodiment. The information on the NPN in which the V2X service using the PC5 communication is available may be used in the first modification This can reduce the amount of information on the NPNs in which the use V2X services are available.

The RAN node may verify whether the NPN is accessible. The RAN node verifies whether the UE can access the NPN. The RAN node may verify whether the NPN is accessible, when the V2X service using the PC5 communication is implemented. In response to the access of the UE to the V2X service, the RAN node verifies whether the NPN of its own cell is accessible. When the NPN is accessible, the RAN node permits the access of the UE, and schedules the PC5 communication. When the NPN is inaccessible, the RAN node does not permit the access of the UE. The RAN node may notify the UE of rejection. The RAN node may include cause information in the rejection and notify the UE of the information.

The RAN node that verifies whether the UE can access the NPN may be a RAN node served by the AMF to which the UE is connected. The RAN node may recognize, in advance, association between the V2X service and the NPN in which the V2X service is available. The RAN node may verify whether the NPN is accessible only when the RAN node recognizes, in advance, the association between the V2X service and the NPN in which the V2X service is available. In response to the access of the UE to the V2X service, the RAN node may determine whether to verify whether the UE can access the NPN, depending on whether the RAN node recognizes the association between the V2X service and the NPN. When recognizing the association, the RAN node verifies whether the NPN is accessible. When the RAN node does not recognize the association, the RAN node does not verify whether the NPN is accessible, but notifies the situation to the AMF The AMF verifies whether the UE can access the NPN.

For example, when the UE implements the V2X service using the PC5 communication, the UE sometimes need not communicate with the CN. Examples of the case include a case where the UE and/or the RAN node have already finished the V2X authentication and have been provided with the V2X policy. In such a case, the AMF need not verify whether the NPN is accessible. Verification on whether the NPN is accessible by the RAN node can reduce the signaling between the CN and the RAN node. This can implement the V2X service with lower latency than that with verification on whether the NPN is accessible by the AMF.

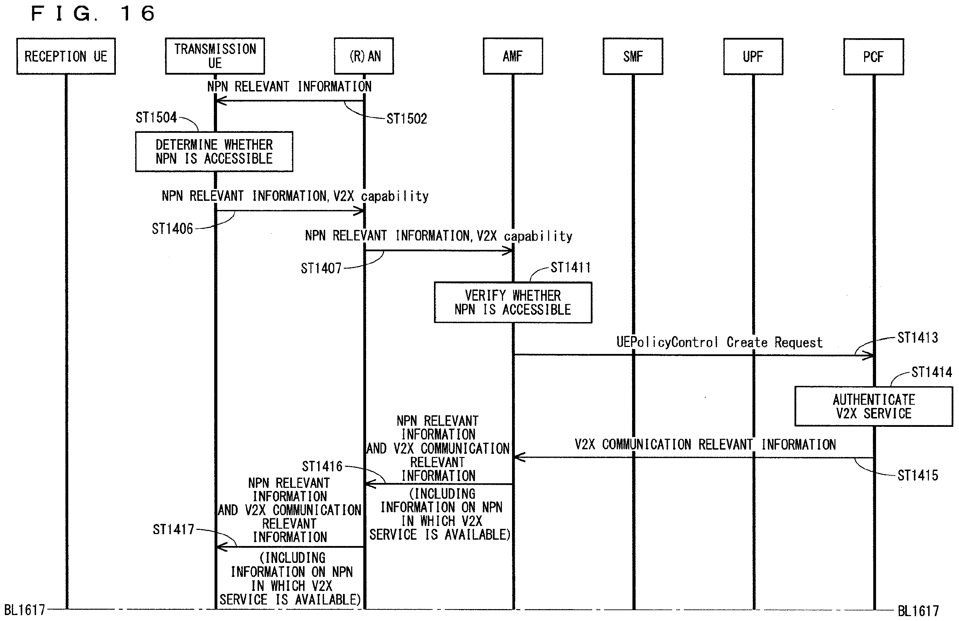

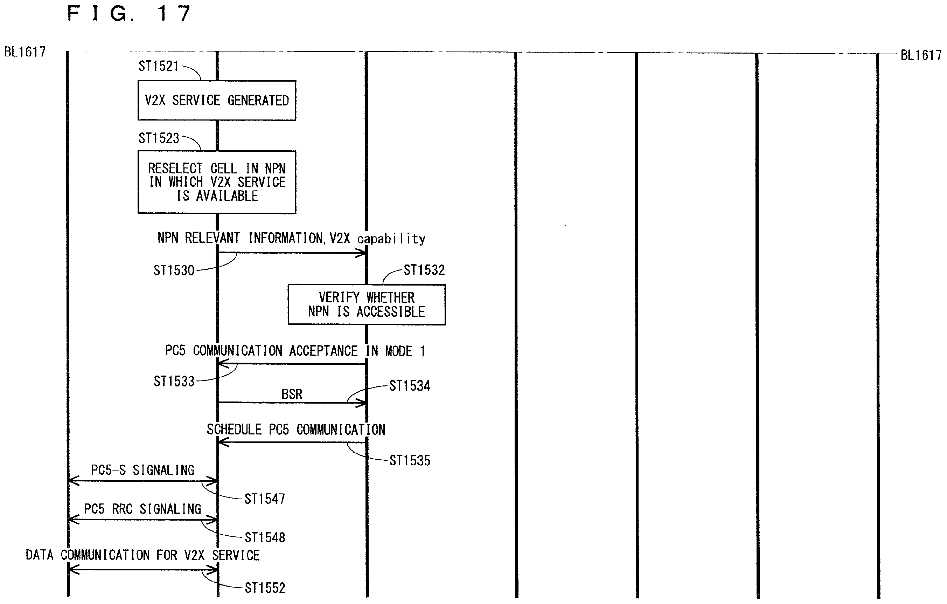

FIGS. 16 and 17 illustrate an example sequence for performing the V2X PC5 communication through its own NPN cell according to the first modification of the first embodiment. FIGS. 16 and 17 are connected across a location of a border BL1617. FIGS. 16 and 17 illustrate an example where the RAN node (base station) schedules the PC5 communication for the UEs. FIGS. 16 and 17 illustrate operations of a transmission UE, a reception UE, the RAN node, the AMF, the SMF, the UPF, and the PCF. The transmission UE and the reception UE are UEs performing the PC5 communication. The transmission UE and the reception UE perform the PC5 communication. The transmission UE transmits data for the V2X service. The reception UE receives the data for the V2X service that has been transmitted from the transmission UE. In FIGS. 16 and 17, the same step numbers are applied to the steps common to those in FIGS. 14 and 15, and the common description thereof is omitted.

In Step ST1502, the RAN node broadcasts the NPN relevant information to the UEs. The transmission UE receives the NPN relevant information, and determines in Step ST1504 whether the transmission UE can access the RAN node, using the received NPN relevant information. The reception UE may receive the NPN relevant information broadcast from the RAN node. The method disclosed in FIGS. 14 and 15 should be applied to determination by the transmission UE on whether the transmission UE can access the RAN node. When determining that the transmission UE can access the RAN node, the transmission UE notifies the RAN node of the NPN relevant information and the V2X capability in Step ST1406. In the example of FIGS. 16 and 17, the capability of the PC5 communication may be used as the V2X capability. The V2X capability may include information indicating that the PC5 communication is possible.

The V2X capability in FIGS. 14 and 15 according to the first embodiment may be replaced with the capability of the Uu communication. This enables a NW node to recognize whether the UE has the capability of the Uu communication or the PC5 communication as the V2X communication. Furthermore, notification of these capabilities from the UE to the NW side enables the NW node to recognize whether the UE requests authentication of the Uu communication and provision of its policy or parameter, or authentication of the PC5 communication and provision of its policy or parameter.

When determining that the transmission UE can access the RAN node, the AMF recognizes in Step ST1411 that the V2X service is providable, using the V2X capability received from the transmission UE. When being notified of the capability of the PC5 communication, the AMF can specifically recognize that the V2X service using the PC5 communication is providable. The transmission UE may notify the V2X service provision request information together with the V2X capability.

The V2X service provision request information using the Uu communication and the V2X service provision request information using the PC5 communication may be provided. Notification of the V2X service provision request information using the PC5 communication from the transmission UE enables the AMF to recognize that the transmission UE specifically requests provision of the V2X service using the PC5 communication.

In Step ST1413, the AMF notifies the PCF of the V2X capability received from the transmission UE. The AMF may give the notification using, for example, the Npcf interface or the UE policy control create request message.

The transmission UE may notify the PCF of a V2X policy provision request. The transmission UE may include the request in a UE Policy Container to be notified to the PCF, and notify the request. The transmission UE may notify the PCF of the request through the AMF. The transmission UE may give the notification to the AMF, for example, via the NAS signaling. The transmission UE may give the notification, for example, using the transmission UE policy provision request message. The AMF may give the notification to the PCF using, for example, the Npcf interface or the UE policy control update message.

Upon receipt of the information from the transmission UE, the PCF authenticates the V2X service using data registered in the transmission UE, in Step ST1414. The PCF may authenticate the V2X service using the PC5 communication. The PCF also determines to provide the V2X policy to the transmission UE. The PCF may determine to provide the V2X policy using the PC5 communication. Furthermore, the PCF determines to provide the transmission UE with the V2X service and information on the NPN in which the V2X service is available. The PCF may determine to provide the V2X service using the PC5 communication and information on the NPN in which the V2X service is available. Not only the V2X policy but also the V2X policy or the V2X parameter may be included. The V2X policy or the V2X parameter may include the V2X service and information on the NPN in which the V2X service is available.

In Step ST1415, the PCF notifies the AMF of the V2X communication relevant information. The V2X service to be notified as the V2X communication relevant information may be the V2X service using the PC5 communication.

In Step ST1521, a V2X service using the PC5 communication is generated in the transmission UE. When the transmission UE does not camp on a cell in the NPN in which the V2X service is available, the UE selects or reselects the cell in the NPN in which the V2X service is available in Step ST1523. The transmission UE should select/reselect the cell, using the V2X service and the information on the NPN in which the V2X service is available which have been obtained in Step ST1417. This enables the transmission UE to implement a desired V2X service in a NPN which the UE is permitted to access.

In Step ST1530, the transmission UE notifies the selected/reselected cell of the NPN relevant information and the V2X capability. FIGS. 16 and 17 illustrate an example where the RAN node included in the cell verifies whether the transmission UE can access the NPN in Step ST1532. The RAN node determines whether the transmission UE can access its own RAN node, using the NPN relevant information notified from the transmission UE. When determining that the transmission UE can access the RAN node, the RAN node may notify the transmission UE of a V2X service grant message using the PC5 communication in Step ST1533.

Verification on whether the NPN is accessible by the RAN node saves the UE with information on the NPN in which the V2X service using the PC5 communication is available from having to access the core network side when the UE performs the PC5 communication. The time until start of the PC5 communication can be reduced.

When the RAN node reselected by the transmission UE in Step ST1523 is different from the RAN node that has received the V2X communication relevant information in Step ST1416, the RAN node may request the AMF or the PCF to provide the V2X communication relevant information. The RAN node should perform the processes in Steps ST1407 to ST1416. This enables the RAN node to obtain the V2X communication relevant information for the transmission UE. Here, the AMF may verify whether the UE can access the NPN.

The transmission UE notifies the RAN node of the BSR in Step ST1534. The transmission UE may notify the Scheduling Request (SR). Upon receipt of the BSR, the RAN node schedules the PC5 communication for the transmission UE in Step ST1535. The RAN node may schedule the PC5 communication, using the V2X communication relevant information received in Step ST1416.

The transmission UE performs the PC5-S signaling with the reception UE in Step ST1547, using the scheduling information for the PC5 communication received from the RAN node in Step ST1535 to establish a PC5 communication link. In Step ST1548, the transmission UE performs the RRC signaling with the reception UE to mutually communicate, for example, the configuration information on the AS layer and the UE capability information. This enables both of the transmission UE and the reception UE to configure the AS layers for the PC5 communication. The order of the PC5-S signaling and the RRC signaling may be appropriately reversed. For example, the RRC signaling necessary for performing the PC5-S signaling may be performed before the PC5-S signaling. For example, the PC5 communication link may be established by performing the RRC signaling and then the PC5-S signaling.

In Step ST1552, the transmission UE and the reception UE perform data communication for the V2X service using the PC5 communication. In the PC5 communication, the transmission UE may transmit the BSR to the RAN node a plurality of times. The transmission UE may appropriately transmit the BSRs, from the PC5-S signaling to data transmission for the V2X service or until releasing the PC5 link. Upon receipt of the BSRs, the RAN node schedules the PC5 communication, and notifies the transmission UE of the scheduling information for the PC5 communication. This enables the RAN node belonging to the NPN in which the V2X service using the PC5 communication is providable to schedule the PC5 communication for the UE.

The methods disclosed in the first modification of the first embodiment enable implementation of the V2X services using the PC5 communication in the NPNs. While the UE can access the NPNs in which the V2X services are available, the UE cannot access the NPNs in which the V2X services are unavailable. The V2X services available in the NPNs can be limited. The UE can perform the PC5 communication of the V2X service that can be supported for each NPN. It is possible to inhibit the UE from performing the PC5 communication of the V2X service that cannot be supported for each NPN.

### The second modification of the first embodiment

The second modification discloses other methods for solving the problem disclosed in the first modification of the first embodiment.

When the UE performing the PC5 communication is located within a coverage of a base station in an accessible NPN, PC5 communication between peer UEs is scheduled. The PC5 communication methods include a scheduling method performed by the transmission UE performing the PC5 communication (hereinafter may be referred to as mode 2). The second modification should be applied to the V2X service using the PC5 communication in mode 2.

For example, the base station in a NPN which the UE can access broadcasts resources to be used for scheduling the PC5 communication (hereinafter may be referred to as PC5 communication resources). The base station may notify a resource pool (RP) as the PC5 communication resources. The PC5 communication resources may be preconfigured in the UE. When the resources for scheduling are preconfigured in the UE, the PCF may update the resources. The PCF may provide the updated resources to the UE, using a process of providing the V2X service policy (V2X policy).

The RAN node may broadcast, to the UE, information associating the PC5 communication resources with the NPN in which the resources are available. The RAN node may include the information in system information, and broadcast the information. Alternatively, the RAN node may include the information in the system information, and broadcast the information via dedicated signaling. The RAN node may notify the information via a common channel.

The RAN node may include information on the PC5 communication resources in information on the NPN to be broadcast to the UE, and broadcast the information. The RAN node may broadcast information associating the NPN with the PC5 communication resources. Through obtaining the information, the UE requiring the NPN access control can recognize the PC5 communication resources necessary for implementing the V2X service. Alternatively, the RAN node may include information on the NPN in which the resources are used in the information on the PC5 communication resources to be broadcast to the UE, and broadcast the information. Through obtaining the information on the PC5 communication resources, the UE that implements the V2X service using the PC5 communication can recognize the NPN in which the V2X service can be implemented.

The UE should obtain, in advance, information on the V2X service using the PC5 communication, and information on the NPN in which the V2X service is available. The UEs that implement the V2X services using the PC5 communication including the transmission UE and the reception UE may obtain, in advance, the V2X service information and the information on the NPNs in which the V2X services are available. The methods disclosed in the first embodiment or the first modification of the first embodiment may be appropriately applied. For example, the method for the PCF to notify the UE of the V2X service information and the information on the NPN in which the V2X service is available may be applied.

The UE may store, in advance, the information on the V2X service using the PC5 communication, and the information on the NPN in which the V2X service is available. The methods disclosed in the first embodiment may be appropriately applied.

The transmission UE that implements the V2X service using the PC5 communication may verify whether the V2X service using the PC5 communication can be implemented in the NPN, using the information on the NPN associated with the V2X service using the PC5 communication, and the information on the NPN broadcast from the RAN node both of which have been obtained in advance. The transmission UE determines that the PC5 communication is possible when the pieces of information on the NPN are identical, and starts the PC5 communication with the PC5 communication resources associated with the NPN. The transmission UE determines that the PC5 communication is impossible when the pieces of information on the NPN are different, and does not start the PC5 communication. The transmission UE may request the PC5 communication resources from the RAN node again.

Consequently, the transmission UE can verify whether the NPN is accessible, when implementing the V2X service using the PC5 communication. Verification on whether the NPN is accessible can disable the UE that cannot access the NPN in which the V2X service using the PC5 communication is available, from implementing the V2X service. The NPN access limit can be imposed on the V2X service using the PC5 communication.

The reception UE calculates the PC5 communication resources to be used for the V2X services, using the information obtained in advance on the NPNs associated with the V2X services using the PC5 communication, and the information on the NPNs and PC5 communication resource information corresponding to the NPNs which have been broadcast from the RAN node. The reception UE performs the reception process for the PC5 communication, with the calculated PC5 communication resources. Consequently, the reception UE can receive the PC5 communication from the transmission UE.

The RP may be configured for each V2X service. Alternatively, the RP may be divided and configured for each V2X service. One RP may be divided into a plurality of sub-RPs, and configured. The RP to be used in a NPN may be configured for each NPN. Alternatively, the RP may be divided and configured for each NPN. One RP may be divided into a plurality of sub-RPs, and configured. One RP or one sub-RP may be used in one or more NPNs. The NPNs and the RPs to be used in the NPNs may be associated with each other. The PC5 communication in the same NPN may be performed using the RP associated with the NPN.

These may be combined, so that a V2X service, a NPN in which the V2X service is available, and an RP to be used in the NPN can be configured. Although the RPs are disclosed, the RPs are mere examples of the PC5 communication resources. The PC5 communication resources may be frequencies to be used for the PC5 communication. The PC5 communication resources are not limited to the frequencies but may be bands.

The CN may provide the UE with such configuration information. For example, the PCF notifies the UE of the configuration information. The PCF may include the configuration information in the V2X communication relevant information, and notify the configuration information. For example, the PCF may notify the configuration information using the process of providing the V2X policy. The methods disclosed in the first modification of the first embodiment may be applied to these methods. The configuration information may be configured in a CN node. The methods disclosed in the first embodiment may be appropriately applied to a method for configuring the information in the CN node.

This enables configuration of the PC5 communication resources to be used for each V2X service or for each NPN. Since the resources to be used for the PC5 communication can be separated for each V2X service or for each NPN, the V2X service using the PC5 communication can be implemented without any interference from other V2X services or other NPNs such as a collision of communication in the other V2X services or the other NPNs.

The transmission UE may notify the reception UE of the information on the V2X service using the PC5 communication and the information on the NPN in which the V2X service is available. Alternatively, the transmission UE may notify any one of these pieces of information. The information on the NPN may be an identifier for identifying the NPN. This enables the reception UE to receive these pieces of information from the transmission UE, even though the reception UE does not receive the information from the RAN node. The reception UE can implement the V2X service using the PC5 communication with the transmission UE.

The reception UE may compare the information obtained in advance on the NPN associated with the V2X service, with the information on the V2X service using the PC5 communication and the information on the NPN in which the V2X service is available both of which have been notified from the transmission UE, and verify whether the V2X service using the PC5 communication can be implemented with the transmission UE in the NPN. The reception UE determines that the PC5 communication is possible when the pieces of information on the NPN are identical. Furthermore, the reception UE receives the V2X service from the transmission UE, using the PC5 communication resources associated with the NPN. The reception UE determines that the PC5 communication is impossible when the pieces of information on the NPN are different, and does not receive the V2X service.

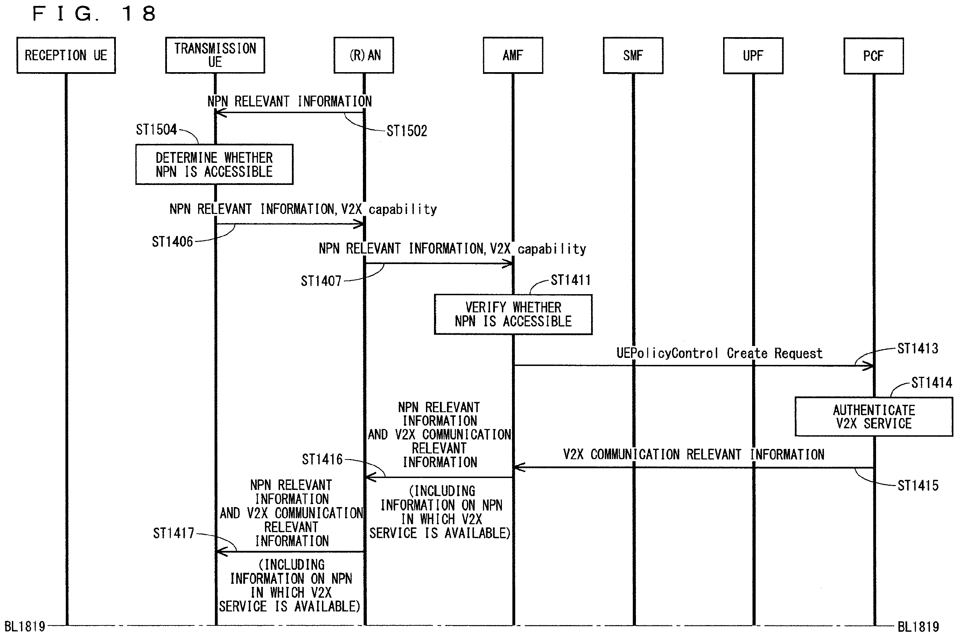

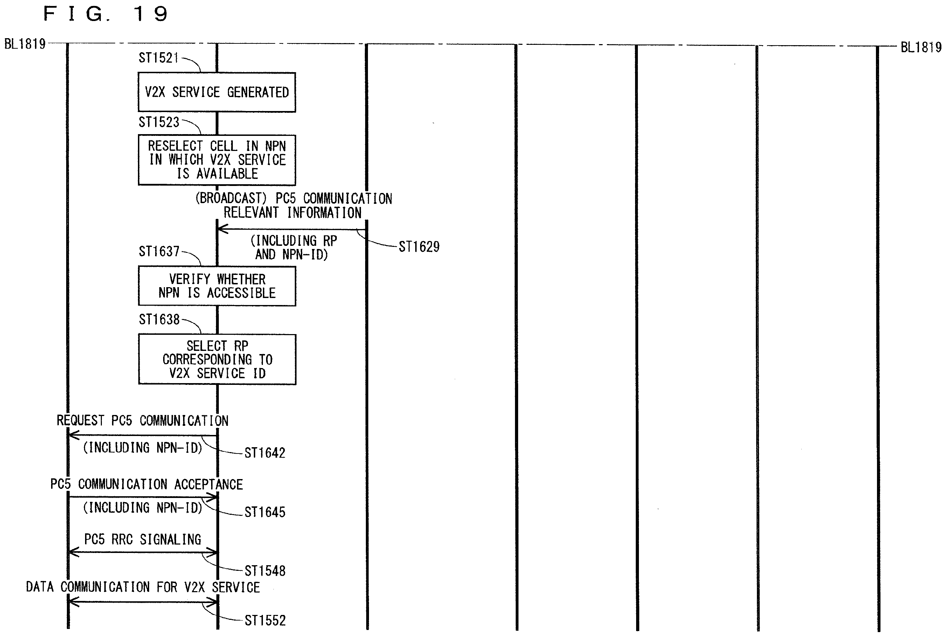

FIGS. 18 and 19 illustrate an example sequence for performing the V2X PC5 communication through its own NPN cell according to the second modification of the first embodiment. FIGS. 18 and 19 are connected across a location of a border BL1819. FIGS. 18 and 19 illustrate an example where one of the UEs schedules the PC5 communication. In FIGS. 18 and 19, the same step numbers are applied to the steps common to those in FIGS. 16 and 17, and the common description thereof is omitted.

In Step ST1521, a V2X service using the PC5 communication is generated in the transmission UE. In Step ST1523, the transmission UE reselects a cell in a NPN in which the V2X service is available. In Step ST1629, the transmission UE receives the PC5 communication relevant information to be broadcast from the reselected cell. The PC5 communication relevant information may include information on a resource pool (RP) for the PC5 communication. The PC5 communication relevant information may include information on the NPN, for example, an identifier. The RP may be associated with the information on the NPN.

This enables the transmission UE to obtain the resources for scheduling the PC5 communication. The transmission UE can obtain information on the NPN in which the V2X service using the PC5 communication is available.

In the example of FIGS. 18 and 19, the transmission UE verifies whether the NPN is accessible in Step ST1637. The transmission UE can recognize the RP corresponding to the NPN in which the generated V2X service using the PC5 communication is available, using the PC5 communication relevant information broadcast from the RAN node and the V2X communication relevant information notified in Step ST1417. In Step ST1638, the transmission UE selects an RP corresponding to the NPN in which the V2X service is available. The transmission UE schedules the PC5 communication, using the selected RP.

In the absence of the RP corresponding to the NPN in which the generated V2X service using the PC5 communication is available, the transmission UE determines that the PC5 communication is impossible, and does not perform the PC5 communication. In such a case, for example, the transmission UE may request the AMF or the PCF to provide the V2X communication relevant information again. For example, the transmission UE may perform the processes in Steps ST1406 to ST1417. The transmission UE may perform the processes through the cell reselected in Step ST1523. The transmission UE reselects a cell in the NPN in which the V2X service is available, and verifies whether the NPN is accessible, using the PC5 communication relevant information broadcast from the cell.

Verification on whether the NPN is accessible by the transmission UE saves the UE with information on the NPN in which the V2X service using the PC5 communication is available from having to access the network side when the UE performs the PC5 communication. The time until start of the PC5 communication can be further reduced.

In Step ST1642, the transmission UE requests the reception UE to perform the PC5 communication. The transmission UE may make the request via the PC5-S signaling. The PC5 communication request may include the NPN relevant information. This enables the reception UE to recognize the NPN relevant information. In Step ST1645, the reception UE may transmit PC5 communication acceptance to the transmission UE. The reception UE may include the NPN relevant information in the PC5 communication acceptance. This enables the transmission UE to identify the NPN of the V2X service using the PC5 communication to be performed with the reception UE.

The reception UE may perform the processes from Steps ST1502 to ST1417 similarly to the transmission UE. The reception UE may verify whether the NPN is accessible. For example, the reception UE may perform the process in Step ST1629. This enables the reception UE to check whether the NPN corresponds to the received V2X service, using the NPN relevant information notified from the transmission UE in Step ST1642. When the NPN corresponds to the received V2X service, the reception UE may notify the PC5 communication acceptance in Step ST1645.

Otherwise, the reception UE may notify the PC5 communication rejection. Alternatively, the reception UE need not transmit anything. This enables implementation of a desired V2X service only in a NPN which the desired V2X service using the PC5 communication is available. Furthermore, the UE different from the UE that determines whether the NPN is accessible can verify whether the NPN is accessible.

When the RAN node reselected by the transmission UE in Step ST1523 is different from the RAN node that has received the V2X communication relevant information in Step ST1416, the RAN node may request the AMF or the PCF to provide the V2X communication relevant information. The RAN node should perform the processes in Steps ST1407 to ST1416. This enables the RAN node to obtain the V2X communication relevant information for the transmission UE. Here, the AMF may verify whether the UE can access the NPN.

The second modification discloses the example where the RAN node broadcasts the PC5 communication relevant information. Even when the UE performing the PC5 communication moves out of a coverage of the RAN node, the UE may implement the V2X service using the PC5 communication, using the PC5 communication relevant information received when the UE is located within the coverage. The UE outside the coverage of the RAN node can implement the V2X service using the PC5 communication.

The methods disclosed in the second modification of the first embodiment enable implementation of the V2X service using the PC5 communication in the NPN. Even when the transmission UE performing the PC5 communication schedules the PC5 communication, the transmission UE can implement the V2X service using the PC5 communication in the NPN. The NPN access limit can be imposed on the V2X service using the PC5 communication. Since the UE need not access the RAN node for scheduling the PC5 communication, the UE can perform the PC5 communication with low latency.

### The third modification of the first embodiment

The PC5 communication methods include a scheduling method performed by the transmission UE performing the PC5 communication. The PC5 communication resources may be preconfigured in the UE. When performing the PC5 communication with the PC5 communication resources preconfigured in the UE, the UE need not access the NW side. For example, even when the UE is not located within a coverage of the cell belonging to its own NPN, the UE can perform the PC5 communication.

In contrast, the UE determines whether the conventional NPN is accessible, based on information received from the cell. When the UE accesses the AMF through the cell, the AMF verifies whether the NPN is accessible. Thus, when the UE cannot find the cell belonging to its own NPN, the UE cannot exercise access control. Thus, the UE cannot determine whether the PC5 communication is possible, and cannot perform the PC5 communication.

The third modification discloses a method for solving such a problem.

The UE can perform the PC5 communication even when the UE does not treat the cell belonging to its own NPN as a serving cell. The UE can implement the V2X service using the PC5 communication. Even when the UE is configured to perform communication only in its own CAG, the UE may be able to perform the PC5 communication outside its own CAG. The UE can implement the V2X service using the PC5 communication.

The UE determines whether the V2X service to be implemented is a V2X service using the PC5 communication with the PC5 communication resources preconfigured in the UE. When the V2X service is the V2X service using the PC5 communication with the PC5 communication resources preconfigured in the UE and the UE does not treat the cell belonging to its own NPN as a serving cell, the UE implements the V2X service. When the V2X service is not the V2X service using the PC5 communication with the PC5 communication resources preconfigured in the UE and the UE does not treat the cell belonging to its own NPN as a serving cell, the UE does not implement the V2X service. For example, in the absence of the PC5 communication resources for the V2X service using the PC5 communication, when the UE does not treat the cell belonging to its own NPN as a serving cell, the UE need not implement the V2X service.

This enables the UE to perform the PC5 communication even when the UE does not treat the cell belonging to its own NPN as a serving cell.

Information indicating whether the PC5 communication outside the cell belonging to its own NPN is possible may be provided. The information may be included in the V2X communication relevant information, the V2X capability, or the NPN relevant information. The information may be preconfigured in the UE. The information may be stored in the UE. The information may be stored in the USIM or the UICC.

When the UE can access the CN, the information for the PC5 communication indicating whether the PC5 communication outside the cell belonging to its own NPN is possible may be provided from the PCF or updated. The information may be provided through a process of providing the V2X communication relevant information from the PCF to the UE. The information may be provided, for example, through the process of providing the V2X policy.

The UE may determine whether the V2X service to be implemented is a V2X service using the PC5 communication with the PC5 communication resources preconfigured in the UE, using the information indicating whether the PC5 communication outside the cell belonging to its own NPN is possible. The UE can control whether the PC5 communication outside the cell belonging to its own NPN is possible.

The assumption that the UE can perform the PC5 communication even when the UE does not treat the cell belonging to its own NPN as a serving cell may be statically predetermined, for example, in a standard. The assumption that the UE can implement the V2X service using the PC5 communication even when the UE does not treat the cell belonging to its own NPN as a serving cell may be statically predetermined, for example, in a standard. Instead of the assumption that the UE does not treat the cell belonging to its own NPN as a serving cell in these examples, the assumption that the UE cannot find a cell belonging to its own NPN, the assumption that the UE cannot find a cell from which information on its own NPN is to be broadcast, or the assumption that the UE that has issued an access request to the NW receives rejection to the access request because the NW is not its own NPN may be applied. The UE may issue the access request, for example, in making a position registration request or a service request.

Consequently, when it is clear that many UEs that implement the V2X services using the PC5 communication do not treat the cell belonging to its own NPN as a serving cell, the UEs can perform the PC5 communication. This can reduce malfunctions in the communication between the UEs.

As described above, the PC5 communication resources to be used when the cell belonging to its own NPN is not treated as a serving cell may be preconfigured in the UE. This applies when the PCF does not notify the UE of the PC5 communication resources. As another example, the resources to be used for performing the PC5 communication may be the PC5 communication resources provided the most recently from the CN. This applies when the UE can access the CN. For example, when the UE is previously located within the coverage of the cell belonging to its own NPN, the UE is subjected to the V2X service authentication and provided with the V2X policy of the V2X service through its own NPN cell, and obtains the PC5 communication resources. This enables the UE to perform the PC5 communication outside its own NPN, using the PC5 communication resources provided from the CN side.

The validity time limit may be configured for the PC5 communication resources. The PC5 communication resources are available within the validity time limit. If the validity time limit expires, the PC5 communication resources are unavailable. The validity time limit may be managed by a timer. Information on the validity time limit (may be timer information) may be statically predetermined, for example, in a standard, or preconfigured in the UE. Alternatively, the CN may provide the information on the validity time limit (may be timer information) when the UE can access the CN. This enables the UE to recognize the PC5 communication resources available when the UE does not treat the cell belonging to its own NPN as a serving cell.

The PC5 communication resource to be used for a V2X service may be configured for each V2X service. The PC5 communication resources available in a certain region may be configured. The certain region should be preconfigured. The PC5 communication resource to be used in a NPN may be configured for each NPN. These may be combined. The PC5 communication resources may correspond to an RP. The PC5 communication resources may correspond to one or more RPs. Such configuration information may be stored in the UE. The CN may provide the configuration information, when the UE can access the CN. For example, the PCF notifies the UE of the configuration information. The PCF may include the configuration information in the V2X communication relevant information, and notify the configuration information. For example, the PCF may notify the configuration information using the process of providing the V2X policy. The methods disclosed in the second modification of the first embodiment may be applied to these methods.

When the UEs do not treat the cell belonging to its own NPN as a serving cell and perform the PC5 communication, the UEs cannot exercise the conventional NPN access control in the Uu communication. Thus, problems in the NPN access control occur such that the UE cannot determine whether the NPN is accessible or the AMF cannot verify whether the NPN is accessible. Furthermore, the UE performing the PC5 communication has a problem of communicating with the UE outside its own NPN. A method for solving such problems is disclosed.

The transmission UE in the PC5 communication notifies the reception UE of its own NPN relevant information. The NPN relevant information may be an identifier for identifying the NPN.

A method for notifying the NPN relevant information between the UEs is disclosed. The NPN relevant information may be notified in a V2X application layer. For example, the transmission UE notifies the reception UE of the NPN relevant information as signaling or data in the V2X application layer. The NPN relevant information may be notified together with the V2X service information.

As another method, the NPN relevant information may be notified in a V2X layer. The NPN relevant information may be notified via the PC5-S signaling. The NPN relevant information may be notified when the Layer-2 link for the PC5 communication is established between the UEs. For example, the transmission UE may include the NPN relevant information in a Direct Communication Request, and notify the reception UE of the information. The V2X layer converts the V2X service information into a Layer-2 identifier. The NPN relevant information may be notified together with the Layer-2 identifier. The CN may provide, in advance, the UE with information on mapping the V2X service information and the Layer-2 identifier. Alternatively, the information may be preconfigured in the UE.

As another method, the NPN relevant information may be notified in an AS layer. The NPN relevant information may be notified via the RRC signaling. The NPN relevant information may be notified when the RRC link for the PC5 communication is established between the UEs. For example, the transmission UE may include the NPN relevant information in notification for inquiring the UE capability or notification of the UE capability information, and notify the reception UE of the information. For example, the transmission UE may include the NPN relevant information in notification on configuration information (Configuration Message) for the PC5 communication or notification of the completion of the configuration for the PC5 communication, and notify the reception UE of the information.

Another notification method in the AS layer is disclosed. The NPN relevant information may be notified in a synchronization procedure. The NPN relevant information may be included in, for example, the PSBCH or the SL-BCH, and notified. As another method, the NPN relevant information may be notified in a discovery process. The NPN relevant information may be included in, for example, the PSDCH, and notified. As another method, the NPN relevant information may be notified in the PC5 communication. The NPN relevant information may be included in, for example, the PSSCH or the SL-SCH, and notified. The NPN relevant information may be included in, for example, the PSCCH or the SCI, and notified.

These enable the UEs performing the PC5 communication to communicate the NPN relevant information.

The V2X service may be associated with a NPN in which the V2X service is available. The V2X service may be associated with a NPN to which its own UE belongs (hereinafter may be referred to as its own NPN) in the NPN in which the V2X service is available. When the V2X service is supported by a plurality of different NPNs, associating the V2X service with the NPN to which its own UE belongs in the NPN in which the V2X service is available can establish an association between the V2X service and the specific NPN in the NPN. The specific NPN can be the NPN to which its own UE belongs. The number of the NPNs to which its own UE belongs may be one or more.

The UEs performing the PC5 communication may communicate information associating the V2X service with its own NPN in which the V2X service is available. The transmission UE performing the PC5 communication may notify the reception UE of information associating the V2X service with its own NPN in which the V2X service is available.

A method for associating the V2X service with its own NPN in which the V2X service is available is disclosed.

The V2X service information is associated with the NPN relevant information. The NPN in which the V2X service is available should be configured. One NPN in which one or more V2X services are available may be configured. One or more NPNs in which one V2X service is available may be configured. Information associating information on the V2X service with information on the NPN in which the V2X service is available may be configured.

For example, an identifier for identifying a V2X service is associated with an identifier for identifying a NPN. The association may be established in the V2X application layer. This is effective when the V2X application layer recognizes the association between the V2X service and the NPN in which the V2X service is available. The UEs may communicate information on the association between the V2X service and the NPN in which the V2X service is available as the signaling or data in the V2X application layer.

Another method is disclosed. The V2X application layer notifies the V2X layer of information on the association between the V2X service and the NPN in which the V2X service is available. This is effective when the V2X application layer recognizes the association between the V2X service and the NPN in which the V2X service is available. Alternatively, the V2X layer may associate the V2X service with the NPN in which the V2X service is available. This is effective when the V2X layer recognizes the association between the V2X service and the NPN in which the V2X service is available.

Since the V2X layer converts the V2X service information into the Layer-2 identifier, this Layer-2 identifier should be associated with the NPN relevant information. The Layer-2 identifier may be a Layer-2 identifier to be used for broadcast communication, group communication, or unicast communication. In each of the communications, the V2X service can be associated with the NPN in which the V2X service is available. The UEs may communicate information on the association between the V2X service and the NPN in which the V2X service is available as the signaling or data in the V2X layer. The UEs may communicate via the PC5-S signaling.

Another method is disclosed. The V2X layer notifies the AS layer of information on the association between the V2X service and the NPN in which the V2X service is available. This is effective when the V2X layer recognizes the association between the V2X service and the NPN in which the V2X service is available according to the aforementioned method. Alternatively, the AS layer may associate the V2X service with the NPN in which the V2X service is available. This is effective when the AS layer recognizes the association between the V2X service and the NPN in which the V2X service is available. The V2X layer should notify the AS layer of the Layer-2 identifier. Then, the AS layer should associate the Layer-2 identifier with the NPN relevant information.

This enables the UEs that implement the V2X services using the PC5 communication to communicate its own NPN relevant information.

The reception UE performing the PC5 communication receives the V2X service information notified from the transmission UE, and the NPN relevant information on the NPN in which the V2X service is available and to which the transmission UE belongs. Consequently, the reception UE obtains a desired V2X service, and the NPN relevant information on the NPN in which the V2X service is available and to which the transmission UE belongs. The reception UE may determine whether the transmission UE can access the NPN. The reception UE may determine whether the transmission UE can access the NPN, using the NPN relevant information notified from the transmission UE on the NPN to which the transmission UE belongs.

For example, the reception UE checks the NPN relevant information notified from the transmission UE on the NPN to which the transmission UE belongs, with the V2X service and the NPN relevant information on the NPN in which the V2X service is available, which are preconfigured in the UE. In the presence of the same NPN, the reception UE determines that the NPN is accessible, and communicates with the transmission UE. In the absence of the same NPN, the reception UE determines that the NPN is inaccessible, and does not communicate with the transmission UE. When determining that the NPN is inaccessible, the reception UE should perform a process of detecting a request for performing the PC5 communication from the transmission UE again. The request includes information on the desired V2X service and the NPN in which the V2X service is available.

The reception UE may notify the transmission UE of a result of the determination on whether the NPN is accessible. For example, the reception UE transmits PC5 communication acceptance to the transmission UE. The reception UE may include its own NPN relevant information in a PC5 communication acceptance message. The transmission UE may verify whether the NPN is accessible, using the NPN relevant information received from the reception UE on the NPN to which the reception UE belongs.

For example, the transmission UE checks the NPN relevant information notified from the reception UE on the NPN to which the reception UE belongs, with the NPN relevant information transmitted by its own UE. In the presence of the same NPN, the transmission UE determines that the NPN is accessible, and communicates with the reception UE. In the absence of the same NPN, the transmission UE determines that the NPN is inaccessible, and does not communicate with the reception UE. The transmission UE verifies whether the NPN is accessible, in this manner.

What is disclosed is that the reception UE determines whether the NPN is accessible and the transmission UE verifies whether the NPN is accessible. As another method, determination on whether the NPN is accessible by the reception UE may be regarded as verification on whether the NPN is accessible. This means that the reception UE verifies whether the NPN is accessible.

Consequently, the UEs that implement the V2X services using the PC5 communication can exercise access control in the NPN. Furthermore, the UEs that belong to the same NPN can implement the V2X services using the PC5 communication. Furthermore, the UEs that belong to different NPNs cannot implement the V2X services using the PC5 communication.

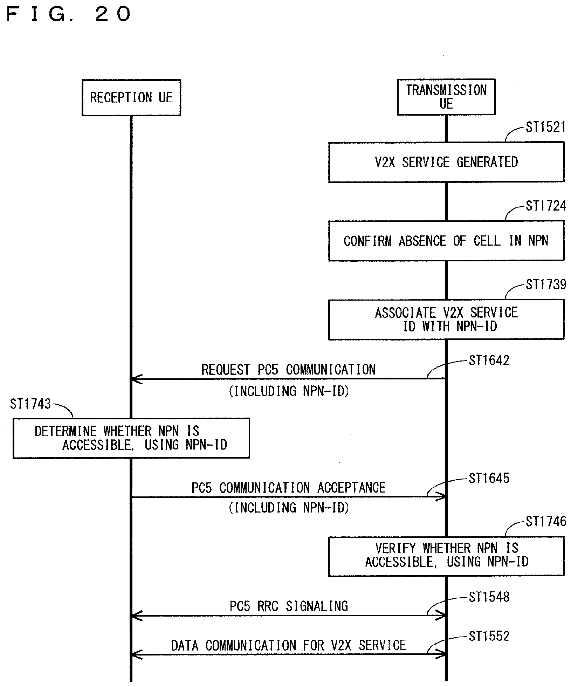

FIG. 20 illustrates the first example sequence for performing the PC5 communication outside a coverage of a cell belonging to its own NPN, according to the third modification of the first embodiment. FIG. 20 illustrates an example where one of the UEs schedules the PC5 communication. FIG. 20 also illustrates an example where the transmission UE verifies whether the NPN is accessible. In FIG. 20, the same step numbers are applied to the steps common to those in FIGS. 18 and 19, and the common description thereof is omitted.

In Step ST1521, a V2X service using the PC5 communication is generated in the transmission UE. In Step ST1724, the transmission UE confirms that its own UE is located outside the coverage of the NPN to which its own UE belongs. In Step ST1739, the transmission UE calculates a V2X service, and a NPN in which the V2X service is available. The transmission UE should perform the calculation, using information preconfigured in the transmission UE on the NPN in which the V2X service is available.

The transmission UE calculates the NPN corresponding to the V2X service, and calculates the PC5 communication resources available in the calculated NPN. The transmission UE should perform the calculation, using information preconfigured in the transmission UE on the PC5 communication resources available in the NPN.

This enables the transmission UE to recognize the PC5 communication resources available for the generated V2X service using the PC5 communication. The transmission UE schedules the PC5 communication with the PC5 communication resources, and notifies the reception UE of a request for performing the PC5 communication in Step ST1642. The transmission UE may request the PC5 communication via the PC5-S signaling. As disclosed in the method of FIGS. 18 and 19, the PC5 communication request may include information on the NPN. This enables the reception UE to recognize the NPN relevant information.

The reception UE may determine whether the NPN is accessible, using the identifier of the NPN in Step ST1743. The reception UE can check whether the NPN corresponds to the received V2X service, using the information preconfigured in the reception UE on the NPN in which the V2X service is available and the NPN relevant information notified from the transmission UE in Step ST1642. When the NPN corresponds to the received V2X service, the reception UE may notify the PC5 communication acceptance in Step ST1645. Otherwise, the reception UE may notify the PC5 communication rejection. Alternatively, the reception UE need not transmit anything.

In Step ST1645, the reception UE transmits the PC5 communication acceptance to the transmission UE. The reception UE may include the NPN relevant information in the PC5 communication acceptance. In Step ST1746, the transmission UE determines that the PC5 communication is possible upon receipt of the PC5 communication acceptance from the reception UE. Otherwise, the transmission UE determines that the PC5 communication is impossible. The transmission UE may determine whether the PC5 communication is possible, further using the NPN relevant information included in the PC5 communication acceptance. When the NPN relevant information included in the PC5 communication acceptance includes the NPN in which the V2X service using the PC5 communication is available, the transmission UE determines that the PC5 communication is possible. Otherwise, the transmission UE determines that the PC5 communication is impossible.

When a desired V2X service is unavailable in the NPN, this method can disable the PC5 communication. The transmission UE can verify whether the NPN is accessible.

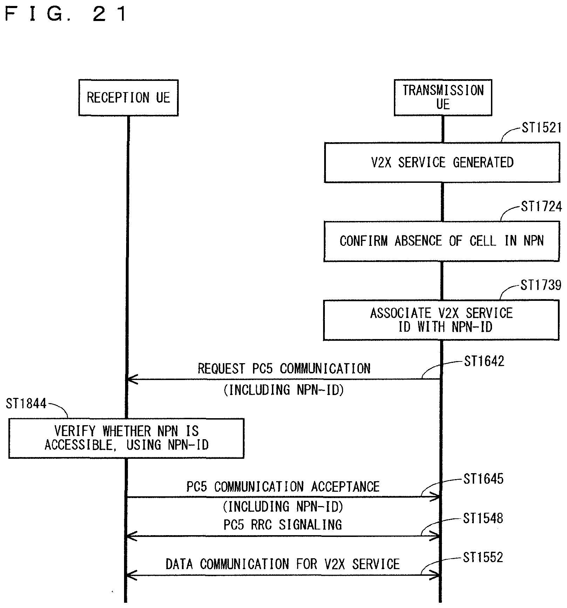

FIG. 21 illustrates the second example sequence for performing the PC5 communication outside the coverage of the cell belonging to its own NPN, according to the third modification of the first embodiment. FIG. 21 illustrates an example where one of the UEs schedules the PC5 communication. FIG. 21 illustrates an example where not the transmission UE but the reception UE verifies whether the NPN is accessible. In FIG. 21, the same step numbers are applied to the steps common to those in FIG. 20, and the common description thereof is omitted.

The reception UE may determine whether the NPN is accessible, using the identifier of the NPN in Step ST1844. The reception UE can check whether the NPN corresponds to the received V2X service, using the information preconfigured in the reception UE on the NPN in which the V2X service is available and the NPN relevant information notified from the transmission UE in Step ST1642. When the NPN corresponds to the received V2X service, the reception UE may notify the PC5 communication acceptance in Step ST1645. Otherwise, the reception UE may notify the PC5 communication rejection. Alternatively, the reception UE need not transmit anything.

This enables implementation of a desired V2X service only in a NPN which the desired V2X service using the PC5 communication is available. When the desired V2X service is unavailable in the NPN, the PC5 communication can be disabled. The reception UE can verify whether the NPN is accessible. Thus, the transmission UE need not verify whether the NPN is accessible.

The transmission UE may determine whether the NPN is accessible, before transmitting the PC5 communication request. Determination on whether the PC5 communication is possible may be regarded as verification on whether the NPN is accessible. Example judgment indicators may include information on whether the UE holds, in advance, the PC5 communication resources for the V2X service to be implemented. The transmission UE determines that the PC5 communication is possible, when its own UE does not treat the cell belonging to its own NPN as a serving cell and holds the PC5 communication resources for the V2X service to be implemented. The transmission UE determines that the PC5 communication is impossible, when its own UE does not treat the cell belonging to its own NPN as a serving cell and does not hold the PC5 communication resources for the V2X service to be implemented.

Example judgment indicators may include information on whether the V2X service can be implemented in the NPN to which its own UE belongs. The transmission UE determines that the PC5 communication is possible, when the V2X service can be implemented in the NPN to which its own UE belongs. The transmission UE determines that the PC5 communication is impossible, when the V2X service cannot be implemented in the NPN to which its own UE belongs.

The aforementioned judgment indicators may be used in combination. For example, the PC5 communication is possible when the V2X service can be implemented in the NPN to which its own UE belongs and the UE holds the PC5 communication resources for the V2X service. Otherwise, the PC5 communication is impossible.

Consequently, the transmission UE can perform a process of determining whether the NPN is accessible. Determination on whether the NPN is accessible by the transmission UE may be applied to, for example, the example disclosed in FIG. 20. In FIG. 20, the transmission UE determines whether the NPN is accessible, before transmitting the PC5 communication request in Step ST1642. When determining that the NPN is accessible and the PC5 communication is possible, the transmission UE transmits the PC5 communication request. When determining that the NPN is inaccessible and the PC5 communication is impossible, the transmission UE does not transmit the PC5 communication request.

Consequently, the transmission UE can perform the process of determining whether the NPN is accessible in the example of FIG. 20. When determining that the NPN is inaccessible, the transmission UE does not transmit the PC5 communication request. Thus, wasteful use of the resources in the PC5 communication can be eliminated, and the interference can be reduced.

Determination on whether the NPN is accessible by the transmission UE may be applied to, for example, the example disclosed in FIG. 21. In FIG. 21, the transmission UE determines whether the NPN is accessible, before transmitting the PC5 communication request in Step ST1642. When determining that the NPN is accessible and the PC5 communication is possible, the transmission UE transmits the PC5 communication request. When determining that the NPN is inaccessible and the PC5 communication is impossible, the transmission UE does not transmit the PC5 communication request.

Consequently, the transmission UE can perform the process of determining whether the NPN is accessible in the example of FIG. 21. When determining that the NPN is inaccessible, the transmission UE does not transmit the PC5 communication request. Thus, wasteful use of the resources in the PC5 communication can be eliminated, and the interference can be reduced.

Addition of the process of determining whether the NPN is accessible by the transmission UE to the example of FIG. 21 can differentiate the UE performing the process of determining whether the NPN is accessible from the UE verifying whether the NPN is accessible. This enables a plurality of different UEs to exercise NPN access control.

Since the UE performing the PC5 communication can exercise the NPN access control, a problem in that the UE performing the PC5 communication communicates with the UE outside its own NPN can be solved.

The method for enabling the PC5 communication when the UE cannot find the cell belonging to its own NPN is disclosed. Another method may be banning the PC5 communication when the UE cannot find the cell belonging to its own NPN. Consequently, the NPN access control for the UE need not be exercised. This can simplify the processes of the system using the NPN.

The methods disclosed in the third modification of the first embodiment enable the UE to perform the PC5 communication and implement the V2X service using the PC5 communication, even when the UE cannot find the cell belonging to its own NPN.

### The fourth modification of the first embodiment

The PC5 communication is communication between the UEs. For example, when the UE is located within a coverage of a cell belonging to another NPN, enabling the PC5 communication that is the communication between the UEs is required. The fourth modification discloses methods for enabling the PC5 communication even when the UE is located within the coverage of the cell belonging to the other NPN.

Access of the UE performing the PC5 communication to a cell that is not in its own NPN is permitted. The UE performing the PC5 communication determines whether the cell that is not in its own NPN is accessible. For example, the UE determines whether the cell that is not in its own NPN is accessible, by determining whether its own UE has the V2X capability. The UE may determine whether the UE has the PC5 communication capability. When having the PC5 communication capability, the UE may access the cell that is not in its own NPN. Otherwise, the UE does not access the cell that is not in its own NPN. Even when the V2X service is not generated, the UE performing the PC5 communication can determine whether the cell that is not in its own NPN is accessible. This enables the UE performing the PC5 communication to perform, in advance, the processes of the V2X authentication and providing the V2X policy through the cell that is not in its own NPN.

Whether the access of the UE is permitted may vary depending on the type of the NPN to which the cell that is not in its own NPN belongs. For example, access to a cell belonging to an S-NPN different from the NPN to which the UE performing the PC5 communication belongs is not permitted. Access to a cell belonging to a NS-NPN different from the NPN to which the UE performing the PC5 communication belongs is permitted. This can ban the access of the UE to the different S-NPN even in the PC5 communication. Thus, access of the UE that does not belong to the S-NPN can be limited.

For example, access to the cell belonging to the S-NPN different from the NPN to which the UE performing the PC5 communication belongs may be permitted. Furthermore, access to the cell belonging to the NS-NPN different from the NPN to which the UE performing the PC5 communication belongs need not be permitted. This can ban the access to the different NS-NPN even in the PC5 communication. Thus, access of the UE that does not belong to the NS-NPN can be limited.

One PLMN sometimes consists of one S-NPN, or a plurality of S-PLMNs. For example, access to a cell belonging to a NPN which is different from the NPN to which the UE performing the PC5 communication belongs and identical in PLMN to the NPN to which the UE belongs may be permitted. Furthermore, access to cells belonging to other different NPNs need not be permitted. This can limit the NPNs to which access is permitted even in the PC5 communication. Thus, the UEs that can access the NPNs can be limited.

The UE may determine whether the V2X service to be implemented is the V2X service using the PC5 communication. When the V2X service is the V2X service using the PC5 communication, the UE may access a cell that is not in its own NPN. Otherwise, the UE does not access the cell that is not in its own NPN. When the V2X service using the PC5 communication is generated, the UE can access the cell that is not in its own NPN. Furthermore, when the V2X service using the PC5 communication is generated, the UE can perform the processes of the V2X authentication and providing the V2X policy through the cell that is not in its own NPN.

The RAN node (e.g., the gNB) need not exercise the NPN access control when the UE accesses the RAN node. In the conventional NPN access control, the UE determines whether the NPN is accessible, and the AMF verifies whether the NPN is accessible. When the UE performing the PC5 communication accesses the cell that is not in its own NPN, the RAN node need not exercise the NPN access control. The RAN node may notify the AMF of information received from the UE.

As another method, the RAN node may exercise the NPN access control when the UE accesses the RAN node. The RAN node may determine whether the UE can perform the PC5 communication. For example, the RAN node determines whether the UE has the PC5 communication capability. The UE includes the PC5 communication capability in the notification to the RAN node, and notifies the capability. This enables the RAN node to determine whether the UE can perform the PC5 communication.

When the notification from the UE includes the PC5 communication capability, the RAN node determines that the UE can access the RAN node, and permits the access of the UE. When permitting the access of the UE, the RAN node may notify the AMF of the PC5 communication capability. Otherwise, the RAN node determines that the UE cannot access the RAN node, and does not permit the access of the UE. When the RAN node does not permit the access of the UE, the RAN node may notify the UE of rejection. The rejection may include cause information.

When the notification from the UE includes the PC5 communication capability, the RAN node may determine that the UE can access the RAN node, and transmit, to the UE, a grant to a request for providing the V2X service relevant information. The UE may notify the AMF of the request for providing the V2X service relevant information in the NAS message. The RAN node may transmit a grant to the NAS message to be notified from the UE to the AMF. When the V2X service using the PC5 communication is generated, the UE can perform the processes of the V2X authentication and providing the V2X policy through the cell that is not in its own NPN.

For example, the RAN node may determine whether the UE accesses the RAN node so that the UE implements the V2X service or the V2X service using the PC5 communication. When the UE accesses the RAN node for the V2X service, the UE includes the PC5 communication capability in the notification to the RAN node, and notifies the capability. This enables the RAN node to determine whether the UE can perform the PC5 communication.

Access of the UE performing the PC5 communication to the AMF through a cell that is not in its own NPN is permitted. The AMF may exercise the NPN access control when the UE accesses the AMF. The AMF may determine whether the UE accesses the AMF through the PC5 communication. For example, when the UE accesses the AMF for implementing the V2X service using the PC5 communication, the AMF permits the UE to access a NPN different from its own NPN. Otherwise, the AMF does not permit the UE to access the NPN different from its own NPN.

Specific example methods for the AMF to determine whether the UE accesses the AMF through the PC5 communication are disclosed. The AMF may determine whether the UE accesses the AMF through the PC5 communication by determining whether the signaling notified from the UE through the RAN node includes the PC5 communication capability. When the notification from the UE includes the PC5 communication capability, the AMF determines that the UE can access the AMF, and permits the access of the UE. When permitting the access of the UE, the AMF may request the PCF to authenticate the V2X service and provide the UE with the V2X policy. Otherwise, the AMF determines that the UE cannot access the AMF, and does not permit the access of the UE. When the AMF does not permit the access of the UE, the AMF may notify the UE of rejection. The rejection may include cause information.

When permitting the access of the UE, the AMF may notify the UE of the access permission. The AMF may notify the access permission through the RAN node. This enables the UE to recognize that the access to the NW side through the cell that is not in its own NPN is permitted.

Thus, the UE performing the PC5 communication can perform the processes of the V2X authentication and providing the V2X policy through the cell that is not in its own NPN. The UE performing the PC5 communication and the PCF should perform the processes of the V2X authentication and providing the V2X policy, using the aforementioned method.

When the AMF permits the access of the UE which belongs to the NPN different from that to which its own AMF belongs and which performs the PC5 communication, registration from the UE to the AMF may be unnecessary. When the UE accesses a NW through the cell that is not in its own NPN, the registration may be unnecessary. This enables the UE to only authenticate the V2X service and provide the V2X service relevant information, using the PC5 communication.

When the UE performing the PC5 communication accesses the NW through the cell that is not in its own NPN, the registration management state may be a non-registration state. When the UE performing the PC5 communication accesses the NW through the cell that is not in its own NPN, the connection management state may be an idle state. The UE and the PCF manage these states.

States to be managed by a plurality of UEs which perform the PC5 communication may be provided. For example, an RRC state for managing whether the UEs which perform the PC5 communication are RRC-connected may be provided. For example, a link connection management state for managing whether the PC5-S link is connected between the UEs which perform the PC5 communication may be provided. This can facilitate a state transition process in the UEs which perform the PC5 communication, and reduce malfunctions.

Another method is disclosed. When the access from the UE is access for implementing the V2X service using the PC5 communication, the AMF may authenticate the V2X service and perform the process of providing the V2X policy with the PCF and the UE, and then exercise the NPN access control.

The AMF determines whether the UE accesses the AMF through the PC5 communication. When the access from the UE is the access for implementing the V2X service using the PC5 communication as a result of the determination, the AMF may request the PCF to authenticate the V2X service and provide the V2X policy for the UE, notify the UE of the V2X policy provided from the PCF in response to the request, and then exercise the NPN access control on the UE.

One example of the NPN access control on the UE is disclosed. When the access from the UE is access to its own NPN, the AMF determines that the UE can access the AMF, and permits the access of the UE. When the access from the UE is access to a NPN different from its own NPN, the AMF determines that the UE cannot access the AMF, and does not permit the access of the UE. When the AMF does not permit the access of the UE, the AMF may notify the UE of rejection. The rejection may include cause information.

The AMF may include the V2X policy for the UE in the rejection notification on the NPN access, and provide the V2X policy. The AMF may include the V2X policy for the UE in the cause information. The AMF may notify the V2X policy for the UE together with the cause information.

This enables the UE and the CN to authenticate the V2X service using the PC5 communication and perform the process of providing the V2X policy, before the AMF determines that the UE cannot access the AMF through the NPN access control. Even when the access from the UE is the access to the NPN different from its own NPN, the UE can be subjected to the V2X service authentication, and provided with the V2X policy.

The RAN node in a NPN different from that of the UE schedules the PC5 communication for the UE. In other words, the RAN node implements the V2X service using the PC5 communication in mode 1. The PCF may provide the RAN node accessed by the UE with the V2X policy so that the RAN node implements the V2X service using the PC5 communication in mode 1. The PCF may provide the V2X policy through the AMF. The aforementioned NPN access control method may be applied. The aforementioned V2X policy providing method may be appropriately applied. The PCF should provide the V2X policy not to the UE but to the RAN node accessed by the UE.

As described above, the V2X service relevant information may include information associated with the NPN relevant information on the NPN in which the V2X service is available. The V2X service relevant information may include the V2X policy or the V2X parameter, the V2X service information, and information on the NPN in which the V2X service information is available. The V2X policy or the V2X parameter may include the V2X service information, and the V2X parameter on the NPN in which the V2X service information is available. The V2X service relevant information may be the V2X policy or the V2X parameter including the V2X service information and the V2X parameter on the NPN in which the V2X service information is available. The V2X policy or the V2X parameter may be, for example, a V2X policy or a V2X parameter in the PC5 (also referred to as a PC5 reference point).

A method for the UE to perform the PC5 communication is disclosed. When a V2X service using the PC5 communication is generated in the UE, the UE establishes the RRC connection with the RAN node. The RAN node may belong to a NPN different from that of the UE. The aforementioned access control method when the UE that belongs to the NPN different from its own NPN accesses the RAN node should be applied to the RAN node. This enables the UE to access the RAN node.

The UE notifies the RAN node of the Buffer Status Report (BSR) for indicating the data amount generated in the V2X service using the PC5 communication. The UE may notify the BSR via the RRC signaling or the MAC signaling. The UE may include the BSR in, for example, the UE assistance information message, and notify the BSR via the RRC signaling. The UE may notify the BSR, for example, in the process of establishing the RRC connection.

The UE may notify information indicating a scheduling request for the PC5 communication instead of the BSR. Here, the base station cannot recognize the data amount of the V2X service for the UE. The base station may perform scheduling corresponding to a certain data amount, and notify the UE of the scheduling information. The certain data amount may be predetermined. The UE may perform scheduling corresponding to a data amount in which at least the BSR can be transmitted, and notify the scheduling information.

This enables the RAN node to recognize that the UE that does not belong to its own NPN requests the RAN node to schedule the PC5 communication. The RAN node can schedule the PC5 communication for the UE that does not belong to its own NPN, and notify the UE of the scheduling information.

The following (1) to (10) are described as specific examples of the scheduling information for the PC5 communication.
(1) Information on the RAT
(2) Information on the frequencies
(3) Information on the Band Width Part (BWP)
(4) Resource allocation information
(5) MCS information
(6) Information on the HARQ
(7) Information on the CSI
(8) Information on the transmission power
(9) Information on measurement of power
(10) Combinations of (1) to (9) above

The information on the RAT in (1) may be information indicating the RAT for performing the PC5 communication. The information indicating the RAT may be, for example, information indicating LTE or NR

The resource allocation information in (4) may be, for example, resource allocation information for each channel to be used for the PC5 communication, or resource allocation information on the Reference Signal (RS). Examples of the channel include the PSCCH and the PSSCH. The resource allocation information may be frequency-time resource allocation information. The resource allocation information may be configured per one or more RBs, per one or more sub-channels, per one or more symbols, or per one or more slots. The resource allocation information on the RS may include sequence information for the RS.

Examples of the information on the HARQ in (6) include the number of repetitions, the resource allocation information in the repeated transmission, and the scheduling information for the HARQ feedback (e.g., Ack and/or Nack) transmission. The scheduling information for the PC5 communication may be applied as the scheduling information for the repeated transmission or the HARQ feedback transmission. The resource allocation information may be a transmission band or transmission timing. This enables the transmission UE performing the PC5 communication to perform the HARQ process. This also enables the reception UE performing the PC5 communication to schedule transmission of the HARQ feedback.

The transmission UE should notify the reception UE of the scheduling information for the HARQ feedback, using the PC5 communication. Upon receipt of the scheduling information for the HARQ feedback, the reception UE can transmit the HARQ feedback.

Examples of the information on the CSI in (7) include configuration information on the RS for the CSI in the PC5, and scheduling information for transmitting the CSI report. The configuration information may be the resource allocation information. The scheduling information for the PC5 communication may be applied as the scheduling information for transmitting the CSI report. The resource allocation information may be a transmission band or transmission timing. This enables the transmission UE performing the PC5 communication to transmit the RS for the CSI. This also enables the reception UE performing the PC5 communication to perform the CSI report.

The transmission UE should notify the reception UE of the scheduling information for transmitting the CSI report, using the PC5 communication. Upon receipt of the scheduling information for the CSI report, the reception UE can transmit the CSI report.

The information on the transmission power in (8) may be transmission power for the channel or the RS to be transmitted by the transmission UE. Alternatively, the information may be a parameter value for calculating the transmission power. The transmission UE calculates the transmission power using the parameter. The information may also be transmission power for the channel or the RS to be transmitted by the reception UE. The information may be transmission power for the HARQ feedback or the CSI report. Alternatively, the information may be a parameter value for calculating the transmission power by the reception UE. This enables the base station to configure the transmission power in consideration of the interference from another UE to the transmission UE or the reception UE or the interference from the transmission UE or the reception UE to another UE.

Examples of the information on measurement of power in (9) include configuration information on the channel or the RS for measuring the power in the PC5, and scheduling information for transmitting a report on the result of the measured power. The configuration information may be the resource allocation information. The scheduling information for the PC5 communication may be applied as the scheduling information for transmitting the report on the result of the measured power. The resource allocation information may be a transmission band or transmission timing. This enables the transmission UE performing the PC5 communication to transmit the RS for measuring the power. This also enables the reception UE performing the PC5 communication to report the result of the measured power.

The transmission UE should notify the reception UE of the configuration of the channel or the RS for measuring the power, using the PC5 communication. The reception UE measures the channel or the RS for measuring the power, using the received configuration of the channel or the RS for measuring the power, and calculates the received power. The transmission UE should notify the reception UE of the scheduling information for transmitting a report on the result of the measured power, using the PC5 communication. The reception UE can transmit the measurement result of the received power to the transmission UE, using the scheduling.

The transmission UE may notify the reception UE of information or the reception UE may notify the transmission UE of information, via the PC5-S signaling, the RRC signaling, or the MAC signaling. Alternatively, the transmission UE or the reception UE may include the information in the SCI, and notify the information in the PSCCH or a feedback channel (PSFCH).

The PC5-S signaling can expedite the notification. The RRC signaling enables the notification in the AS layer. The RRC signaling is effective at, for example, notifying information in the AS layer. The MAC signaling enables the notification with low latency. Application of the HARQ to the MAC signaling can reduce an error rate. The use of the PSCCH or the PSFCH enables the notification with low latency.

A different notification method may be used for each information. For example, the configuration information on the RS for measuring the power in the PC5 communication may be notified via the PC5-S signaling, whereas the result of the measured power may be notified via the RRC signaling. This enables the reception UE to measure the power earlier and notify the transmission UE of the result of the measured power earlier after establishing the RRC connection. Consequently, the transmission UE can appropriately and earlier control the transmission power. Appropriately using a different notification method for each information can improve the communication quality of the PC5 communication.

The transmission UE may notify the reception UE of the information on the V2X service using the PC5 communication and information on the NPN in which the V2X service is available. Alternatively, the transmission UE may notify any one of these pieces of information. The reception UE may determine whether the NPN is accessible, using information obtained in advance on the NPN associated with the V2X service, and the information on the V2X service using the PC5 communication and information on the NPN in which the V2X service is available which have been notified from the transmission UE. The methods disclosed in the third modification of the first embodiment may be applied.

The reception UE may notify the transmission UE of a result of the determination on whether the NPN is accessible. For example, the reception UE transmits the PC5 communication acceptance to the transmission UE. The reception UE may include its own NPN relevant information in the PC5 communication acceptance message. The transmission UE may verify whether the NPN is accessible, using the NPN relevant information received from the reception UE on the NPN to which the reception UE belongs. The methods disclosed in the third modification of the first embodiment may be applied. These enable the transmission UE to verify whether the NPN is accessible.

With application of the method disclosed in the third modification of the first embodiment, determination on whether the NPN is accessible by the reception UE may be regarded as verification on whether the NPN is accessible. This means that the reception UE verifies whether the NPN is accessible.

Consequently, the NPN access control becomes possible even when the RAN node that schedules the PC5 communication in mode 1 belongs to the NPN different from that to which the transmission UE belongs. The reception UE performing the PC5 communication can determine whether the NPN is accessible.

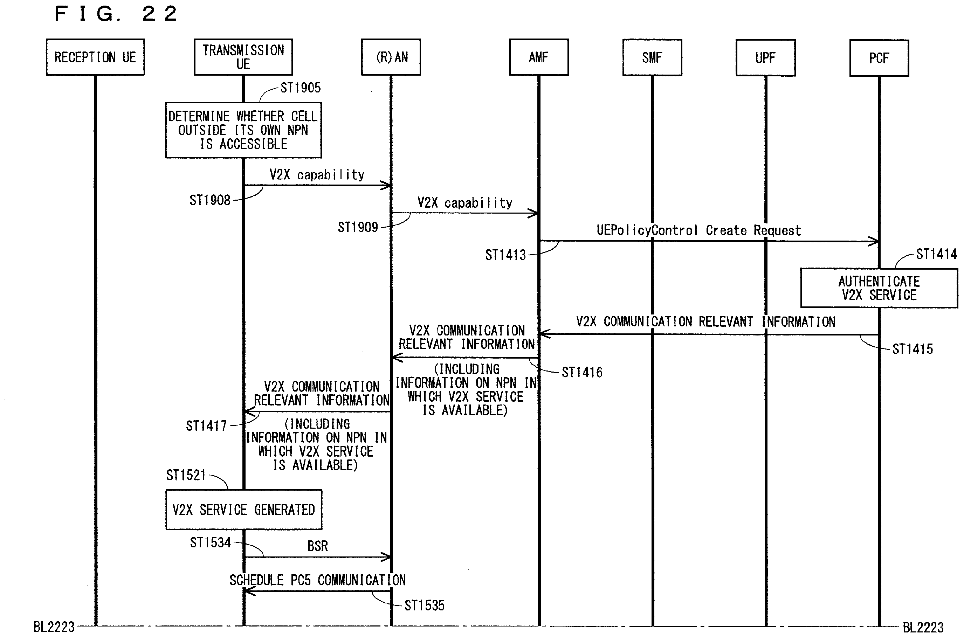

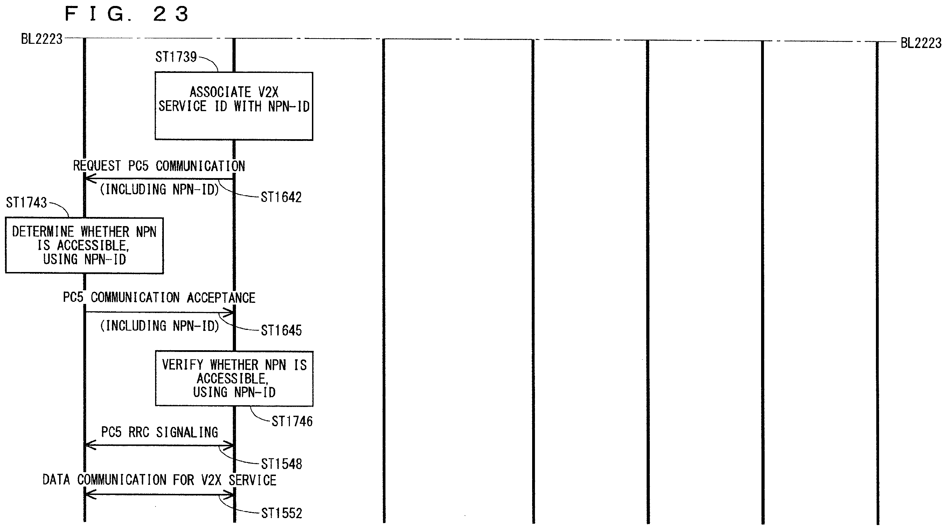

FIGS. 22 and 23 illustrate an example sequence for performing the PC5 communication through a cell that does not belong to its own NPN, according to the fourth modification of the first embodiment. FIGS. 22 and 23 are connected across a location of a border BL2223. FIGS. 22 and 23 illustrate an example where the RAN node (base station) schedules the PC5 communication for the UE. In FIGS. 22 and 23, the same step numbers are applied to the steps common to those in FIGS. 16 and 17 and FIG. 20, and the common description thereof is omitted.

In Step ST1905, the transmission UE determines whether a cell that does not belong to its own NPN is accessible. When the access is intended for the V2X service using the PC5 communication, the transmission UE determines that the cell that does not belong to its own NPN is accessible. Otherwise, the transmission UE determines that the cell is inaccessible. The RAN node may broadcast the NPN relevant information to the UE, so that the UE receives the broadcast NPN relevant information. In Step ST1905, the UE determines that the UE can access the RAN node if the access is intended for performing the PC5 communication even in the absence of its own NPN in the received NPN relevant information.

When determining that the UE can access the RAN node, the UE accesses the RAN node and notifies the RAN node of the V2X capability in Step ST1908. In Step ST1909, the RAN node notifies the AMF of the V2X capability received from the UE. The methods disclosed in FIGS. 16 and 17 should be appropriately applied to the method for notifying the V2X capability from the transmission UE to the AMF

The AMF does not verify whether the UE can access the NPN. The AMF does not determine whether the UE that has notified the V2X capability for the PC5 communication can access the NW. The AMF recognizes that the V2X service is providable, using the V2X capability received from the UE.

In Step ST1413, the AMF notifies the PCF of the V2X capability received from the UE. The AMF may give the notification using, for example, the Npcf interface or the UE policy control create request message.

In Step ST1414, the PCF authenticates the V2X service using data registered in the UE. Furthermore, the PCF determines to provide the UE with the V2X policy. Furthermore, the PCF determines to provide the UE with the V2X service and information on the NPN in which the V2X service is available. The V2X policy may include the V2X parameter. The V2X policy may include the V2X service and information on the NPN in which the V2X service is available.

In Step ST1415, the PCF notifies the AMF of the V2X communication relevant information. In Step ST1416, the AMF notifies the RAN node of the V2X communication relevant information received from the PCF. The AMF may notify the UE of the V2X communication relevant information received from the PCF. For example, the AMF may notify the UE of the V2X communication relevant information through Steps ST1416 and ST1417. In Step ST1417, the RAN node notifies the UE of the V2X communication relevant information. This enables the UE to also obtain the V2X communication relevant information.

In Step ST1521, a V2X service using the PC5 communication is generated in the transmission UE. Even when located within the coverage of the cell that does not belong to its own NPN, the transmission UE notifies the cell of the BSR for the PC5 communication in Step ST1534. Upon receipt of the BSR for the PC5 communication, the RAN node schedules the PC5 communication for the transmission UE in Step ST1535. The methods disclosed in FIG. 20 should be appropriately applied to Steps ST1739 to ST1552.

This enables the UE to perform the PC5 communication through the cell that does not belong to its own NPN even when the UE is located within the coverage of the cell.

The methods disclosed in the fourth modification of the first embodiment enable the UE to perform the PC5 communication, even when the UE cannot find a cell belonging to its own NPN. The UE can perform the PC5 communication, even when the UE finds only a cell that is not in its own NPN. The UE can implement the V2X service using the PC5 communication. Furthermore, the UE can authenticate the V2X service and perform the process of providing the V2X policy with the CN, through the RAN node in the NPN different from that to which its own UE belongs. For example, the UE can update the V2X policy even when the UE finds only the cell that is not in its own NPN. Thus, the UE can update the QoS parameter. The latest communication state or load state of the NW can be reflected on the V2X policy.

### The fifth modification of the first embodiment

The fifth modification discloses other methods for solving the problem disclosed in the fourth modification of the first embodiment.

When the UE performing the PC5 communication is located within a coverage of a cell belonging to a NPN different from that of its own UE, the UE schedules the PC5 communication with the peer UE. This method should be applied when the transmission UE performing the PC5 communication implements the V2X service using the PC5 communication in mode 2 that is a scheduling method.

For example, the base station broadcasts the PC5 communication resources. The UE performing the PC5 communication should schedule the PC5 communication with the PC5 communication resources to be broadcast from the cell belonging to the NPN different from that of its own UE. The reception UE should detect the PC5 communication from the transmission UE, using the PC5 communication resources to be broadcast from the cell belonging to the NPN different from that of its own UE.

When implementing the V2X service using the PC5 communication, the UE determines to be able to receive the PC5 communication resources to be broadcast from the cell belonging to the NPN different from that of its own UE. Otherwise, the UE may determine to be unable to receive the PC5 communication resources to be broadcast from the cell belonging to the NPN different from that of its own UE.

Consequently, when the UE performing the PC5 communication is located within the coverage of the cell belonging to the NPN different from that of its own UE, the UE can perform the PC5 communication.

However, the cell belonging to the NPN different from that to which the UE belongs does not always broadcast the PC5 communication resources available in the NPN to which the UE belongs. Thus, the UE cannot perform the PC5 communication with the PC5 communication resources to be broadcast from the cell belonging to the NPN different from that of its own UE. A method for solving such a problem is disclosed.

The PC5 communication resources available in the NPN to which the UE belongs may be preconfigured in the UE. The methods disclosed in the second modification of the first embodiment may be applied to methods for configuring the NPN and the PC5 communication resources available in the NPN. The PC5 communication resources may be configured for each V2X service. The methods disclosed in the second modification of the first embodiment may be applied to this method.

Even when the PC5 communication resources broadcast from the cell belonging to the NPN different from that of its own UE are unavailable in the NPN to which its own UE belongs, the UE can perform the PC5 communication by performing scheduling using the PC5 communication resources configured in its own UE. The UE can implement the V2X service using the PC5 communication.

When the PC5 communication resources are preconfigured in the UE, the PCF may update the PC5 communication resources. The PCF may provide the updated PC5 communication resources to the UE, using the process of providing the V2X policy. The methods disclosed in the fourth modification of the first embodiment should be appropriately applied to a method for the UE to perform the process of providing the V2X policy through the RAN node or the CN that belongs to the NPN different from that to which the UE belongs.

As another method, the CN may notify the RAN node of information on the NPN to which the UE belongs and the PC5 communication resources available in the NPN. For example, the PCF may notify the RAN node of information on the NPN to which the UE belongs and the PC5 communication resources available in the NPN. The UE may request the PCF to provide the V2X policy to the RAN node. The V2X policy provision request information for the RAN node may be provided. The UE may notify the AMF of the information. The PCF should include, in the V2X policy, the information on the NPN to which the UE belongs and the PC5 communication resources available in the NPN, and notify the AMF of the information.

The UE may notify the AMF of information for identifying the UE, for example, UE identifier information and/or information for identifying the RAN node, for example, RAN node identifier information, together with the V2X policy provision request information for the RAN node. The AMF may request the PCF to provide the V2X policy to the RAN node. In response to the request, the PCF provides the V2X policy to the RAN node through the AMF. The methods disclosed in the fourth modification of the first embodiment should be appropriately applied to a method for the PCF to provide the V2X policy to the RAN node.

This enables the RAN node to recognize the PC5 communication resources available in the NPN to which the UE belongs. The RAN node broadcasts the PC5 communication resources available in the NPN to which the UE belongs. The RAN node may associate information on the NPN to which the UE belongs with the PC5 communication resources available in the NPN, and broadcast the information and the resources. This enables the UE to perform the PC5 communication with the PC5 communication resources broadcast from the cell belonging to the NPN different from that of its own UE. The UE can implement the V2X service using the PC5 communication.

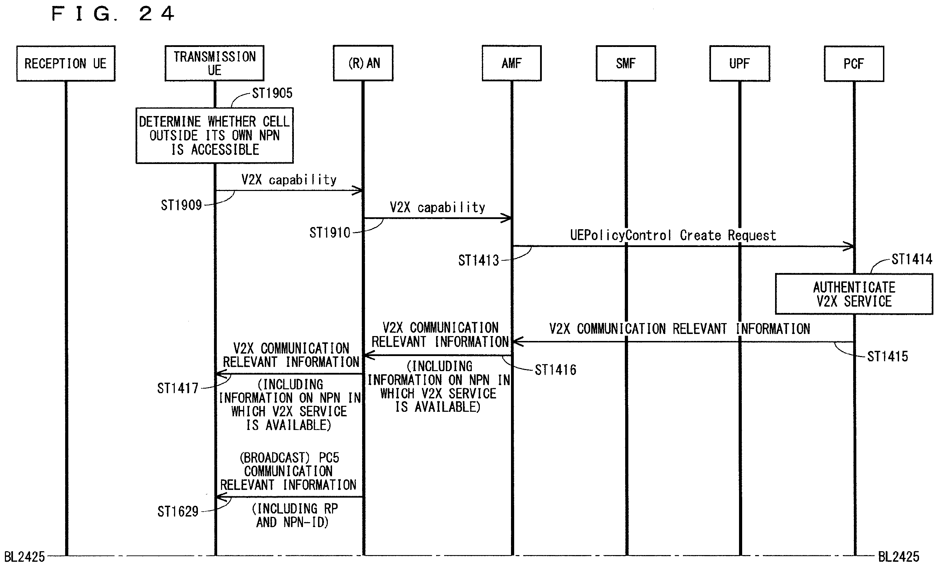

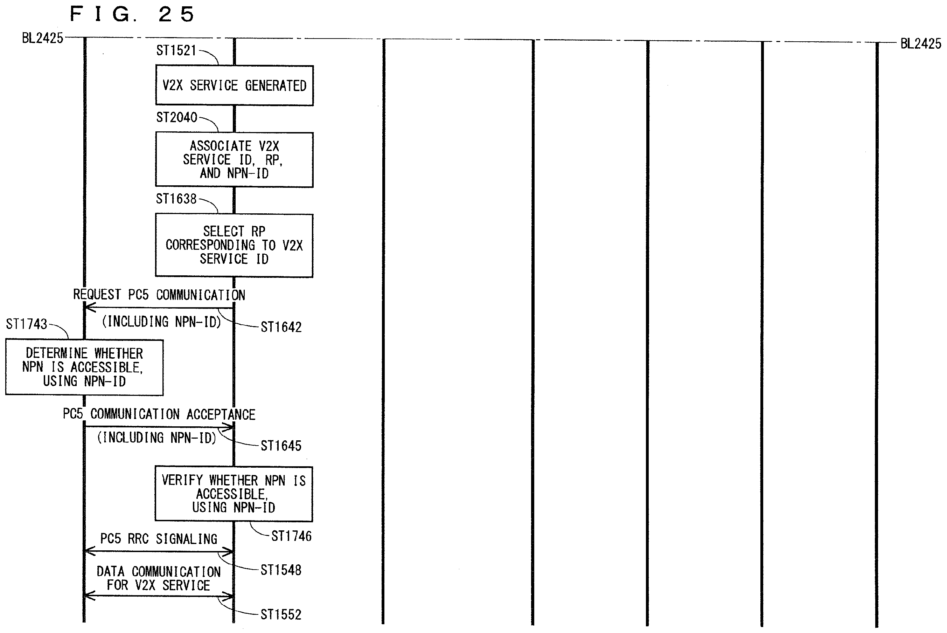

FIGS. 24 and 25 illustrate the first example sequence for performing the PC5 communication through a cell that does not belong to its own NPN, according to the fifth modification of the first embodiment. FIGS. 24 and 25 are connected across a location of a border BL2425. FIGS. 24 and 25 illustrate an example where the UE schedules the PC5 communication. In FIGS. 24 and 25, the same step numbers are applied to the steps common to those in FIGS. 18 to 20, and 22 and 23, and the common description thereof is omitted.

In Step ST1629, the RAN node broadcasts the PC5 communication relevant information. When a V2X service using the PC5 communication is generated in the transmission UE in Step ST1521, the transmission UE associates, in Step ST2040, the V2X service, an RP for the PC5 communication for the V2X service, and a NPN in which the V2X service is available, using the V2X communication relevant information received in Step ST1417 and the PC5 communication relevant information received in Step ST1629.

In Step ST1638, the transmission UE selects the RP corresponding to the NPN in which the generated V2X service is available. The transmission UE schedules the PC5 communication, using the selected RP. Through the processes in Steps ST1642 to ST1746, the transmission UE verifies whether the NPN is accessible. When a desired V2X service is unavailable in the NPN, this method can disable the PC5 communication. The transmission UE can verify whether the NPN is accessible.

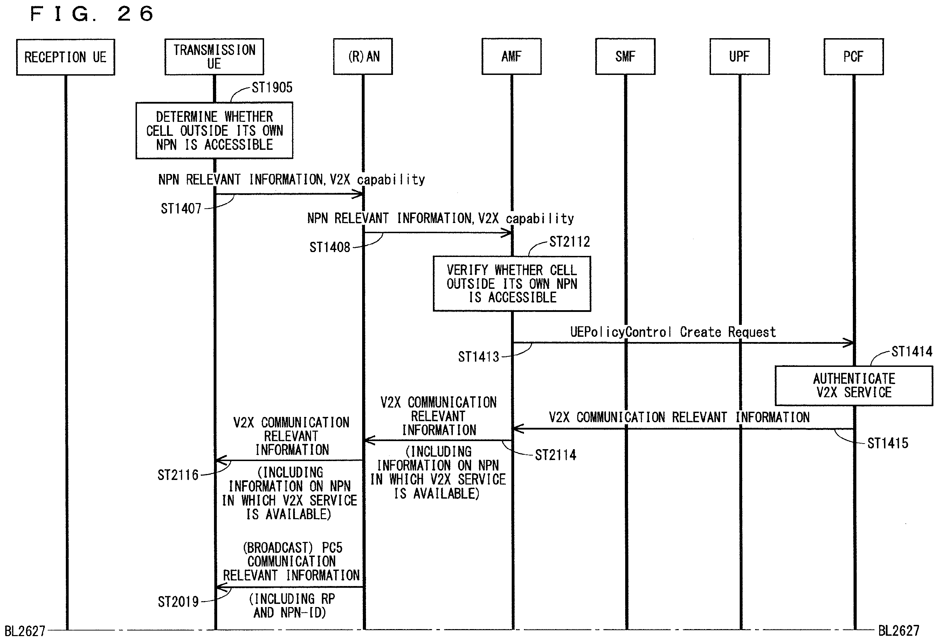

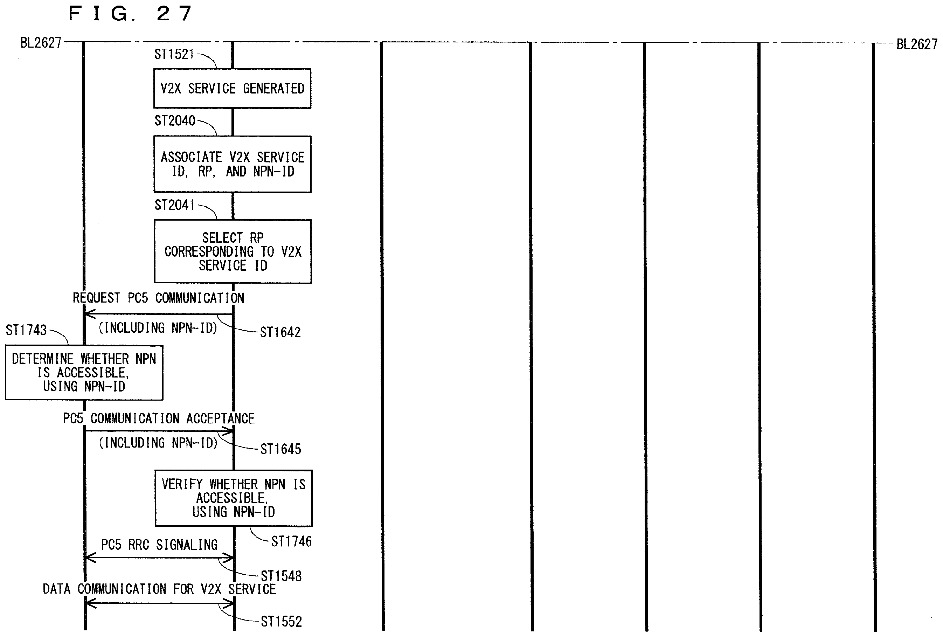

FIGS. 26 and 27 illustrate the second example sequence for performing the PC5 communication through a cell that does not belong to its own NPN, according to the fifth modification of the first embodiment. FIGS. 26 and 27 are connected across a location of a border BL2627. FIGS. 26 and 27 illustrate an example where the AMF verifies whether the UE can access the NPN. The V2X communication relevant information to be notified from the AMF to the UE is included in the rejection notification on the NPN access. In FIGS. 26 and 27, the same step numbers are applied to the steps common to those in FIGS. 18 and 19, and FIGS. 24 and 25, and the common description thereof is omitted.

In Step ST1905, the transmission UE determines whether the cell that does not belong to its own NPN is accessible. When determining that the cell is accessible, the transmission UE accesses the RAN node, and notifies the RAN node of the NPN relevant information and the V2X capability in Step ST1407. In Step ST1408, the RAN node notifies the AMF of the NPN relevant information and the V2X capability that have been received from the UE. The methods disclosed in FIGS. 18 and 19 should be appropriately applied to a method for notifying the NPN relevant information and the V2X capability.

In Step ST2112, the AMF verifies whether the UE can access the NPN as the NW. The AMF verifies whether the NPN is accessible, using the NPN relevant information notified from the UE. Since the UE accesses the NPN through the cell that does not belong to its own NPN, the AMF determines that the NPN is inaccessible.

Even when determining that the NPN is inaccessible through the verification on whether the NPN is accessible, the AMF requests the PCF to provide the V2X communication relevant information, using the V2X capability information notified from the UE. Through the processes in Steps ST1413 to ST1415, the AMF obtains, from the PCF, the V2X communication relevant information for the UE.

Until obtaining the V2X communication relevant information, the AMF suspends notifying the RAN node and the UE of the NPN access rejection. The AMF notifies the RAN node and the transmission UE of the NPN access rejection in Steps ST2114 and ST2116. The AMF includes the V2X communication relevant information obtained in Step ST1415 in the NPN access rejection. This enables the RAN node and the transmission UE to obtain the V2X communication relevant information.

The conventional process on the NPN access control (verification on whether the NPN is accessible) performed by the AMF is available by including the V2X communication relevant information in the NPN access rejection and notifying the RAN node and the UE of the information. Reduction of additional processes can facilitate implantation of these processes.

The methods disclosed in the fifth modification of the first embodiment can produce the same advantages as described in the fourth modification of the first embodiment. Since the UE performing the PC5 communication schedules the PC5 communication, the RAN node need not schedule the PC5 communication. Thus, the UE need not access the RAN node, for example, to request the PC5 communication. Thus, the UE can start the PC5 communication with low latency.

### The second embodiment

In the PC5 communication in NR, a method using the QoS flow is performed as a method for managing the PC5 QoS (see Non-Patent Document 21 (TS23.287)). The UE performing the PC5 communication is provided with a function for calculating a QoS parameter from a service request of the V2X service using the PC5 communication. The QoS parameter is an indicator of the QoS for the V2X service. A rule for calculating a QoS parameter from a service request of the V2X service using the PC5 communication (hereinafter may be referred to as a QoS rule) may be preconfigured in the UE.

Alternatively, the CN may provide the UE with the QoS rule. Alternatively, the QoS parameter may be preconfigured in the UE. Alternatively, the CN may provide the UE with the QoS parameter. The PCF functioning as the CN may provide the UE with the rule or the QoS parameter through the AMF. The UE performing the PC5 communication schedules the PC5 communication, using the QoS parameter.

The QoS parameter or the QoS rule may be included in the V2X communication relevant information. The QoS parameter or the QoS rule may be included in the V2X policy or the V2X parameter. The method for providing the V2X communication relevant information or the V2X policy, which is disclosed in the first embodiment or its modification, may be applied to provision of the QoS parameter or the QoS rule from the CN side to the UE. This can avoid complication using different processing methods, and reduce malfunctions.

The RAN node (e.g., a base station) sometimes schedules the PC5 communication for the UE. In such a case, the base station may be provided with the function for calculating a QoS parameter from a service request of the V2X service using the PC5 communication so that the base station schedules the PC5 communication. The CN may provide a rule for calculating a QoS parameter from a service request of the V2X service using the PC5 communication, or the QoS parameter. The PCF functioning as the CN may provide the base station with the rule or the QoS parameter through the AMF. The base station schedules the PC5 communication, using the QoS parameter.

The PC5 communication is performed between the UEs. The base station does not perform the PC5 communication. Even when the base station schedules the PC5 communication for the UE, the base station does not perform the PC5 communication. Thus, the base station cannot recognize how much the QoS of the PC5 communication between the UEs is. For example, the base station cannot recognize whether the PC5 communication satisfies the required QoS. Thus, when the communication quality of the PC5 communication is inferior and the PC5 communication does not satisfy the required QoS, the base station cannot recognize the situation, and continues to perform the same scheduling as before. The situation where the required QoS is not satisfied is continued.

The second embodiment discloses a method for solving such problems.

The UE performing the PC5 communication monitors the QoS in the PC5 communication. The UE performing the PC5 communication may be the transmission UE or the reception UE. The PC5 communication may be a broadcast, a groupcast, or a unicast. The UE should measure a QoS parameter to monitor the QoS. The UE may monitor all or a part of QoS parameters to monitor the QoS.

The UE that has monitored the QoS notifies the base station of the QoS monitoring result. The UE notifies a measurement result of the QoS parameter as monitoring of the QoS. For example, the transmission UE performing the PC5 communication measures the QoS parameter of the PC5 communication, and notifies the base station that schedules the PC5 communication of the measurement result of the QoS parameter. This enables the base station that schedules the PC5 communication to recognize the actual QoS of the PC5 communication.

The following (1) to (11) are disclosed as specific examples of PC5 QoS parameters to be measured.
(1) The PQI
(2) A resource type
(3) A priority level
(4) A Packet Delay Budget
(5) A Packet Error Rate
(6) An averaging window
(7) The Maximum Data Burst Volume
(8) PC5 flow bit rates
(9) PC5 Link Aggregated Bit Rates
(10) A range
(11) Combinations of (1) to (10) above

The UE performing the PC5 communication should measure a part or all of these QoS parameters to monitor the QoS of the PC5 communication. The UE may directly measure these QoS parameters. Alternatively, the UE may measure another indicator, and calculate these QoS parameters using the result.

The range in (10) indicates the minimum distance required to satisfy the QoS. Thus, the UE performing the PC5 communication should calculate a distance to a UE performing the PC5 communication. A method for the UE performing the PC5 communication to calculate the distance to the UE performing the PC5 communication is disclosed.

The received power in the PC5 communication should be used. The received power may be, for example, the RSRP. The RSRP in the PC5 communication is also referred to as the SL-RSRP. The reception UE performing the PC5 communication measures the SL-RSRP of a signal to be transmitted from the peer transmission UE. The reception UE notifies the transmission UE of a measurement result of the SL-RSRP. The reception UE may notify a measurement value as the measurement result of the SL-RSRP. Alternatively, the reception UE may divide the value of the SL-RSRP into one or more ranges, and notify information indicating to which range the measurement value belongs. This can reduce the amount of information necessary for the notification.

The transmission UE calculates a distance between the transmission UE and the reception UE, using the SL-RSRP in the PC5 communication that has been notified from the reception UE. The transmission UE recognizes the transmission power of a transmission signal for the PC5 communication. The transmission UE should calculate a radio propagation loss between the transmission UE and the reception UE, using the transmission power and the SL-RSRP in the PC5 communication that has been obtained from the reception UE, and then calculate the distance between the transmission UE and the reception UE from the radio propagation loss. This enables the transmission UE to calculate the distance to the UE performing the PC5 communication.

Another method is disclosed. The UE performing the PC5 communication calculates the position of its own UE. The transmission UE notifies the reception UE of position information of its own UE. The reception UE receives the position information from the transmission UE, and calculates a distance between the transmission UE and the reception UE using the position information of the transmission UE and position information of its own UE. The reception UE notifies the transmission UE of the calculated distance between the transmission UE and the reception UE. The UE may calculate the position using the GNSS or the RAN node. The RAN node may be, for example, the gNB in NR or the eNB in LTE. This enables the transmission UE to calculate the distance to the UE performing the PC5 communication.

The transmission UE may calculate a distance to the reception UE. The reception UE notifies the transmission UE of position information of its own UE. The transmission UE receives the position information from the reception UE, and calculates the distance between the transmission UE and the reception UE using the position information of the reception UE and position information of its own UE. This enables the transmission UE to calculate the distance to the UE performing the PC5 communication.

The position information may be information indicating an area in which the UE is located. For example, an area is divided into certain areas in advance, and an identifier is provided to each of the areas. A distance should be calculated from area identifiers indicating positions of the UEs. This can reduce the amount of position information to be notified between the UEs.

Another method is disclosed. The reception UE calculates a radio propagation loss between the reception UE and the transmission UE that perform the PC5 communication. The transmission UE notifies the reception UE of the transmission power of a transmission signal for the PC5 communication. The transmission UE may give the notification via the RRC signaling. This is effective when the transmission power is semi-statically changed. Alternatively, the transmission UE may give the notification via the MAC signaling.

This is effective when the transmission power is changed relatively earlier. Alternatively, the transmission UE may include the transmission power to be notified in the SCI, and notify the transmission power in the SPCCH. This is effective when the transmission power is dynamically changed. The value of the transmission power to be notified may be a difference with the previous transmission power.

The reception UE performing the PC5 communication measures received power of a signal to be transmitted from the peer transmission UE. The reception UE calculates a radio propagation loss, using the measured received power and the value of the transmission power notified from the transmission UE. The reception UE should notify the transmission UE of the calculated radio propagation loss. The transmission UE should calculate a distance between the transmission UE and the reception UE, using the radio propagation loss notified from the reception UE. This enables the transmission UE to calculate the distance to the UE performing the PC5 communication.

The reception UE may calculate the distance between the transmission UE and the reception UE, from the radio propagation loss. The reception UE notifies the transmission UE of the calculated distance between the transmission UE and the reception UE. This enables the transmission UE to recognize the distance to the UE performing the PC5 communication.

The SL-RSRP, the radio propagation loss, or the distance between the UEs may be cyclically or non-cyclically notified. For the cyclical notification, the transmission UE may notify, in advance, the reception UE of a notification cycle of the distance between the transmission UE and the reception UE. For the non-cyclical notification, the transmission UE may request the reception UE to notify the SL-RSRP, the radio propagation loss, or the distance between the transmission UE and the reception UE.

As another method, a threshold for triggering the notification of the SL-RSRP, the radio propagation loss, or the distance between the UEs may be provided. For example, when the measurement value or the calculated value falls below or exceeds the threshold, the notification may be given. For example, the threshold or a condition for giving the notification may be statically predetermined, for example, in a standard, or notified from the transmission UE to the reception UE. The number of the thresholds or conditions is not limited to one, but a plurality of thresholds or conditions may be configured. Since there are many PC5 communication states corresponding to radio propagation environments, the thresholds or conditions can be configured according to these PC5 communication states.

The methods for notifying the transmission power of the transmission signal for the PC5 communication may be applied to a method for notifying the notification cycle, the notification request, or the thresholds or conditions. This can produce the same advantages as previously described. The method for the reception UE to notify the transmission UE of the SL-RSRP, the radio propagation loss, or the distance between the transmission UE and the reception UE may be the RRC signaling. This is effective when intervals between notifications are relatively long. Alternatively, the method may be the MAC signaling. This is effective when the intervals between notifications are relatively short. Alternatively, the SL-RSRP, the radio propagation loss, or the distance between the UEs may be notified in the PSFCH as feedback information. This is effective when the information is dynamically notified. The value to be notified may be a difference with the previous value.

This enables the UE performing the PC5 communication to calculate a distance to a UE performing the PC5 communication. A range that is one of the indicators of the QoS parameters can be calculated.

Another method for the UE performing the PC5 communication to calculate a distance to a UE performing the PC5 communication is disclosed. The UE may calculate a distance to a UE performing the PC5 communication, from the radio propagation delay time in the PC5 communication between the UEs. An example method for calculating a radio propagation delay time in the PC5 communication between the UEs is disclosed. The transmission UE that calculates the radio propagation delay time in the PC5 communication is sometimes referred to as UE_tx, and the reception UE is sometimes referred to as UE_rx.

A timing correction signal is provided. A channel for timing correction may be provided. The timing correction signal consists of a certain sequence, and is mapped to the frequency-time resources in a certain frequency band and with a certain time length. Examples of the unit of frequency for representing the resources may include the unit of subcarrier, the unit of RB, the unit of sub-channel frequency used in the SL, and the unit of BWP. Examples of the unit of time for representing the resources may include the unit of Ts (= sampling frequency (fs)), the unit of sub-symbol, the unit of symbol, the unit of slot, the unit of subframe, and the unit of TTI. The frequency-time resources to which the timing correction signal is mapped may include one or more repeated resources or resources periodically configured.

The timing correction signal may be dedicatedly configured for each UE. For example, the sequence of the timing correction signal and/or the frequency-time resources for the timing correction signal may be configured for each UE that transmits the timing correction signal. The UE that has received the timing correction signal transmitted from the UE in the SL can identify the UE that has transmitted the signal, from the sequence and/or the resources. Furthermore, the timing correction signal may be configured dedicatedly for each group consisting of one or more UEs. This can identify a group to which the UE that has transmitted the timing correction signal belongs.

Alternatively, the timing correction signal common to the transmission UEs in the SL communication may be configured. When a UE uses the timing correction signal configured in common among the UEs as transmission partners, one of the UEs as the transmission partner can identify that the signal is the timing correction signal transmitted to its own UE.

As another example of the timing correction signal, the timing correction signal may be configured using an identifier of the UE that transmits the signal. The identifier of the UE should be a UE-identifiable identifier. Upon receipt of the timing correction signal, the UE can identify from which UE the signal has been transmitted. Similarly, the timing correction signal may be configured using a group identifier of a group from which the signal is transmitted.

In the SL communication, the SRS may be transmitted between the UEs. Application of the SRS for allocating resources to be used for transmitting the feedback in the SL communication can increase the communication quality in the transmission of the feedback. The sequence to be used for the SRS and the frequency-time resources to which the SRS is mapped may be configured dedicatedly for each UE or dedicatedly for each group.

The SRS may be used as the timing correction signal. Consequently, resources for the timing correction signal need not be separately configured. Thus, the use efficiency of the resources can be increased.

Introduction of the Physical Sidelink Feedback CHannel (PSFCH) has been proposed as a channel for transmitting the Ack/Nack or the CQI in the SL communication. The frequency-time resources to which the PSFCH is mapped may be configured dedicatedly for each UE or dedicatedly for each group. The PSFCH may be used as the timing correction signal. Consequently, the resources for the timing correction signal need not be separately configured. Thus, the use efficiency of the resources can be increased.

The PRACH in the Uu interface defined between the gNB and the UE may be used as the timing correction signal. Aside from the configuration of the PRACH for the Uu, a PRACH for the PC5 may be configured and used as the timing correction signal. The gNB may notify the UE that performs the SL communication of the configuration of the PRACH for the SL communication. Consequently, a new timing correction signal need not be provided. The configuration of the UE for the SL communication can be simplified.

UE_tx notifies UE_rx of a request for transmitting the timing correction signal. The following (1) to (6) are disclosed as examples of information included in the request for transmitting the timing correction signal.
(1) Timing correction signal transmission instructing information
(2) Timing information for transmitting the timing correction signal
(3) A structure of the timing correction signal
(4) An identifier of UE_tx
(5) An identifier of UE_rx
(6) Combinations of (1) to (5) above

Information for identifying the transmission timing should be used as (2). For example, the frame number, the slot number, or the symbol number may be used as (2). Furthermore, each of these may include an offset value. Furthermore, a time difference from the timing of receiving the request for transmitting the timing correction signal to the timing of transmitting the timing correction signal may be used as (2). The unit of the offset value or the time difference may be the disclosed unit for representing the time resources to which the timing correction signal is mapped. UE_rx can identify the timing of transmitting the timing correction signal.

For example, the aforementioned sequence or the frequency-time resources to which the timing correction signal is mapped may be used as the structure of the timing correction signal in (3). UE_rx can transmit the timing correction signal using the received structure of the timing correction signal.

An identifier allowing the identification of UE_tx may be used as the identifier of UE_tx in (4). UE_rx can identify to which UE the timing correction signal is to be transmitted.

An identifier allowing the identification of UE_rx may be used as the identifier of UE_rx in (5). Upon receipt of the request for transmitting the timing correction signal, the UE can determine whether to transmit the timing correction signal.

The request for transmitting the timing correction signal may include a plurality of pieces of information. For example, a plurality of pieces of the information in (2) or a plurality of pieces of the information in (3) may be notified. UE_rx may transmit a plurality of timing correction signals. Alternatively, UE_rx may select one or more pieces of information from among the plurality of pieces of information notified from UE_tx, and transmit one or more timing correction signals corresponding to the selected one or more pieces of information.

The structure of the timing correction signal may consist of one or more structures. The structure of the timing correction signal may be statically predetermined, for example, in a standard. The nodes that perform the V2X communication, for example, the gNB, UE_tx, and UE_rx can recognize the structure of the timing correction signal.

UE_tx may configure the timing correction signal. UE tx may select the timing correction signal from a certain structure and configure the timing correction signal. The certain structure of the timing correction signal may be a structure of the timing correction signal for the SL. The certain structure of the timing correction signal may consist of one or more structures. The certain structure of the timing correction signal may be statically predetermined, for example, in a standard.

UE_tx notifies UE_rx of a structure in which the timing correction signal has been configured (configuration of the timing correction signal). UE_rx transmits the timing correction signal, using the configuration of the timing correction signal notified from UE_tx. UE_rx may select one of the configurations of the timing correction signal that have been notified from UE tx, and transmit the timing correction signal using the selected configuration.

The configuration of the timing correction signal made by UE tx enables, for example, configuration of the timing correction signal for UE_rx even when UE tx and UE_rx perform the SL communication outside the coverage of the cell. This enables UE_rx to transmit the timing correction signal.

The gNB may configure the timing correction signal. The gNB may select the timing correction signal from a certain structure and configure the timing correction signal. The certain structure of the timing correction signal may be a structure of the timing correction signal for the SL. The certain structure of the timing correction signal may consist of one or more structures. The certain structure of the timing correction signal may be statically predetermined, for example, in a standard. The gNB notifies UE_tx of the structure in which the timing correction signal has been configured (configuration of the timing correction signal).

UE_tx notifies UE_rx of the structure of the timing correction signal notified from the gNB. UE tx may notify UE_rx of a part or the entirety of the structure of the timing correction signal notified from the gNB. UE_rx transmits the timing correction signal, using the configuration of the timing correction signal notified from UE_tx. UE_rx may select one of the configurations of the timing correction signal that have been notified from UE tx, and transmit the timing correction signal using the selected configuration.

The configuration of the timing correction signal made by the gNB enables configuration of a different timing correction signal for a different UE tx. This can vary the structure of the timing correction signal to be transmitted by UE rx, and reduce the collision on the timing correction signal. A probability of successfully receiving the timing correction signal from UE_rx can be increased in UE tx.

UE_rx may configure the timing correction signal. UE_rx may select the timing correction signal from a certain structure and configure the timing correction signal. The certain structure of the timing correction signal may be statically predetermined, for example, in a standard.

UE_rx configures the timing correction signal, so that the signaling for notifying the configuration of the timing correction signal from UE tx to UE_rx or the signaling for notifying the configuration of the timing correction signal from the gNB to UE_rx through UE tx can be reduced. The amount of signaling and the latency until transmission of the timing correction signal can be reduced.

A method for notifying the request for transmitting the timing correction signal is disclosed. UE tx may notify UE_rx of the request for transmitting the timing correction signal via the PC5 control signaling in the SL communication. Alternatively, UE_tx may give the notification via the RRC signaling in the SL communication. UE tx may notify the request for transmitting the timing correction signal via the RRC signaling in the SL communication as an RRC message for the SL communication. UE_tx may include the request for transmitting the timing correction signal in the SCCH that is a logical channel in the SL, and transmit the request. This enables UE tx to notify UE rx of the request for transmitting the timing correction signal.

Another method for notifying the request for transmitting the timing correction signal is disclosed. UE_tx may notify UE_rx of the request for transmitting the timing correction signal via the MAC signaling in the SL communication. UE_tx may include the request for transmitting the timing correction signal in the MAC control information, and notify the request. Since UE_rx need not perform a process of receiving the request for transmitting the timing correction signal via the RRC, UE_rx can perform the receiving process earlier.

Another method for notifying the request for transmitting the timing correction signal is disclosed. UE_tx may include, in the SCI in the SL communication, the request for transmitting the timing correction signal, and transmit the request to UE_rx in the PSCCH in the SL communication. UE_tx may include the request for transmitting the timing correction signal in the SCI1. UE tx may include the request for transmitting the timing correction signal in the SCI1, and notify the request in the PSCCH1. Alternatively, UE_tx may include the request for transmitting the timing correction signal in the SCI2. UE_tx may include the request for transmitting the timing correction signal in the SCI2, and notify the request in the PSCCH2. The notification of the request for transmitting the timing correction signal in the PSCCH enables UE_rx to perform the receiving process earlier. Thus, transmission of the timing correction signal from UE_rx can be configured earlier.

Another method for notifying the request for transmitting the timing correction signal is disclosed. UE_tx may transmit the request for transmitting the timing correction signal to UE_rx, using the PSCCH and the PSSCH in the SL communication. For example, UE tx may include, in the SCI, information indicating the request for transmitting the timing correction signal and the identifier of UE_rx out of information included in the request for transmitting the timing correction signal, transmit the information and the identifier in the PSCCH, and transmit the other information in a PSSCH associated with the PSCCH. When the request for transmitting the timing correction signal includes many pieces of information, UE_tx can transmit such pieces of information in the PSSCH for which many resources can be reserved.

The aforementioned methods for notifying the request for transmitting the timing correction signal may be used in combination. For example, UE tx may transmit, via the RRC signaling, a part of information to be included in the request for transmitting the timing correction signal, and include the other information in the PSCCH and transmit the information. For example, UE_tx may transmit the structure of the timing correction signal via the RRC signaling, and transmit the other information in the PSCCH. For example, when a plurality of structures of the timing correction signal are configured, UE_tx can transmit many pieces of information via the RRC signaling.

UE_tx may notify a plurality of structures of the timing correction signal, separately from one of the structures of the timing correction signal to be actually transmitted by UE_rx. Furthermore, UE_tx may give the notification using the aforementioned combinations. For example, UE tx may notify the plurality of structures of the timing correction signal via the RRC signaling, and notify one of the structures of the timing correction signal to be actually transmitted by UE rx, in the PSCCH together with information on the request for transmitting the timing correction signal. Application of the RRC signaling enables transmission of many pieces of information. Application of the PSCCH enables notification of the request for transmitting the timing correction signal to transmission of the timing correction signal, with low latency.

UE_tx may broadcast the structure of the timing correction signal as broadcast information in the SL communication. For example, UE_tx may include the structure of the timing correction signal in the MIB in the SL, and transmit the structure in the PSBCH. Consequently, UE_tx need not dedicatedly notify a plurality of UE_rxs of the structure of the timing correction signal. This can increase the use efficiency of the resources for the signaling. This is effective, for example, when the structure of the timing correction signal is configured for each UE_tx.

UE_rx transmits the timing correction signal with a certain timing. UE_rx may use, as the certain timing, the timing information for transmitting the timing correction signal received from UE_tx. Alternatively, UE_rx may transmit the timing correction signal with the certain timing, using the frequency-time resources indicated by the latest structure of the timing correction signal after receiving the timing correction signal transmission instructing information. Alternatively, the certain timing may be the timing statically predetermined, for example, in a standard. Alternatively, the certain timing may be the timing configured by UE_tx. UE_rx transmits the timing correction signal, using the structure in which the timing correction signal has been configured.

Consequently, UE tx can recognize the timing with which UE_rx has transmitted the timing correction signal.

UE_tx receives the timing correction signal transmitted by UE_rx. UE_tx calculates a round-trip time (RTT) in the SL communication between UE_tx and UE_rx, using the transmission timing of its own UE, the timing with which UE_rx has transmitted the timing correction signal, and the timing with which its own UE has received the timing correction signal from UE_rx. UE tx calculates the RTT dedicated for each UE_rx.

When UE_rx performs multipath transmission of the timing correction signal, UE_tx may use the signal received the earliest for calculating the RTT. Alternatively, the signal whose received power is the highest may be used for calculating the RTT in reception of UE_tx.

UE_tx calculates the radio propagation delay time between UE_tx and UE_rx, from the RTT dedicated for each UE_rx. The radio propagation delay time should be half the RTT. UE tx calculates a distance between UE_tx and UE rx, using the calculated radio propagation delay time. This enables UE tx to calculate the distance to UE_rx. UE_tx can calculate a range with UE_rx.

A transmission disabling section is disposed before and/or after the frequency-time resources to which the timing correction signal is mapped, with the slot timing in UE_tx. The transmission disabling section may be statically predetermined, or configured and notified to UE tx by the gNB. Alternatively, UE tx may configure the transmission disabling section. Even when the timing correction signal transmitted by UE_rx deviates from the slot timing in UE tx due to the radio propagation delay, UE tx can receive the timing correction signal.

The number of UE_rxs may be two or more. The process of correcting the clock synchronization should be dedicatedly performed on a plurality of UEs.

UE_tx may notify UE_rx of the timing-correction-signal structure candidates. UE_rx selects the timing-correction-signal structure to be used for actual transmission from among the structure candidates. This enables, for example, UE_rx to transmit the timing correction signal using the timing-correction-signal structure enabling the transmission with the earliest timing since receipt of the request for transmitting the timing correction signal. This enables the timing correction with low latency.

UE_tx may receive transmission from UE_rx, using all the timing-correction-signal structures selected as the candidates. Using whichever structure UE_rx transmits the timing correction signal, UE tx can receive the signal. UE_rx may select a plurality of timing-correction-signal structures to be used for actual transmission from among the timing-correction-signal structure candidates. UE_rx may transmit the timing correction signals using the selected timing-correction-signal structures. The transmission using the plurality of timing-correction-signal structures can increase the probability of successfully receiving the timing correction signal in UE_tx. For example, even when UE_tx cannot receive one timing correction signal, UE tx has only to receive the other one timing correction signal.

The timing-correction-signal structure candidates may be dedicatedly selected for each of plurality of UEs to which the information on clock synchronization is transmitted from UE_tx. This can avoid an overlap in timing-correction-signal structure between the UEs. As another method, the timing-correction-signal structure candidates may be selected so that a plurality of UEs share a part or all of the timing-correction-signal structure candidates. Although there may be an overlap in timing-correction-signal structure between the UEs, the use efficiency of resources can be increased.

UE_rx may retransmit the timing correction signal. UE_rx determines whether to perform the retransmission. UE_rx that has determined to perform the retransmission selects another timing-correction-signal structure from among the timing-correction-signal structure candidates, and transmits the timing correction signal in the selected structure to UE_tx. UE_tx may notify UE_rx of information on the retransmission timing in advance. UE tx may configure the retransmission timing for each timing-correction-signal structure. UE_rx may include information on the retransmission timing in the notification of the timing-correction-signal structure, and notify the information. This enables, for example, UE_tx to cause UE_rx to retransmit the timing correction signal without waiting for the next timing-correction-signal structure.

A method for UE_rx to determine whether to perform the retransmission is disclosed. When UE_rx cannot receive clock correction information within a certain period, UE_rx determines to retransmit the timing correction signal. Alternatively, when UE_rx cannot receive the information on clock synchronization within a certain period, UE_rx may determine to retransmit the timing correction signal.

A timer may be provided for managing the certain period. The certain period may be statically predetermined, for example, in a standard, or configured and notified to UE_rx by UE tx. Alternatively, the certain period may be configured and notified to UE_tx by the gNB, and then notified from UE_tx to UE_rx. This enables UE_rx to determine to retransmit the timing correction signal when UE_tx cannot receive the time correction signal. Retransmission of the timing correction signal from UE_rx can increase the probability of successfully receiving the timing correction signal in UE_tx.

As another method, UE_tx may notify UE rx of a request for the timing correction signal again. When UE_tx cannot receive the time correction signal from UE_rx with a certain timing configured by its own UE, UE_tx notifies UE_rx of the request for the timing correction signal again. When UE_tx cannot receive the time correction signal from UE_rx with a certain timing configured by its own UE within a certain period, UE_tx may notify UE_rx of the request for the timing correction signal again. A timer may be provided for managing the certain period. This is effective, for example, when the timing correction signal is periodically transmitted.

This enables the UE performing the PC5 communication to calculate a distance to a UE performing the PC5 communication. For example, when the D2D communication is performed in a shielded area in a factory, a distance between devices can be measured without using a signal from the base station or the GPS.

For example, when the UE held by a pedestrian calculates a distance to the UE located in a vehicle and the calculated distance falls below a certain threshold, notification is given to the pedestrian. The certain threshold may be predetermined, for example, in a standard. The certain threshold may be determined as a parameter for a V2X service. Alternatively, the certain threshold may be configured in the V2X application layer. This enables the pedestrian to recognize that a distance to the vehicle is shorter than a certain distance. This enables the pedestrian to take action for avoiding the contact with the vehicle.

A measurement result of the distance between the UEs performing the PC5 communication may be used for calculating the positions of the UEs. A plurality of measurement results of the distances between the UEs may be used. For example, the radio propagation delay between the UEs may be used in a method for calculating the positions of the UEs. A plurality of UEs communicate radio propagation delay information between the UEs, or distance information calculated from the radio propagation delay. The UE calculates the position of its own UE, using the propagation delay information with the other UEs. The positions to be calculated may be relative positions, for example, relative positions indicating a positional relationship between the UEs.

The radio propagation delay information between a plurality of UEs may be measured with the same measurement timing. Alternatively, the measurement timing may fall within a certain time range. The measurement timing should be shared among the plurality of UEs in advance. For example, the plurality of UEs that perform the measurement should communicate the measurement timing in advance. This enables the measurement timing of each of the UEs to fall within a certain range. Consequently, the measurement precision on the relative positions of the plurality of UEs can be increased.

The radio propagation delay information between the UEs or the distance information calculated from the radio propagation delay may be notified via the PC5-S signaling or the RRC signaling. This enables notification of many more position information. Alternatively, the notification may be given via the MAC signaling. This can expedite the notification. Alternatively, the notification may be given via the PHY signaling. For example, the information may be included in the SCI, and notified in the PSCCH. Alternatively, the notification may be given in the PSSCH. This can further expedite the notification.

For example, positions of devices can be calculated in a shielded area in a factory by measuring a distance between the UEs. For example, even when a signal from the base station or the GPS cannot be obtained in a tunnel, the positions of the UEs can be calculated.

A measurement result of the distance between the gNB and the UE may be used in combination. The combined use with the measurement result of the distance between the UEs can increase the measurement precision on the positions of the UEs.

The QoS parameter may be measured or calculated in the V2X application layer. The QoS parameter calculated in the V2X application layer may be notified to the AS layer through the V2X layer. The QoS parameter may be measured or calculated in the V2X layer. The QoS parameter calculated in the V2X layer may be notified to the AS layer. The QoS parameter may be measured or calculated in the AS layer. The layer that measures or calculates the QoS parameter may be different for each QoS parameter. An appropriate layer can measure or calculate the QoS parameter according to the details of the QoS parameter.

The UE that has monitored the QoS notifies the base station of the QoS monitoring result. The communication in the Uu should be used as a notification method from the UE to the base station. The UE may give the notification to the base station via the RRC signaling. For example, the UE assistance information message may be used. Alternatively, the UE may give the notification via the MAC signaling. Alternatively, the UE may give the notification in the PUCCH. This enables the UE that has monitored the QoS to notify the base station of the QoS monitoring result. The base station can obtain the QoS monitoring result in the PC5 communication, from the UE performing the PC5 communication.

The base station can recognize whether the PC5 communication satisfies the required QoS, using the QoS monitoring result in the PC5 communication. The base station can change the scheduling of the PC5 communication, using the QoS monitoring result in the PC5 communication as necessary. The base station that has changed the scheduling of the PC5 communication notifies the UE performing the PC5 communication of the changed scheduling information.

What is disclosed is that the number of the QoS parameters to be measured may be one or more and combinations of the specific examples of the QoS parameters may be used. The UE may notify the base station of all the QoS parameters via one signaling. Alternatively, the UE may notify each of the one or more measured QoS parameters via a different signaling.

For example, determination on whether the UE gives the notification via the same signaling or a different signaling may be made according to the measurement timing. For example, the RAN node may cyclically configure the timing for notifying the UE of the QoS monitoring result, include, in the same signaling, the QoS parameters measured between the previous QoS monitoring result notification timing and the next QoS monitoring result notification timing, and notify the QoS parameters.

The RAN node may perform scheduling again, using the QoS monitoring result notified from the UE via each of the signalings. This enables the QoS monitoring result to be reflected on the scheduling earlier.

What is disclosed is that the UE performing the PC5 communication notifies the RAN node of the QoS monitoring result. As another method, information indicating whether each of the QoS parameters satisfies a certain value may be provided. The UE performing the PC5 communication may notify the RAN node of the information. Alternatively, information on whether each of the QoS parameters is higher than or equal to a certain threshold may be provided. The UE performing the PC5 communication may notify the RAN node of the information.

This is effective, for example, when the UE performing the PC5 communication obtains the required QoS parameter. The UE performing the PC5 communication determines a specified value of each QoS parameter as a threshold, and notifies the RAN node of information on whether the QoS monitoring result is higher than or equal to the threshold. The certain value or threshold for the QoS parameter may be different from the specified value of the QoS parameter. This enables flexible configuration, depending on the SL communication quality or the communication environment.

Consequently, the amount of information on the QoS monitoring result to be notified from the UE performing the PC5 communication to the RAN node can be reduced.

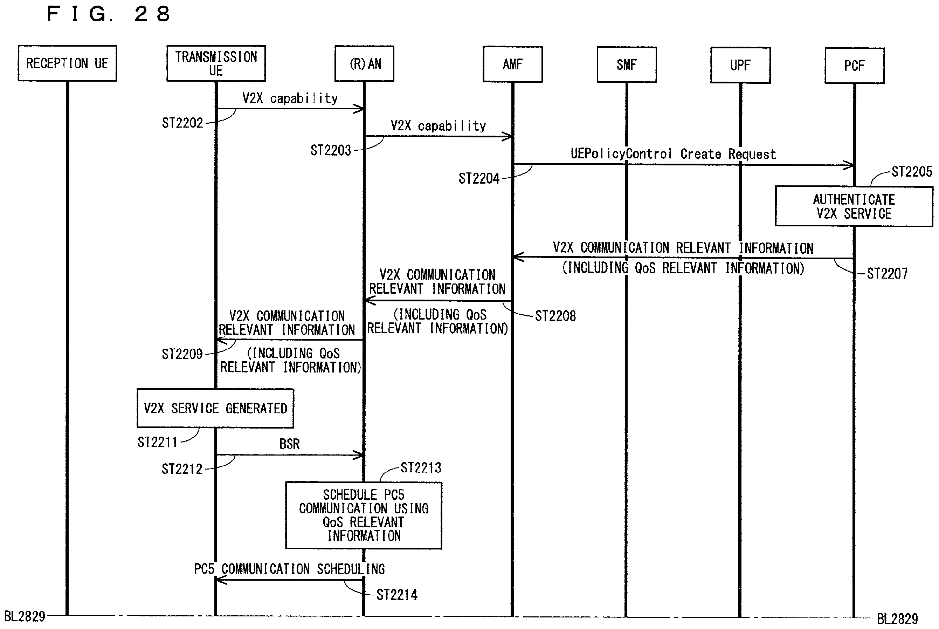

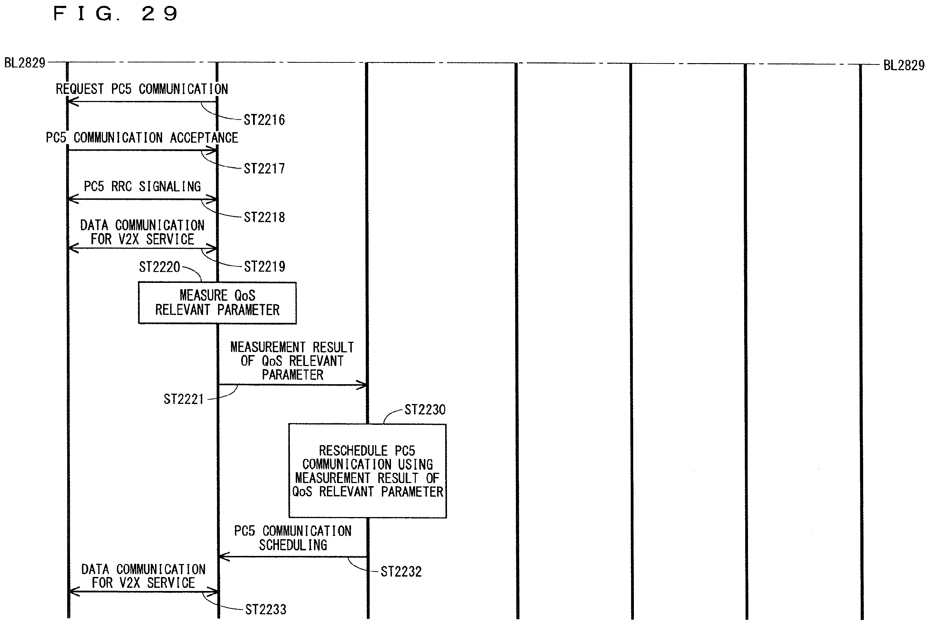

FIGS. 28 and 29 illustrate an example sequence for monitoring the QoS in the PC5 communication according to the second embodiment. FIGS. 28 and 29 are connected across a location of a border BL2829. FIGS. 28 and 29 illustrate operations of the UEs, the RAN node, the AMF, the SMF, the UPF, and the PCF. A method for the transmission UE performing the PC5 communication to monitor the QoS in the PC5 communication is disclosed. In Step ST2202, the transmission UE performing the PC5 communication notifies the RAN node (e.g., the base station) of the V2X capability. The UE may notify the capability of the PC5 communication. In Step ST2203, the RAN node notifies the AMF of the V2X capability received from the UE.

The UE may notify the V2X capability, for example, via the NAS signaling. For example, the UE may include the V2X capability in a message for a registration process, and notify the capability. For example, the UE may include the V2X capability in a message for a service request process, and notify the capability.

The UE may notify the RAN node of the V2X capability, for example, via the RRC signaling. The UE may notify the V2X capability when using the RRC signaling, for example, in a process of establishing the RRC connection.

The RAN node may notify the AMF of the V2X capability, for example, via the NG signaling. The NG signaling may be the N2 signaling.

The AMF recognizes that the V2X service is providable, using the V2X capability received from the UE. The AMF recognizes that the V2X service for the PC5 communication can be provided, using the capability of the PC5 communication. The UE may notify the V2X service provision request information together with the V2X capability. This enables the AMF to recognize that the UE specifically requests the AMF to provide the V2X service.

In Step ST2204, the AMF notifies the PCF of the V2X capability received from the UE. The AMF may give the notification using, for example, the Npcf interface or the UE policy control create request message.

The UE may notify the PCF of the V2X policy provision request. The UE may include the request in a UE Policy Container to be notified to the PCF, and notify the request. The UE may notify the PCF of the request through the AMF. The UE may give the notification to the AMF, for example, via the NAS signaling. The UE may give the notification, for example, using the UE policy provision request message. The AMF may give the notification to the PCF using, for example, the Npcf interface or the UE policy control update message.

Upon receipt of the information from the UE, the PCF authenticates the V2X service using data registered in the UE, in Step ST2205. Furthermore, the PCF determines to provide the UE with the V2X policy. Furthermore, the PCF determines to provide the UE with the V2X service and QoS relevant information corresponding to the V2X service. The V2X policy may include the V2X parameter. The V2X policy may include the V2X service and QoS relevant information corresponding to the V2X service. The V2X parameter may include the QoS relevant information. The QoS relevant information may be the QoS parameter.

In Step ST2207, the PCF notifies the AMF of the V2X communication relevant information. The PCF notifies the V2X service and the QoS relevant information corresponding to the V2X service, as the V2X communication relevant information. The V2X communication relevant information may include the V2X policy. The V2X policy may include the V2X service and the QoS relevant information corresponding to the V2X service. Examples of the V2X parameter may include a QoS parameter for each V2X service. The PCF may notify the AMF of the V2X communication relevant information, using the process of providing the UE policy. The PCF may give the notification using, for example, the Namf interface or the Communication N1N2 MessageTransfer message.

In Step ST2208, the AMF notifies the RAN node of the V2X communication relevant information received from the PCF. The AMF may give the notification via the N2 signaling. This enables the RAN node to obtain the V2X communication relevant information for the UE. The RAN node can obtain the QoS relevant information corresponding to the V2X service. The RAN node can schedule the V2X service using the PC5 communication, through obtainment of the V2X communication relevant information for the UE.

The AMF may notify the UE of the V2X communication relevant information received from the PCF. For example, the AMF may notify the UE of the V2X communication relevant information through Steps ST2208 and ST2209. In Step ST2209, the RAN node notifies the UE of the QoS relevant information and the V2X communication relevant information. The AMF may give the notification to the UE via the NAS signaling. The RAN node may give the notification to the UE via the UE-dedicated RRC signaling. This also enables the UE to obtain the V2X communication relevant information. The UE can obtain the QoS relevant information corresponding to the V2X service.

Although notification of the V2X communication relevant information and the QoS relevant information via the same signaling is described, the notification may be given via different signalings. For example, when there is no update in the V2X communication relevant information except for the QoS relevant information, the QoS relevant information can be notified via the dedicated signaling solely for the QoS relevant information. This can reduce the signaling capacity.

In Step ST2211, a V2X service using the PC5 communication is generated in the transmission UE. The transmission UE notifies the RAN node of the BSR in Step ST2212. The transmission UE may notify the Scheduling Request (SR). Upon receipt of the BSR, the RAN node schedules the PC5 communication for the transmission UE in Step ST2213. Here, the RAN node schedules the PC5 communication, using the QoS relevant information for the PC5 communication obtained in Step ST2208. The RAN node should schedule the PC5 communication to satisfy the QoS. The RAN node may schedule the PC5 communication, using the V2X communication relevant information in combination.

In Step ST2214, the RAN node notifies the transmission UE of scheduling information for the PC5 communication. The transmission UE performs the PC5-S signaling with the reception UE, using the scheduling information for the PC5 communication received from the RAN node in Step ST2214, and establishes the PC5 communication link. For example, the transmission UE notifies a request for performing the PC5 communication for a certain V2X service in Step ST2216. The transmission UE may broadcast the request. Upon receipt of the request for performing the PC5 communication for the V2X service, the reception UE notifies the transmission UE of PC5 communication acceptance in Step ST2217.

After establishing the PC5-S link, the transmission UE performs the RRC signaling with the reception UE to mutually communicate, for example, the configuration information on the AS layer and the UE capability information in Step ST2218. This enables both of the transmission UE and the reception UE to configure the AS layers for the PC5 communication.

In Step ST2219, the transmission UE and the reception UE perform data communication for the V2X service, using the PC5 communication. This enables the transmission UE and the reception UE to perform the PC5 communication so that the QoS required for the PC5 communication is satisfied.

In the PC5 communication, the transmission UE may transmit the BSR to the RAN node a plurality of times. The transmission UE may appropriately transmit the BSRs from the PC5-S signaling to data transmission for the V2X service or until releasing the PC5 link. Upon receipt of the BSR, the RAN node schedules the PC5 communication using the QoS relevant information, and notifies the transmission UE of the scheduling information for the PC5 communication as described above.

A part or all of the QoS for the PC5-S signaling, the QoS for the PC5 RRC signaling, and the QoS for the data communication for the V2X service may vary. Different configurations of the QoS relevant information may be used. This enables the QoSs for the signalings and the data transmission to vary. For example, the RAN node can schedule the PC5 communication so that the QoS required for each of the signalings and the data communication is satisfied. For example, the QoS for the signaling may be a QoS parameter lower in latency or higher in quality than that for the data transmission. Malfunctions caused by erroneous transmission and reception of the signaling can be reduced.

Certain QoS relevant information may be predetermined for the QoS for the PC5-S signaling and/or the QoS for the RRC signaling. The information may be determined, for example, in a standard. The signaling for notifying the QoS relevant information can be reduced.

In Step ST2220, the UE performing the PC5 communication monitors the QoS of the PC5 communication. The UE measures a QoS transmission relevant parameter as monitoring of the QoS. The case where the UE that monitors the QoS is the transmission UE is described herein.

In Step ST2221, the transmission UE notifies the RAN node of a measurement result of the QoS relevant parameter. The transmission UE may notify the measurement result via the Uu interface. The transmission UE may give the notification via the RRC signaling or using a message for notifying UE assistant information. In Step ST2230, the RAN node schedules the PC5 communication, using the measurement result of the QoS relevant parameter obtained in Step ST2221.

When the measurement result of the QoS relevant parameter does not satisfy the required QoS, for example, when the communication quality of the PC5 communication between the transmission UE and the reception UE deteriorates, the RAN node may perform scheduling so that the required QoS is satisfied, for example, by increasing the resources to be allocated to the PC5 communication. For example, when the communication quality of the PC5 communication between the transmission UE and the reception UE becomes better and the measurement result of the QoS relevant parameter significantly exceeds the required QoS, the RAN node may perform scheduling so that redundant resources are reduced while the required QoS is satisfied, for example, by reducing the resources to be allocated to the PC5 communication.

As such, the RAN node schedules the PC5 communication using the measurement result of the QoS relevant parameter from the transmission UE. This enables efficient scheduling that satisfies a desired QoS.

In Step ST2232, the RAN node notifies the transmission UE of information on a result of the PC5 communication scheduling performed in Step ST2230. The transmission UE transmits and receives data for the V2X service to and from the reception UE using the PC5 communication scheduling information in Step ST2233. Although transmission and reception of the data for the V2X service is disclosed herein, the same applies to transmission and reception via the PC5-S signaling or the PC5 RRC signaling.

As such, the RAN node performs scheduling using the measurement result of the QoS relevant parameter from the transmission UE. This enables the transmission UE and the reception UE to perform the PC5 communication so that the QoS required for the PC5 communication is satisfied.

Although the transmission UE monitors the QoS, the reception UE may monitor the QoS as another method. The reception UE may monitor the QoS, and notify the transmission UE of the measurement result of the QoS relevant parameter. The transmission UE may notify the RAN node of the measurement result of the QoS relevant parameter that is the QoS monitoring result from the reception UE.

The communication quality in the PC5 communication sometimes differs between the reception UE and the transmission UE. This occurs, for example, when another UE to be an interference source exists near the reception UE. This occurs when the other UE interferes not with the transmission UE but with the reception UE. In such a case, the quality of communication from the transmission UE to the reception UE deteriorates. The RAN node can recognize such a situation through obtainment of the measurement result of the QoS relevant parameter in the reception UE, and schedule the PC5 communication which suits the situation.

Both of the transmission UE and the reception UE may monitor the QoS. The RAN node may obtain both of the measurement results of the QoS relevant parameters. The RAN node can perform scheduling by using both of the measurement results of the QoS relevant parameters so that the QoS required for the PC5 communication is satisfied.

The methods disclosed in the second embodiment can avoid a situation where the QoS required for the V2X service using the PC5 communication between the UEs continues to be unsatisfactory.

Another method for solving the problem described in the second embodiment is disclosed. The QoS of the Uu communication in the UL to be performed between the base station and the UE performing the PC5 communication is used in place of the QoS of the PC5 communication to be performed between the UEs performing the PC5 communication. The base station should monitor the QoS of the Uu communication in the UL to be performed between the UEs performing the PC5 communication. The base station may measure one or more of the QoS parameters as monitoring of the QoS.

The aforementioned methods may be applied when the frequency or the frequency band to be used for the Uu communication in the UL is identical to the frequency or the frequency band to be used for the PC5 communication. When the frequency or the frequency band is identical, the radio propagation environment is almost the same. Thus, the communication quality of the Uu communication in the UL to be performed between the base station and the UE performing the PC5 communication is almost the same as that of the PC5 communication to be performed between the UEs performing the PC5 communication. Consequently, the QoS monitoring result of the Uu communication in the UL is almost the same as that of the PC5 communication between the UEs.

The base station that has monitored the QoS of the Uu communication in the UL between the UE performing the PC5 communication and the base station can determine for the UE whether the required QoS is satisfied, using the QoS monitoring result. The base station can further change the scheduling of the PC5 communication, using the determination result. The base station that has changed the scheduling of the PC5 communication should notify the UE performing the PC5 communication of the changed scheduling information.

Consequently, the UE performing the PC5 communication need not monitor the QoS. Furthermore, the UE performing the PC5 communication need not notify the base station of the QoS monitoring result. The QoS monitoring control and a scheduling process for the PC5 communication using the QoS monitoring result in a system can be facilitated.

### The first modification of the second embodiment

The first modification discloses other methods for solving the problem disclosed in the second embodiment.

A plurality of QoS parameter sets required for the V2X service using the PC5 communication are configured. A plurality of QoS parameter sets are configured for the V2X service using the PC5 communication. The CN node that configures the QoS parameter for the V2X service should configure a plurality of QoS parameter sets for the V2X service using the PC5 communication. The CN node may be, for example, the PCF or Policy and Charging Control (PCC). The plurality of sets of configured QoS parameters hereinafter may be referred to as a QoS parameter set list.

One or more QoS parameter sets or the QoS parameter set list may be included in the V2X communication relevant information. One or more QoS parameter sets or the QoS parameter set list may be included in the V2X policy or the V2X parameter. The method for providing the V2X communication relevant information or the V2X policy, which is disclosed in the first embodiment or its modification, may be applied to a method for providing one or more QoS parameter sets or the QoS parameter set list from the CN side to the UE. This can avoid complication using different processing methods, and reduce malfunctions.

The QoS parameters, the QoS parameter sets, or the QoS parameter set list may be stored in the CN node. The V2X service using the PC5 communication may be associated with the QoS parameters, the QoS parameter sets, or the QoS parameter set list required for the service, and stored in the CN node. The methods disclosed in the first embodiment should be appropriately applied to the storing method. This enables use of the information as necessary.

The UE that has monitored the QoS notifies the QoS monitoring result to a node with a plurality of QoS parameter sets for the V2X service. For example, when the PCF has the plurality of QoS parameter sets, the UE should notify the PCF of the QoS monitoring result. The UE may notify the PCF of the QoS monitoring result through the RAN node and the AMF

Upon receipt of the QoS monitoring result from the UE, the node should reselect a QoS parameter set for the V2X service from among the plurality of configured QoS parameter sets, according to the QoS monitoring result.

The PCF should notify the base station scheduling the PC5 communication of the reselected QoS parameter set. The base station receives the reselected QoS parameter set from the PCF. The base station should reschedule the PC5 communication for the UE performing the PC5 communication, using the QoS parameter set. The PCF may notify the base station of the reselected QoS parameter set through the AMF.

This enables reselection of the QoS parameter set using the QoS monitoring result in the PC5 communication, and rescheduling of the PC5 communication using the reselected QoS parameter set. Thus, the scheduling of the PC5 communication that meets the communication quality of the PC5 communication can be performed. This can increase the use efficiency of the PC5 communication resources.

What is disclosed is that the UE that has monitored the QoS notifies the PCF of the QoS monitoring result. As another method, the UE that has monitored the QoS may notify the base station of the QoS monitoring result. Then, the base station may notify the PCF of the QoS monitoring result in the UE. The PCF reselects a QoS parameter set from among the plurality of configured QoS parameter sets, according to the QoS monitoring result, and notifies the base station of the reselected QoS parameter set. This enables the base station to request the CN to reselect a QoS parameter set, at its own discretion.

For example, the base station can determine whether to change the scheduling of the PC5 communication without changing the QoS parameter set or request changing the QoS parameter set, using the QoS monitoring result received from the UE performing the PC5 communication. Since whether to signal the CN can be appropriately determined according to the QoS monitoring result, the amount of signaling with the CN can be reduced.

The NAS signaling may be used as a method for notifying the QoS monitoring result from the UE that has monitored the QoS to the CN. The UE notifies the AMF of the QoS monitoring result via the NAS signaling. The AMF may notify, for example, the PCF of the QoS monitoring result via the interface between the AMF and the PCF. The AMF may request the PCF to change the QoS parameter. The AMF may notify the PCF of the QoS monitoring result through the SMF. For example, the AMF may notify the SMF via the N11 interface, and the SMF may notify the PCF via the N7 interface.

The methods disclosed in the second embodiment should be appropriately applied to a method for the UE that has monitored the QoS to notify the RAN node of the QoS monitoring result. The RAN node may notify the AMF of the QoS monitoring result. The RAN node may give the notification to the AMF via the N2 signaling. The aforementioned methods should be applied to a method for the AMF to notify the PCF.

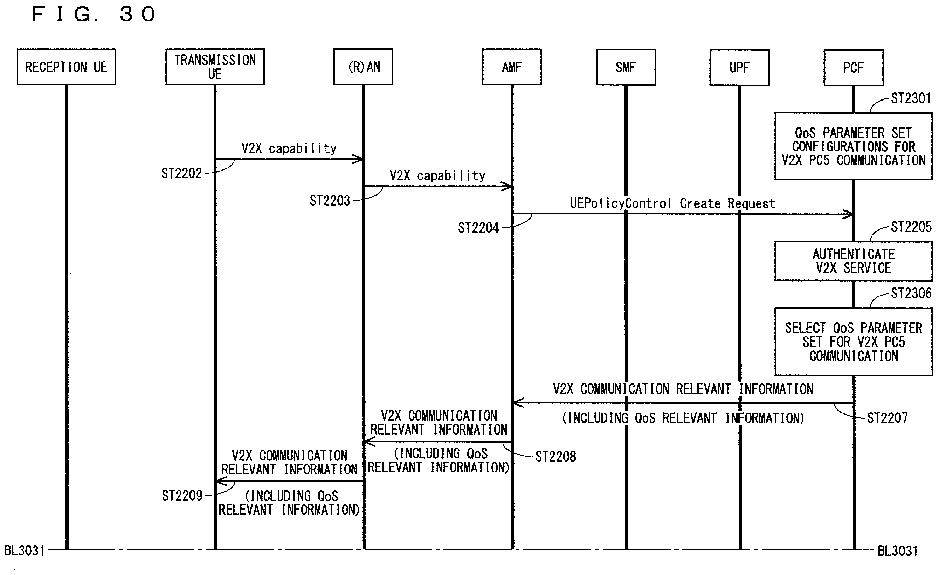

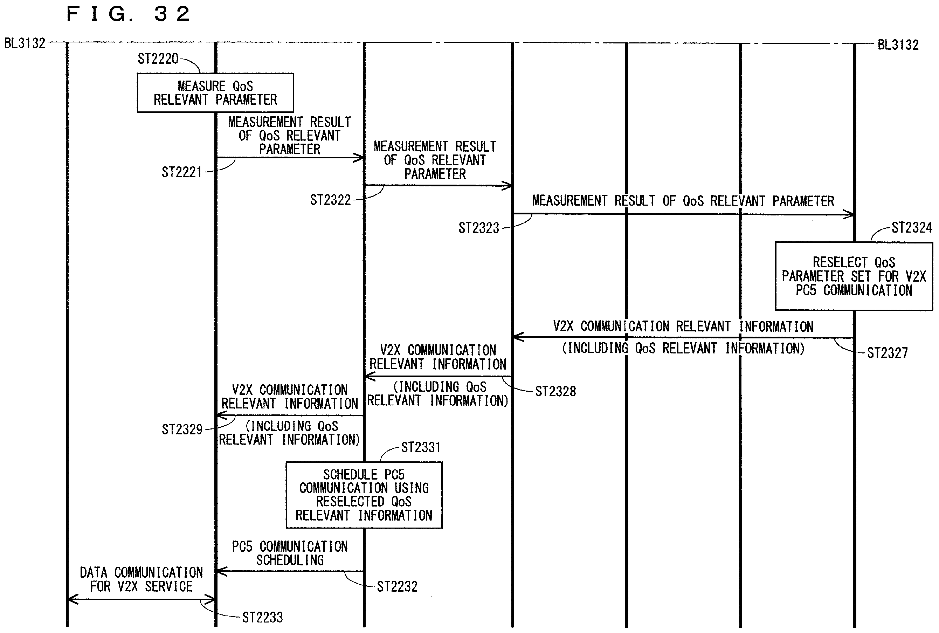

FIGS. 30 to 32 illustrate an example sequence for monitoring the QoS in the PC5 communication according to the first modification of the second embodiment. FIGS. 30 to 32 are connected across locations of borders BL3031 and BL3132. In the example of FIGS. 30 to 32, the measurement result of the QoS relevant parameter for the PC5 communication is notified to the CN. In FIGS. 30 to 32, the same step numbers are applied to the steps common to those in FIGS. 28 and 29, and the common description thereof is omitted.

A plurality of QoS parameters are configured for the V2X service using the PC5 communication. As described above, the QoS parameters include one or more types of parameters. Thus, the QoS parameters may be referred to as a QoS parameter set. In Step ST2301, the PCF has a plurality of QoS parameter set configurations for the V2X service using the PC5 communication. Following the V2X communication access authentication using the PC5 communication from the transmission UE, the PCF selects one of the plurality of QoS parameter set configurations for the PC5 communication in Step ST2306.

The PCF includes one selected QoS parameter set in the QoS relevant information, and notifies the RAN node of the QoS parameter set through the AMF in Steps ST2207 and ST2208. The PCF may include the selected QoS parameter set in the V2X communication relevant information. In Step ST2209, the selected QoS parameter set may be notified to the UE. Information indicating that a plurality of QoS parameter sets are configured for the PC5 communication may be provided. Then, the PCF may notify the information to the AMF, the RAN node, and/or the UE. The AMF, the RAN node, and/or the UE can recognize that the plurality of QoS parameter sets are configured for the PC5 communication.

In Step ST2213, the RAN node schedules the PC5 communication using the one QoS parameter set obtained in Step ST2208.

The transmission UE monitors the QoS in Step ST2220. The transmission UE measures the QoS relevant parameter, and notifies the RAN node of the measurement result in Step ST2221. In Step ST2322, the RAN node notifies the AMF of the measurement result of the QoS relevant parameter notified from the transmission UE. In Step ST2323, the AMF notifies the PCF of the QoS relevant parameter notified from the RAN node. The method for notifying the V2X capability or a request for the V2X policy from the transmission UE to the PCF may be applied to the notification method. Another message may be provided for the notification.

Upon receipt of the measurement result of the QoS relevant parameter for the PC5 communication from the UE, the PCF appropriately selects one of the plurality of configured QoS parameter sets for the PC5 communication in Step ST2324. The PCF may select the QoS parameter set for the PC5 communication different from the QoS parameter set for the PC5 communication immediately previously selected.

For example, when the measurement result of the QoS relevant parameter does not satisfy the required QoS, for example, when the communication quality of the PC5 communication between the transmission UE and the reception UE deteriorates, the PCF selects a QoS parameter set for the PC5 communication from among the configured QoS parameter sets for the PC5 communication so that the QoS is satisfied. For example, when the communication quality of the PC5 communication between the transmission UE and the reception UE becomes better and the measurement result of the QoS relevant parameter significantly exceeds the required QoS, the PCF selects a QoS parameter set for the PC5 communication which is appropriate for the measured QoS, from among the configured QoS parameter sets for the PC5 communication.

This enables the PCF to provide the RAN node with the QoS parameter set for the PC5 communication which is appropriate for the communication quality of the PC5 communication. Thus, the RAN node can schedule the PC5 communication appropriate for the communication quality of the PC5 communication.

In Step ST2327, the PCF notifies the AMF of the V2X communication relevant information. The PCF includes the QoS parameter set for the PC5 communication reselected by the PCF as the V2X communication relevant information. In Step ST2328, the AMF notifies the RAN node of the V2X communication relevant information received from the PCF. The AMF may give the notification via the N2 signaling. This enables the RAN node to obtain the QoS parameter set for the PC5 communication which has been reselected for the UE. The RAN node can obtain the QoS relevant information for the PC5 communication which is appropriate for the QoS monitoring result in the PC5 communication. The RAN node can schedule the V2X service using the PC5 communication which is appropriate for the QoS monitoring result in the PC5 communication, through obtainment of the V2X communication relevant information on the QoS parameter set for the PC5 communication reselected for the UE.

The AMF may notify the UE of the QoS parameter set for the PC5 communication reselected by the PCF and received from the PCF. For example, the AMF may notify the QoS parameter set through Steps ST2328 and ST2329. In Step ST2329, the RAN node notifies the UE of the reselected QoS parameter set for the PC5 communication. This enables the UE to obtain the reselected QoS parameter set for the PC5 communication.

In Step ST2331, the RAN node schedules the PC5 communication, using the reselected QoS parameter set for the PC5 communication obtained in Step ST2328. In Step ST2232, the RAN node notifies the transmission UE of information on the result of the PC5 communication scheduling performed in Step ST2331. The transmission UE transmits and receives the data for the V2X service to and from the reception UE using the PC5 communication scheduling information in Step ST2233. Although transmission and reception of the data for the V2X service is disclosed herein, the same applies to transmission and reception via the PC5-S signaling or the PC5 RRC signaling.

As such, the PCF selects one of the configured QoS parameter sets for the PC5 communication, using the QoS monitoring result of the transmission UE, and provides the RAN node with the selected QoS parameter set again. Thus, the RAN node can schedule the PC5 communication to meet the communication quality of the PC5 communication. The use PC5 communication resources can be efficiently scheduled. This can increase the use efficiency of the PC5 communication resources.

The method for providing the V2X communication relevant information or the V2X policy, which is disclosed in the first embodiment or its modification, may be applied to a method for notifying one or more QoS parameter sets or the QoS parameter set list from the PCF to the base station.

The AMF may obtain the QoS parameter set list from the PCF in advance. The AMF may change the QoS parameter. The UE notifies the AMF of the QoS monitoring result. The UE may notify the AMF of the QoS monitoring result through the base station. The AMF changes the QoS parameter set, using the QoS monitoring result obtained from the UE. The AMF selects a QoS parameter set after change, from the QoS parameter set list. The AMF should notify the base station of the changed QoS parameter set. The base station schedules the PC5 communication for the UE performing the PC5 communication, using the changed QoS parameter set notified from the AMF.

As such, previous obtainment of the QoS parameter set by the AMF can reduce the signaling between the AMF and the PCF and processes in the PCF when the QoS parameter is changed.

The SMF may obtain the QoS parameter set list from the PCF in advance. The SMF may change the QoS parameter. The UE notifies the SMF of the QoS monitoring result. The UE may notify the SMF of the QoS monitoring result through the base station and the AMF. The SMF changes the QoS parameter set, using the QoS monitoring result obtained from the UE. The SMF selects a QoS parameter set after change, from the QoS parameter set list. The SMF should notify the base station of the changed QoS parameter set. The SMF may notify the base station of the changed QoS parameter set through the AMF. The base station schedules the PC5 communication for the UE performing the PC5 communication, using the changed QoS parameter set notified from the SMF.

The methods disclosed in the first modification of the second embodiment can avoid a situation where the QoS required for the V2X service using the PC5 communication between the UEs continues to be unsatisfactory.

### The second modification of the second embodiment

The UE performing the PC5 communication sometimes schedules the PC5 communication. In such a case, resources for scheduling the PC5 communication are selected from a resource pool. The base station sometimes broadcasts the resource pool. Methods for solving the problem disclosed in the second embodiment when the UE performing the PC5 communication schedules the PC5 communication using the resource pool broadcast from the base station are disclosed.

A plurality of resource pools for the V2X service using the PC5 communication are configured. A plurality of resource pools are configured for the V2X service using the PC5 communication. The CN node that configures a resource pool for the V2X service should configure a plurality of resource pools for the V2X service using the PC5 communication. The CN node may be, for example, the PCF or the Policy and Charging Control (PCC). The plurality of configured resource pools hereinafter may be referred to as a resource pool list.

One or more resource pools or a resource pool list may be configured together with the QoS parameter for the V2X service. A rule for calculating a resource pool from a service request of the V2X service using the PC5 communication may be configured. The rule for calculating a QoS parameter from the service request of the V2X service using the PC5 communication and the rule for calculating a resource pool from the request may be configured in the same rule.

One or more resource pools or a resource pool list to be used for the V2X service using the PC5 communication may be included in the V2X communication relevant information. The one or more resource pools or the resource pool list to be used for the V2X service using the PC5 communication may be included in the V2X communication relevant information together with the QoS parameter for the V2X service. The methods disclosed in the second embodiment or the first modification of the second embodiment may be appropriately applied to methods for providing these and storing these in the CN node. This can produce the same advantages as previously described.

The UE that has monitored the QoS notifies the QoS monitoring result to a node with a plurality of resource pools for the V2X service. For example, when the PCF has the plurality of resource pools, the UE should notify the PCF of the QoS monitoring result. Upon receipt of the QoS monitoring result from the UE, the node should reselect a resource pool for the V2X service from among the plurality of configured resource pools, according to the QoS monitoring result.

The PCF should notify the reselected resource pool to the base station that broadcasts the resource pool for the PC5 communication. The PCF may notify the reselected resource pool to the base station to which the QoS monitoring result of the UE has been notified. The base station receives the reselected resource pool from the PCF. The base station broadcasts the resource pool. The UE performing the PC5 communication should reschedule the PC5 communication, using the reselected resource pool from the base station. The PCF may notify the base station of the reselected resource pool through the AMF

The methods disclosed in the first modification of the second embodiment should be appropriately applied to methods for configuring a plurality of resource pools and changing a resource pool using the QoS monitoring result. The QoS parameter sets in the methods disclosed in the first modification of the second embodiment should be replaced with the resource pools. The scheduling of the PC5 communication to be performed by the base station for the UE performing the PC5 communication should be replaced with broadcasting the resource pool for the PC5 communication.

This enables reselection of a resource pool to be used for the PC5 communication, using the QoS monitoring result in the PC5 communication, and rescheduling of the PC5 communication using the reselected resource pool. Thus, the scheduling of the PC5 communication that meets the communication quality of the PC5 communication can be performed. This can increase the use efficiency of the PC5 communication resources.

Priorities may be assigned to the QoS parameter sets. Priorities may be assigned to the resource pools. A QoS parameter set or a resource pool should be reselected according to the priorities. For example, a QoS parameter set or a resource pool with a higher priority may be selected or reselected. Assigning priorities in such a manner can control the QoS parameter set or the resource pool to be used.

For example, the method for reselecting the QoS parameter set or the resource pool may be combined with the priorities. For example, when the measurement result of the QoS relevant parameter does not satisfy the required QoS, a QoS parameter set for the PC5 communication is selected from among the configured QoS parameter sets for the PC5 communication so that the QoS is satisfied. In the presence of a plurality of QoS parameter sets for the PC5 communication as options, a QoS parameter with a higher priority is selected from among the sets. When the communication quality of the PC5 communication between the transmission UE and the reception UE becomes better and the measurement result of the QoS relevant parameter significantly exceeds the required QoS, a QoS parameter set for the PC5 communication which is appropriate for the measured QoS is selected from among the configured QoS parameter sets for the PC5 communication. In the presence of the plurality of QoS parameter sets for the PC5 communication as options, a QoS parameter with a higher priority is selected from among the sets.

This enables the PC5 communication with a desired QoS, and can increase the use efficiency of the resources to be used for the PC5 communication.

Ranks may be provided. One or more QoS parameter sets or resource pools are configured for each rank. A QoS parameter set or a resource pool should be reselected from a selected rank, according to the QoS monitoring result. This can produce the flexibility in the reselection more than by the control based on the priorities.

The priorities or the ranks may be configured for each UE. The priorities or the ranks may be configured for each UE performing the PC5 communication. The priorities are configurable according to the capability, a position, or the communication environment of each UE. As another method, the priorities or the ranks may be configured for each V2X service using the PC5 communication. The priorities or the ranks are configurable according to details or requirements of the service.

The methods disclosed in the second modification of the second embodiment can avoid a situation where the QoS required for the V2X service using the PC5 communication between the UEs continues to be unsatisfactory, even when one of the UEs performing the PC5 communication schedules the PC5 communication using the resource pool broadcast from the base station.

### The third modification of the second embodiment

The UE performing the PC5 communication sometimes schedules the PC5 communication. In such a case, a QoS parameter set corresponding to a V2X service to be used for the PC5 communication scheduling is preconfigured in the UE. Methods for solving the problem disclosed in the second embodiment when the UE performing the PC5 communication schedules the PC5 communication using the QoS parameter set preconfigured in the UE are disclosed.

When entering a coverage of a base station, the UE performing the PC5 communication changes the QoS parameter set through the base station. The UE performing the PC5 communication may change the QoS parameter set, using a process of updating the V2X policy between the UE and the PCF. The methods disclosed in the second embodiment should be applied to a method for monitoring the QoS. The method for providing the V2X communication relevant information or the V2X policy, which is disclosed in the first embodiment or its modification, may be applied to methods for configuring a plurality of QoS parameter sets for the PC5 communication and changing the QoS parameter set using the process of updating the V2X policy between the UE and the PCF. This can avoid complication using different processing methods, and reduce malfunctions.

A resource pool corresponding to the V2X service to be used for the PC5 communication scheduling is preconfigured in the UE. The same applies to a case where the UE performing the PC5 communication schedules the PC5 communication using the resource pool preconfigured in the UE.

When entering a coverage of a base station, the UE performing the PC5 communication changes the resource pool through the base station. The UE performing the PC5 communication may change the resource pool using the process of updating the V2X policy between the UE and the PCF. The methods disclosed in the second embodiment should be applied to the method for monitoring the QoS. The method for providing the V2X communication relevant information or the V2X policy, which is disclosed in the first embodiment or its modification, may be applied to methods for configuring a plurality of resource pools for the PC5 communication and changing the resource pool using the process of updating the V2X policy between the UE and the PCF. This can avoid complication using different processing methods, and reduce malfunctions.

Both or only one of the QoS parameter set and the resource pool may be changed. The UE or the CN node may determine which changing method should be performed. The PCF as the CN node may make the determination. The CN node may make the determination, using the QoS monitoring result notified from the UE.

The UE performing the PC5 communication should reschedule the PC5 communication, using the changed QoS parameter set and/or resource pool. When entering a coverage of a base station, the UE performing the PC5 communication can change the QoS parameter set through the base station. For example, in the case where the UE performs the PC5 communication outside the coverage and the QoS for the V2X service is not satisfied, the UE can change the QoS parameter set through the base station when entering the coverage of the base station. This can avoid a situation where the QoS for the V2X service is not satisfied for a long time.

Another method is disclosed. The UE obtains a plurality of QoS parameter sets and/or a plurality of resource pools for the V2X service in advance. The UE performing the PC5 communication obtains a QoS parameter set list and/or a resource pool list in advance from the CN node having the QoS parameter set list and/or the resource pool list. The CN node having the QoS parameter set list and/or the resource pool list provides the UE performing the PC5 communication with the QoS parameter set list and/or the resource pool list in advance.

The aforementioned methods should be appropriately applied to a process of providing the QoS parameter set list and/or the resource pool list between the UE and the CN node having the QoS parameter set list and/or the resource pool list.

The UE performing the PC5 communication monitors the QoS, and changes the QoS parameter set and/or resource pool using the QoS monitoring result. The UE selects a QoS parameter set and/or resource pool after change, from the QoS parameter set list and/or the resource pool list obtained by the UE. The UE performing the PC5 communication schedules the PC5 communication, using the reselected QoS parameter set and/or resource pool.

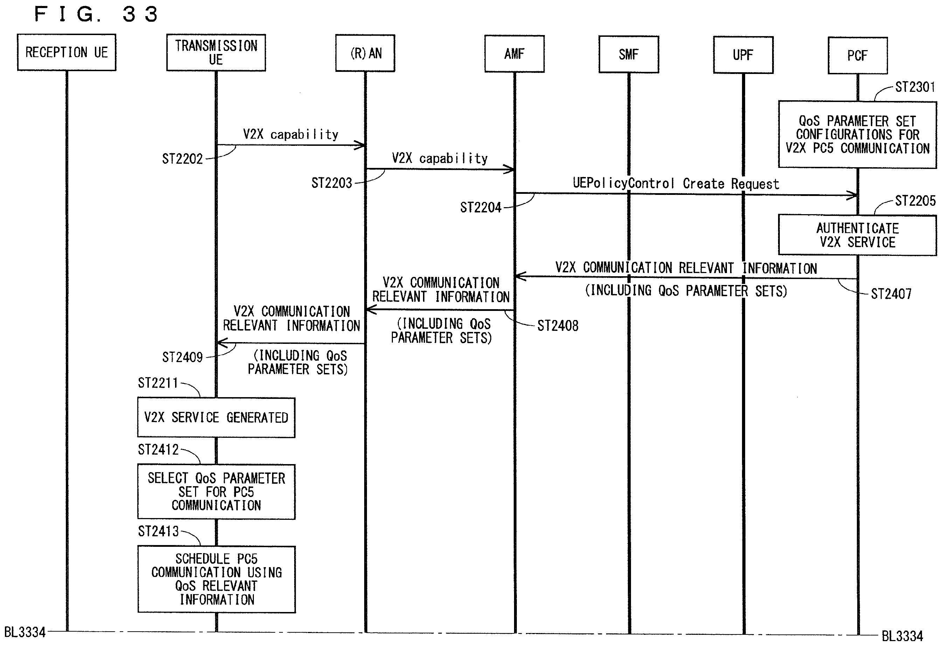

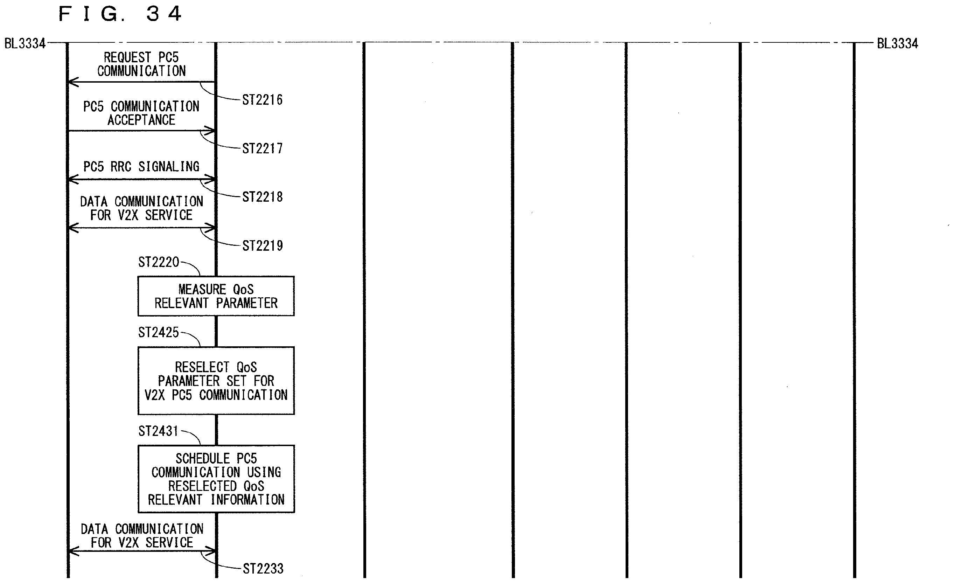

FIGS. 33 and 34 illustrate the first example sequence for monitoring the QoS in the PC5 communication according to the third modification of the second embodiment. FIGS. 33 and 34 are connected across a location of a border BL3334. FIGS. 33 and 34 illustrate an example where the transmission UE schedules the PC5 communication. In FIGS. 33 and 34, the same step numbers are applied to the steps common to those in FIGS. 30 to 32, and the common description thereof is omitted.

The PCF notifies the UE of a plurality of QoS parameters for the V2X service using the PC5 communication.

In Steps ST2407, ST2408, and ST2409, the PCF notifies the UE of a plurality of QoS parameter sets for the PC5 communication. The PCF may include the plurality of QoS parameter sets for the PC5 communication in the QoS relevant information, and notify the QoS parameter sets. This enables the UE to obtain the plurality of QoS parameter sets for the PC5 communication.

The UE selects one of the plurality of QoS parameter sets for the PC5 communication obtained in Step ST2409, and schedules the PC5 communication using the selected QoS parameter set in Step ST2413.

The transmission UE monitors the QoS in Step ST2220. The transmission UE measures the QoS relevant parameter. In Step ST2425, the transmission UE appropriately reselects one of the plurality of configured QoS parameter sets for the PC5 communication, using the measurement result of the QoS relevant parameter. The transmission UE may select the QoS parameter set for the PC5 communication different from the QoS parameter set for the PC5 communication immediately previously selected.

For example, when the measurement result of the QoS relevant parameter does not satisfy the required QoS, for example, when the communication quality of the PC5 communication between the transmission UE and the reception UE deteriorates, the transmission UE selects a QoS parameter set for the PC5 communication from among the configured QoS parameter sets for the PC5 communication so that the QoS is satisfied.

For example, when the communication quality of the PC5 communication between the transmission UE and the reception UE becomes better and the measurement result of the QoS relevant parameter significantly exceeds the required QoS, the transmission UE selects a QoS parameter set for the PC5 communication which is appropriate for the measured QoS, from among the configured QoS parameter sets for the PC5 communication.

In Step ST2431, the transmission UE schedules the PC5 communication, using the reselected QoS parameter set for the PC5 communication. Thus, when the PCF notifies the transmission UE of the plurality of QoS parameter sets for the PC5 communication, the transmission UE can reschedule the PC5 communication using the QoS monitoring result to meet the communication quality of the PC5 communication. The use PC5 communication resources can be efficiently scheduled. This can increase the use efficiency of the PC5 communication resources.

As described above, the plurality of QoS parameter sets and/or a plurality of resources for the V2X service using the PC5 communication may be configured or stored in the CN node. For example, the PCF or the PCC is disclosed as the CN node. Without being limited by this, the CN node may be the AMF, the SMF, or the UPF. The plurality of QoS parameter sets and/or the plurality of resources for the V2X service using the PC5 communication may be configured or stored in a different CN node.

The UE performing the PC5 communication monitors the QoS, and notifies the CN node of the QoS monitoring result. The CN node reselects a QoS parameter set and/or a resource using the QoS monitoring result from the UE. The CN node notifies the UE of the reselected QoS parameter set and/or resource. The UE schedules the PC5 communication, using the notified QoS parameter set and/or resource.

Configuring or storing the plurality of QoS parameter sets and/or the plurality of resources for the V2X service using the PC5 communication in the CN node, for example, the AMF, the SMF, or the UPF can shorten the access time from the UE to the CN node. The UE can schedule the PC5 communication earlier, using the reselected QoS parameter set and/or resource. Thus, a period during which the QoS required for the V2X service using the PC5 communication is not satisfied can be shortened.

What is previously disclosed is that the plurality of QoS parameter sets and/or the plurality of resources for the V2X service using the PC5 communication are configured or stored in the CN node. In contrast, the plurality of QoS parameter sets and/or the plurality of resources for the V2X service using the PC5 communication may be configured or stored in the RAN node. The UE performing the PC5 communication monitors the QoS, and notifies the RAN node of the QoS monitoring result. The RAN node reselects a QoS parameter set and/or a resource using the QoS monitoring result from the UE. The RAN node notifies the UE of the reselected QoS parameter set and/or resource. The UE schedules the PC5 communication, using the notified QoS parameter set and/or resource.

Thus, a period during which the QoS required for the V2X service using the PC5 communication is not satisfied can be further shortened.

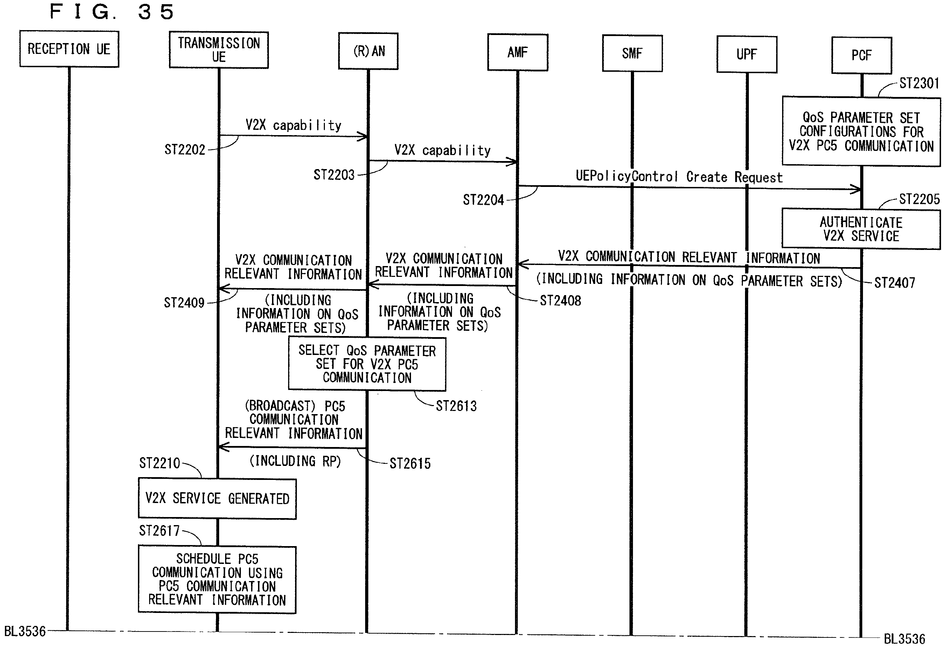

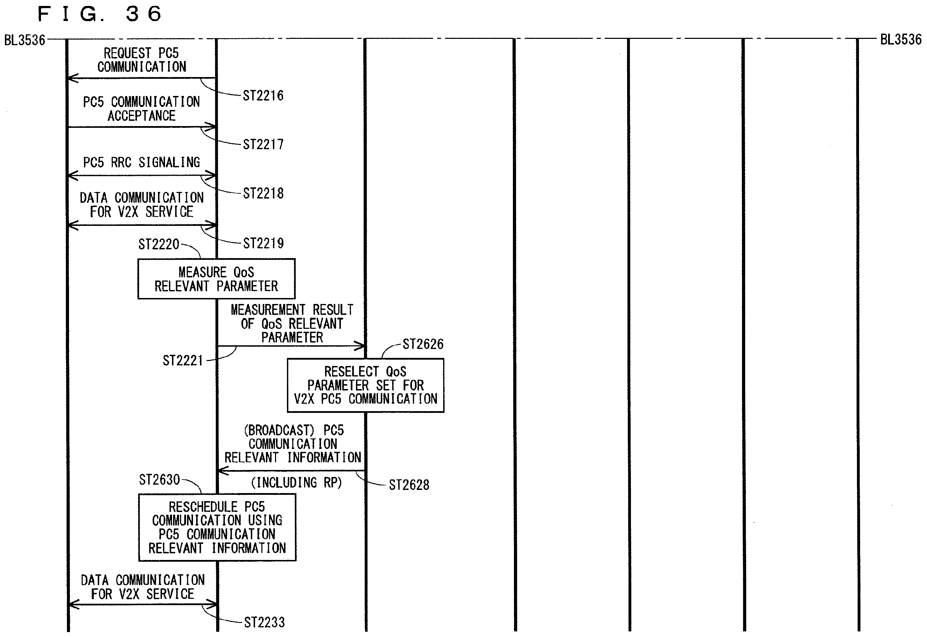

FIGS. 35 and 36 illustrate the second example sequence for monitoring the QoS in the PC5 communication according to the third modification of the second embodiment. FIGS. 35 and 36 are connected across a location of a border BL3536. FIGS. 35 and 36 illustrate an example where the RAN node broadcasts the PC5 communication resources. FIGS. 35 and 36 illustrate an example where the UE schedules the PC5 communication. In FIGS. 35 and 36, the same step numbers are applied to the steps common to those in FIGS. 30 to 32 and FIGS. 33 and 34, and the common description thereof is omitted.

The PCF notifies the RAN node of a plurality of QoS parameters for the V2X service using the PC5 communication.

In Steps ST2407 and ST2408, the PCF notifies the RAN node of a plurality of QoS parameter sets for the PC5 communication. The PCF may include the plurality of QoS parameter sets for the PC5 communication in the QoS relevant information, and notify the QoS parameter sets. This enables the RAN node to obtain the plurality of QoS parameter sets for the PC5 communication.

In Step ST2613, the RAN node selects one of the plurality of QoS parameter sets for the PC5 communication obtained in Step ST2408. The RAN node configures the PC5 communication resources using the selected QoS parameter set, and broadcasts the PC5 communication resources to the UE in Step ST2615. The RAN node may include the PC5 communication resources in PC5 communication relevant information, and broadcast the resources. The PC5 communication resources may be resource pool information.

In Step ST2617, the transmission UE schedules the PC5 communication, using the PC5 communication relevant information.

The transmission UE monitors the QoS in Step ST2220. The transmission UE measures the QoS relevant parameter. In Step ST2221, the transmission UE notifies the RAN node of a measurement result of the QoS relevant parameter. In Step ST2626, the RAN node appropriately reselects one of the plurality of configured QoS parameter sets for the PC5 communication, using the measurement result of the QoS relevant parameter notified from the transmission UE. The RAN node may select the QoS parameter set for the PC5 communication different from the QoS parameter set for the PC5 communication immediately previously selected.

The disclosed method for the PCF or the UE to select the QoS parameter set for the PC5 communication may be applied to a method for selecting the QoS parameter for the PC5 communication. The RAN node configures the PC5 communication resources, using the QoS parameter set for the PC5 communication reselected in Step ST2626. This enables the RAN node to configure the PC5 communication resources appropriate for the QoS of the PC5 communication.

In Step ST2628, the transmission UE receives the reconfigured PC5 communication relevant information, and obtains the RP for the PC5 communication. In Step ST2630, the transmission UE schedules the PC5 communication, using the reconfigured PC5 communication relevant information. As such, the PCF notifies the RAN node of the plurality of QoS parameter sets for the PC5 communication. Then, the RAN node configures the PC5 communication resources appropriate for the selected QoS parameter set for the PC5 communication, and broadcasts the configured PC5 communication resources. This enables the transmission UE to schedule the PC5 communication using the configured PC5 communication resources.

Thus, the transmission UE can reschedule the PC5 communication to meet the communication quality of the PC5 communication. The use PC5 communication resources can be efficiently scheduled. This can increase the use efficiency of the PC5 communication resources.

The method for the PCF to notify the RAN node of the plurality of QoS parameter sets for the PC5 communication is applicable to a case where the RAN node schedules the PC5 communication. This can also increase the use efficiency of the PC5 communication resources.

What is disclosed is that the plurality of QoS parameter sets and/or the plurality of resources for the V2X service using the PC5 communication are configured or stored in the CN node or the RAN node. As another example, a node with the plurality of QoS parameter sets and/or the plurality of resources for the V2X service using the PC5 communication may provide, in advance, the plurality of QoS parameter sets and/or the plurality of resources to another node, for example, the CN node or the RAN node. The plurality of QoS parameter sets and/or the plurality of resources may be provided in response to a request from the other node. Such previous provision to the other node can produce the same advantages as previously described.

Another method is disclosed. The plurality of QoS parameter sets and/or the plurality of resource pools for the V2X service may be preconfigured in the UE. The plurality of QoS parameter sets and/or the plurality of resource pools for the V2X service should be stored in the UE. The plurality of QoS parameter sets and/or the plurality of resource pools for the V2X service should not be provided by a provision process between the UE and the PCF but should be prestored in the UE. The plurality of QoS parameter sets and/or the plurality of resource pools for the V2X service may be stored in, for example, the (U) SIM or the UICC.

The UE performing the PC5 communication monitors the QoS, and changes the QoS parameter set and/or resource pool using the QoS monitoring result. The UE selects a QoS parameter set and/or resource pool after change, from the QoS parameter set list and/or the resource pool list preconfigured in the UE. The UE performing the PC5 communication schedules the PC5 communication, using the reselected QoS parameter set and/or resource pool.

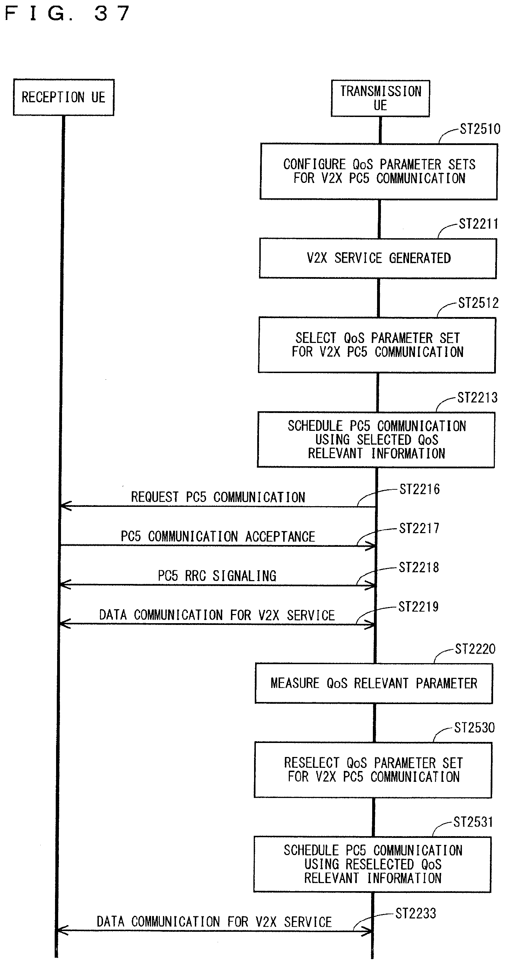

FIG. 37 illustrates the third example sequence for monitoring the QoS in the PC5 communication according to the third modification of the second embodiment. FIG. 37 illustrates an example where the transmission UE schedules the PC5 communication. In FIG. 37, the same step numbers are applied to the steps common to those in FIGS. 33 and 34, and the common description thereof is omitted.

The plurality of QoS parameter sets for the PC5 communication may be preconfigured in the UE. The transmission UE selects one of the plurality of QoS parameter sets for the PC5 communication that are preconfigured in the UE, and schedules the PC5 communication using the selected QoS parameter set.

In Step ST2510, the plurality of QoS parameter sets for the PC5 communication are configured in the transmission UE. In Step ST2512, the transmission UE selects one of the plurality of QoS parameter sets for the PC5 communication that are configured in the UE. In Step ST2213, the transmission UE schedules the PC5 communication using the selected QoS parameter set.

The transmission UE monitors the QoS in Step ST2220. The transmission UE measures the QoS relevant parameter. In Step ST2530, the transmission UE appropriately reselects one of the plurality of configured QoS parameter sets for the PC5 communication, using the measurement result of the QoS relevant parameter. The transmission UE may select the QoS parameter set for the PC5 communication different from the QoS parameter set for the PC5 communication immediately previously selected.

The aforementioned methods may be applied to a method for selecting the QoS parameter for the PC5 communication. In Step ST2531, the transmission UE schedules the PC5 communication, using the reselected QoS relevant information for the PC5 communication. Thus, the transmission UE can reschedule the PC5 communication to meet the communication quality of the PC5 communication. The use PC5 communication resources can be efficiently scheduled. This can increase the use efficiency of the PC5 communication resources.

Even when the UE performs the PC5 communication outside the coverage and the QoS for the V2X service is not satisfied, the UE can change the QoS parameter set. This can avoid a situation where the QoS for the V2X service continues to be unsatisfactory.

The UE performing the PC5 communication may be a UE that relays the PC5 communications or a UE that relays the Uu communication and the PC5 communication. These UEs may be provided with a QoS parameter set and/or a plurality of resource pools. When the UE performs the relay, the UE can reschedule the PC5 communication using the QoS monitoring result.

An example where the UE performing the PC5 communication monitors the QoS and notifies the RAN node or the CN node of the QoS monitoring result is disclosed. Instead of the QoS monitoring result, information indicating whether the QoS value is satisfied may be provided. The UE performing the PC5 communication may monitor the QoS, and notify the RAN node or the CN node of the information indicating whether the QoS value is satisfied. Appropriate application of the method can produce the same advantages as previously described.

As another method, the UE performing the PC5 communication may notify the RAN node of a rescheduling request. The request may be a rescheduling request for improving the QoS. The UE performing the PC5 communication monitors the QoS, and determines whether to notify the rescheduling request, using the QoS monitoring result.

For example, the UE determines to notify the rescheduling request when the QoS monitoring result does not satisfy the QoS required for the V2X service using the PC5 communication, or when the QoS monitoring result satisfies the QoS and falls within a certain range. Otherwise, the UE determines not to notify the rescheduling request.

When determining to notify the rescheduling request, the UE performing the PC5 communication notifies the RAN node of the rescheduling request. Upon receipt of the request, the RAN node, for example, performs rescheduling so that the QoS on the UE is improved, and notifies the UE of the information.

This can improve the QoS of the V2X service using the PC5 communication.

The rescheduling request may be a rescheduling request for relaxing the QoS. For example, when determining that the QoS monitoring result significantly exceeds the required QoS, the UE performing the PC5 communication may notify the RAN node of the rescheduling request for relaxing the QoS. Upon receipt of the request, the RAN node performs rescheduling so that the QoS on the UE is relaxed, and notifies the UE of the information.

This can relax the QoS of the V2X service using the PC5 communication. Relaxing the QoS in a satisfactory range enables allocation of the resources to other UEs. This can increase the use efficiency of the resources in a system.

As another method, the UE performing the PC5 communication may notify a NW node of a request for providing a QoS parameter set and/or a resource pool again. The request may be a re-providing request for improving the QoS. The UE performing the PC5 communication monitors the QoS, and determines whether to notify the re-providing request, using the QoS monitoring result.

For example, the UE determines to notify the re-providing request when the QoS monitoring result does not satisfy the QoS required for the V2X service using the PC5 communication, or when the QoS monitoring result satisfies the QoS and falls within a certain range. Otherwise, the UE determines not to notify the re-providing request.

When determining to notify the re-providing request, the UE performing the PC5 communication notifies the NW node of the re-providing request. Upon receipt of the request, the NW node, for example, reselects a QoS parameter set and/or a resource pool so that the QoS on the UE is improved, and again provides the UE with information on the reselected QoS parameter set and/or resource pool.

This can improve the QoS of the V2X service using the PC5 communication.

The re-providing request may be a re-providing request for relaxing the QoS. For example, when determining that the QoS monitoring result significantly exceeds the required QoS, the UE performing the PC5 communication may notify the CN node of the re-providing request for relaxing the QoS. Upon receipt of the request, the CN node reselects a QoS parameter set and/or a resource pool so that the QoS on the UE is relaxed, and again provides the UE with information on the reselected QoS parameter set and/or resource pool.

This can relax the QoS of the V2X service using the PC5 communication. Relaxing the QoS in a satisfactory range enables allocation of the resources to other UEs. This can increase the use efficiency of the resources in a system.

As such, notification of the rescheduling request or the re-providing request instead of notification of the QoS monitoring result can reduce the amount of information necessary for the notification. The notification can be given with a smaller number of bits.

The PC5 communication may be terminated in the absence of a QoS parameter set and/or a resource pool to be reselected. A node that performs the reselection may trigger release of the PC5 communication. The resources for the AS layer may be released as the release of the PC5 communication. The transmission UE triggered to release the PC5 communication may release the resources of its own UE, and notify the reception UE of a request for releasing the resources for the AS layer. Upon receipt of the release request, the reception UE releases the resources for the AS layer. The reception UE may notify the transmission UE of completion of the release of the resources for the AS layer. The transmission UE may release the resources of its own UE upon receipt of the notification.

Start of releasing the PC5 communication resources, the request for releasing the resources, or the completion of the release of the resources may be notified via the RRC signaling. This can reduce incorrect reception of the notification, and increase the amount of information to be notified. As another method, the notification may be given via the MAC signaling. This can reduce incorrect reception of the notification, and expedite the notification. As another method, the notification may be given via the PHY signaling. This can further expedite the notification. Depending on the details of the notification, the notification method may vary. The aforementioned advantages can be produced according to the details of the notification.

The PC5-S link may be released as the release of the PC5 communication. The PC5-S link may be released together with release of the resources for the AS layer. The transmission UE triggered to release the PC5 communication may release the PC5-S link of its own UE, and notify the reception UE of a request for releasing the PC5-S link. A process of releasing the PC5-S link includes releasing configuration in the V2X layer, for example, configuration in the V2X service on a mapping between an application identifier from an application layer and an identifier used in the L2.

Upon receipt of the release request, the reception UE releases the PC5-S link. The reception UE may notify the transmission UE of completion of the release of the PC5-S link. The transmission UE may release the PC5-S link of its own UE upon receipt of the notification.

This can reduce wasteful processes of the UE performing the PC5 communication such as continuing to hold the PC5 communication resources, even in the absence of a QoS parameter set and/or a resource pool to be reselected. Thus, the use efficiency of radio resources can be increased. Furthermore, the wasteful processes in the UE and the power consumption of the UE can be reduced.

### The fourth modification of the second embodiment

In 3GPP, groupcasts have been studied as a method for the PC5 communication. The groupcasts are a method for performing the PC5 communication in a UE group. A UE group includes a UE to be a leader (a leader UE) and other UEs (member UEs). The PC5 communication is performed between the leader UE and one of the member UEs or between the member UEs. The aforementioned methods should be applied to the PC5 communication between the leader UE and the member UE. This can produce the same advantages as previously described.

In the PC5 communication between the member UEs, the leader UE schedules the PC5 communication so that the QoS required for the V2X service using the PC5 communication between the member UEs is satisfied. What is disclosed in the aforementioned methods is a solution when the UE performing the PC5 communication schedules the PC5 communication. Thus, the aforementioned solution is not simply applicable to a case where the UE that does not perform the PC5 communication (leader UE) schedules the PC5 communication between the UEs performing the PC5 communication (member UEs).

For example, when the quality of the PC5 communication between the member UEs deteriorates and the required QoS is not satisfied, the leader UE that schedules the PC5 communication between the member UEs cannot recognize the deteriorating quality of the PC5 communication, and continues to perform the same scheduling. Thus, a situation where the QoS required for the PC5 communication between the member UEs is not satisfied is continued.

The fourth modification discloses a method for solving such a problem.

The leader UE may perform the process of providing the V2X policy with the CN. The leader UE can obtain the V2X communication relevant information from the CN. The methods disclosed in the third modification of the second embodiment should be applied to this method. The PCF may provide the UE with a plurality of QoS parameter sets or one QoS parameter set. The leader UE schedules the PC5 communication between the member UEs, using the V2X policy provided from the CN.

The V2X policy for the PC5 communication between the member UEs in the group may be identical to that for the communication between the leader UE and the transmission member UE. Application of the identical V2X policy for the PC5 communication in the group can simplify the PC5 communication processes in the group, and enables the PC5 communication between the member UEs with low latency.

The V2X policy for the PC5 communication between the member UEs in the group may be different from that for the communication between the leader UE and the transmission member UE. The transmission member UE may perform, with the PCF through the leader UE, the V2X service authentication using the PC5 communication and/or the process of providing the V2X policy. The leader UE may perform the process of providing the V2X policy for the transmission member UE, with the PCF through the RAN node and the AMF. The methods disclosed in the third modification of the second embodiment should be applied to the process of providing the V2X policy between the leader UE and the PCF.

The leader UE may establish the PC5 communication link with the member UE in the group in advance. The transmission member UE may request the leader UE to authenticate the V2X service using the PC5 communication and/or provide the V2X policy. This enables the transmission member UE to start requesting the V2X service authentication using the PC5 communication and/or provision of the V2X policy through the leader UE.

The resources for the PC5 communication between the UEs in the group may be preconfigured. The configuration may be statically determined, for example, in a standard. Alternatively, the configuration may be made in advance in the UE in the group. The UE in the group should perform the PC5 communication using the resources, until the process of providing the V2X policy is performed. The leader UE schedules the PC5 communication between the member UEs, using the resources. For example, even when the member UE is outside the coverage of the cell, the V2X policy for the PC5 communication is available.

This enables the UEs including the member UEs in the group to use the V2X policy for the PC5 communication. The PC5 communication can be performed in the group, for example, between the leader UE and the member UE or between the member UEs.

The UE performing the PC5 communication with the member UE monitors the QoS in the PC5 communication. The UE performing the PC5 communication with the member UE may be the transmission UE or the reception UE. The PC5 communication with the member UE may be a broadcast, a groupcast, or a unicast. The UE should measure the QoS parameter as monitoring of the QoS. The UE may monitor all or a part of the QoS parameters to monitor the QoS.

The member UE that has monitored the QoS notifies the leader UE of the QoS monitoring result. The UE notifies a measurement result of the QoS parameter as monitoring of the QoS. This enables the leader UE that schedules the PC5 communication between the member UEs to recognize the actual QoS of the PC5 communication.

The leader UE can determine whether the PC5 communication between the member UEs satisfies the required QoS, using the QoS monitoring result of the PC5 communication between the member UEs that has been notified from one of the member UEs. The leader UE can change the scheduling of the PC5 communication between the member UEs, using the QoS monitoring result of the PC5 communication between the member UEs as necessary. The leader UE notifies the member UEs of changed scheduling information for the PC5 communication between the member UEs.

The methods disclosed in the previous embodiments or its modifications should be appropriately applied to these methods. For example, the base station in the second embodiment should be replaced with the leader UE, and the UE performing the PC5 communication should be replaced with the member UE performing the PC5 communication. This can yield a desired QoS for the V2X service using the PC5 communication between the member UEs.

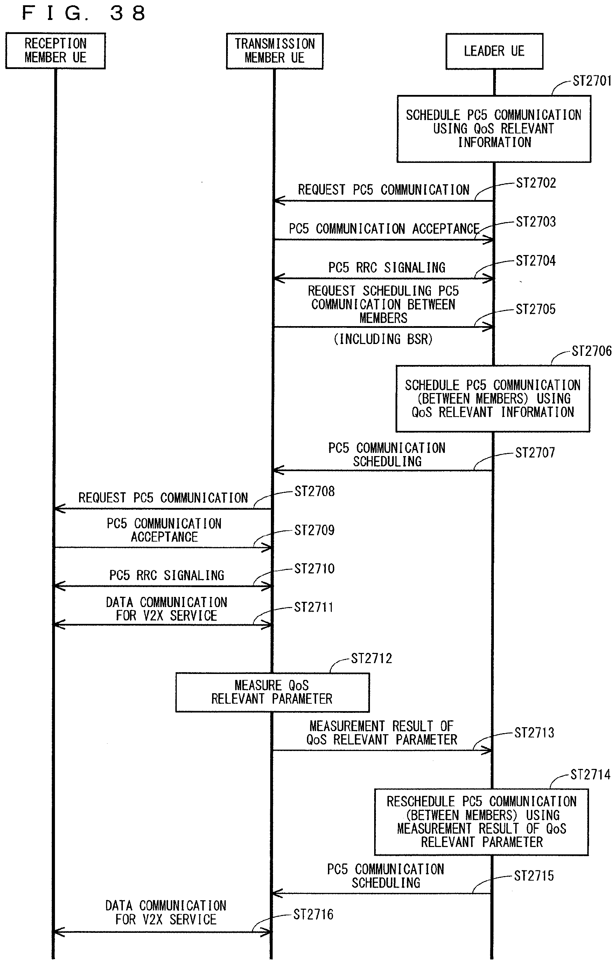

FIG. 38 illustrates an example sequence for monitoring the QoS in the PC5 communication according to the fourth modification of the second embodiment. FIG. 38 illustrates an example of performing the groupcast communication using the PC5 communication. FIG. 38 illustrates an example where the leader UE in a group schedules the PC5 communication between the member UEs. FIG. 38 illustrates the leader UE in the group, and the transmission member UE and the reception member UE between which the PC5 communication is performed.

In Step ST2701, the leader UE schedules the PC5 communication between the leader UE and the transmission UE, using the QoS relevant information. The leader UE and the transmission member UE establish the PC5 link and perform the PC5 RRC signaling in Steps ST2702 to ST2704.

When a V2X service using the PC5 communication between the member UEs is generated in the transmission member UE, the transmission member UE notifies the leader UE of a request for scheduling the PC5 communication between the member UEs in Step ST2705. The transmission member UE may include the request in the RRC signaling of Step ST2704. The transmission member UE may include the BSR in the scheduling request.

In Step ST2706, the leader UE schedules the PC5 communication between the member UEs, using the QoS relevant information and BSR information included in the scheduling request received in Step ST2705. In Step ST2707, the leader UE notifies the transmission member UE of the scheduling information for the PC5 communication between the member UEs.

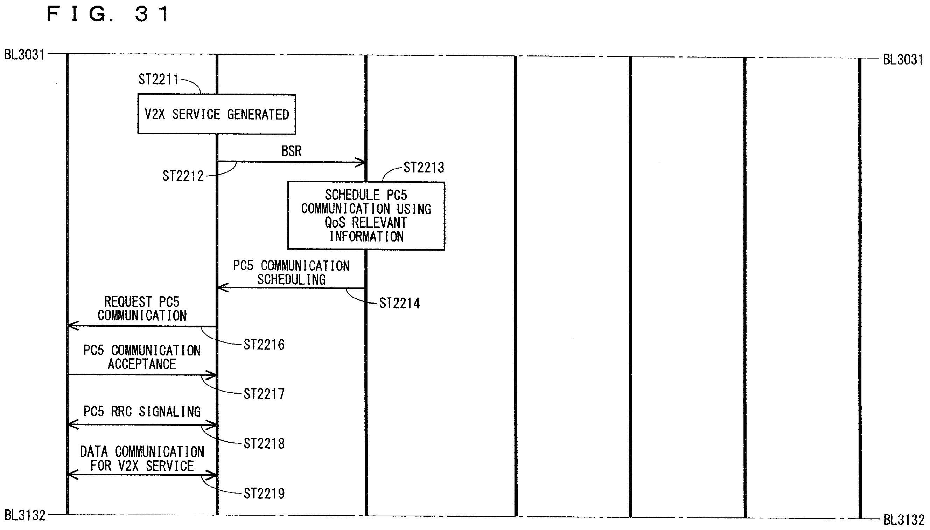

Upon receipt of the scheduling information for the PC5 communication between the member UEs in Step ST2707, the transmission member UE notifies the reception member UE of a request for performing the PC5 communication, using the scheduling information in Step ST2708. The processes in Steps ST2216 to ST2219 in FIG. 31 should be appropriately applied to processes in Steps ST2708 to ST2711, respectively. This enables transmission and reception of the data for the V2X service between the reception member UE and the transmission member UE.

The transmission member UE monitors the QoS in Step ST2712. The transmission member UE measures the QoS relevant parameter, and notifies the leader UE of the measurement result in Step ST2713. In Step ST2714, the leader UE reschedules the PC5 communication between the member UEs, using the measurement result of the QoS relevant parameter notified from the transmission member UE. The methods disclosed in the second embodiment may be applied to a method for scheduling the PC5 communication between the member UEs using the measurement result of the QoS relevant parameter.

In Step ST2715, the leader UE notifies the transmission member UE of information on the result of the PC5 communication scheduling performed in Step ST2714. The transmission member UE transmits and receives the data for the V2X service to and from the reception member UE using the PC5 communication scheduling information in Step ST2716. Although transmission and reception of the data for the V2X service is disclosed herein, the same applies to transmission and reception via the PC5-S signaling or the PC5 RRC signaling.

As such, monitoring the QoS by the transmission member UE and notification of the QoS monitoring result to the leader UE enable the leader UE to schedule the PC5 communication between the member UEs, using the QoS monitoring result for the PC5 communication between the member UEs. This can satisfy the QoS required for the PC5 communication between the member UEs, even when the communication quality of the PC5 communication between the member UEs is changed.

A plurality of QoS parameter sets for the PC5 communication may be preconfigured in the leader UE. The leader UE may select one of the plurality of QoS parameter sets for the PC5 communication that are preconfigured in the UE, and schedule the PC5 communication using the selected QoS parameter set for the PC5 communication. The aforementioned methods may be applied to methods for selecting the QoS parameter for the PC5 communication. The methods disclosed in the third modification of the second embodiment should be appropriately applied to these methods.

Thus, the leader UE can reschedule the PC5 communication to meet the communication quality of the PC5 communication. The use PC5 communication resources can be efficiently scheduled. This can increase the use efficiency of the PC5 communication resources.

What is disclosed is that the leader UE schedules the PC5 communication between the member UEs. The base station may schedule the PC5 communication between the member UEs. The base station may schedule the PC5 communication between the member UEs when the leader UE is located within a coverage of the base station. The scheduling information should be notified to the member UEs through the leader UE. The member UEs perform the PC5 communication, using the notified scheduling information.

One of the member UEs may notify the base station of the QoS monitoring result in the PC5 communication between the member UEs. This may be applied when the base station schedules the PC5 communication between the member UEs. The leader UE may notify the base station of the QoS monitoring result in the PC5 communication between the member UEs which has been obtained from one of the member UEs. The base station changes the scheduling of the PC5 communication between the member UEs, using the QoS monitoring result. The base station notifies the leader UE of the changed scheduling information for the PC5 communication between the member UEs. The leader UE notifies the member UEs performing the PC5 communication of the scheduling information. The member UEs performs the PC5 communication, using the received scheduling information.

The methods disclosed in the previous embodiments or its modifications should be appropriately applied to these methods. The PC5 communication between the member UEs can produce the same advantages as previously described.

A plurality of QoS parameter sets required for the V2X service using the PC5 communication between the member UEs may be configured. Instead of the QoS parameters required for the V2X service using the PC5 communication between the member UEs, a plurality of QoS parameter sets required for the V2X service using the PC5 communication in a group may be configured.

For example, the first modification of the second embodiment should be appropriately applied to methods for reselecting a QoS parameter set from among the plurality of QoS parameter sets and providing the selected QoS parameter set. The PCF should notify the base station of the reselected QoS parameter set when the base station schedules the PC5 communication between the member UEs. The PCF should notify the leader UE of the reselected QoS parameter set when the leader UE schedules the PC5 communication between the member UEs.

This can yield a desired QoS for the V2X service using the PC5 communication between the member UEs.

The base station may broadcast a resource pool to be used for scheduling the PC5 communication between the member UEs. The leader UE schedules the PC5 communication between the member UEs, using the resource pool. One or more resource pools to be used for scheduling the PC5 communication between the member UEs may be configured. In such a case, for example, the methods disclosed in the second modification of the second embodiment should be appropriately applied. This can produce the same advantages as previously described.

The resource pool to be used for scheduling the PC5 communication between the member UEs may be configured in the leader UE. The leader UE schedules the PC5 communication between the member UEs, using the resource pool. One or more resource pools to be used for scheduling the PC5 communication between the member UEs may be configured in the UE. In such a case, for example, the methods disclosed in the third modification of the second embodiment should be appropriately applied. This can produce the same advantages as previously described.

The resource pool to be used for scheduling the PC5 communication between the member UEs may be distinguished from other resource pools. For example, the resource pool to be used for scheduling the PC5 communication between the member UEs may be distinguished from a resource pool to be used for scheduling the PC5 communication between the leader UE and the member UE. Distinguishing between the resource pools can avoid a collision in the scheduling of each PC5 communication. Flexible adjustment for satisfying the QoS required for each PC5 communication is possible.

The methods disclosed in the fourth modification of the second embodiment can avoid a situation where the QoS required for the V2X service using the PC5 communication between the UEs in a UE group continues to be unsatisfactory when the PC5 communication is performed in the UE group.

### The third embodiment

In 3GPP, NW slicing of slicing NW resources and using the slice for each service has been discussed (see Non-Patent Document 16). In the NW slicing, a different slice is used for each PDU session. Thus, Single layer-Network Slice Selection Assistance Information (S-NSSAI) indicating an identifier of one slice is given for each PDU session.

A list of S-NSSAIs to be supported is notified between the RAN node and the AMF in advance. The AMF notifies the RAN node of the S-NSSAI to be used in the PDU session when establishing the PDU session. The AMF includes the S-NSSAI information in a PDU session resource setup request message and notifies the RAN node of the information. In such a manner, the AMF requests the RAN node to reserve and use resources for the slices.

In the PC5 communication, one V2X service is associated with one or more QoS flows. Furthermore, one PC5-S link is associated with one or more V2X services. One PC5-S link is associated with one or more QoS flows for the same V2X service or different V2X services.

Consequently, the QoS is managed based on the QoS flow in the V2X service using the PC5 communication. Thus, the PDU session is not established. Thereby, in an attempt to perform the NW slicing in the V2X service using the PC5 communication, the PDU session for configuring the S-NSSAI is not established. Thus, the NW slicing cannot be performed.

The third embodiment discloses a method for solving such a problem.

A different slice is used for each V2X service. One S-NSSAI is given for each V2X service. Alternatively, a different slice may be used for each V2X service group consisting of one or more V2X services. One S-NSSAI may be given for each V2X service group. A different slice may be used for each PC5-S link. One S-NSSAI may be given for each PC5-S link.

One or more slices may be used for each V2X service. One or more S-NSSAIs may be given for each V2X service. For example, a different slice may be used for each QoS flow. One S-NSSAI may be given for each QoS flow.

A QoS rule for the PC5 communication may be configured for each QoS flow for the PC5 communication. A QoS parameter for the PC5 communication may be configured for each QoS flow for the PC5 communication. A QoS flow for the PC5 communication may be configured for each QoS parameter for the PC5 communication. For example, when a plurality of QoS parameters are configured for the V2X service using the PC5 communication, a different slice may be used for each of the QoS parameters. One S-NSSAI may be given for each QoS parameter. Consequently, a different slice is used for each QoS flow.

Thereby, the unit for dividing resources into slices in the PC5 communication is configured.

The AMF notifies the RAN node of the S-NSSAI(s) for the PC5 communication. The AMF may notify the S-NSSAI(s) for the PC5 communication together with information on the V2X service authentication to be notified to the RAN node. Alternatively, the AMF may include the S-NSSAI(s) for the PC5 communication in the information on the authentication and notify the S-NSSAI(s).

The PCF may notify the RAN node of the S-NSSAI(s) for the PC5 communication. The PCF may include information associating the V2X service for the PC5 communication with the S-NSSAI(s) in the V2X policy to be notified from the PCF to the RAN node through the AMF, and notify the information. Consequently, the RAN node can recognize the association between the V2X service for the PC5 communication and the S-NSSAI(s).

The S-NSSAI information for the PC5 communication may be stored in the CN. The information associating the V2X service with the S-NSSAI(s) may be stored in the CN. The methods disclosed in the first embodiment should be appropriately applied to a method for storing the information in the CN.

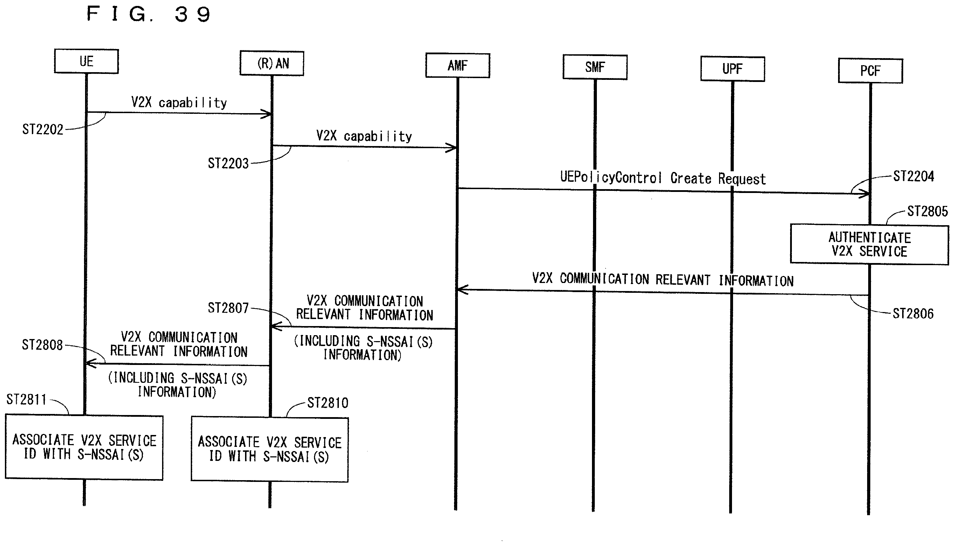

FIG. 39 illustrates the first example sequence for performing the network slicing in the V2X service using the PC5 communication according to the third embodiment. FIG. 39 discloses a method for providing the UE and the RAN node with association between the V2X service using the PC5 communication and a network slice corresponding to the service. In FIG. 39, the same step numbers are applied to the steps common to those in FIGS. 28 and 29, and the common description thereof is omitted.

In Steps ST2202 to ST2204, the UE and the PCF perform processes of the V2X authentication and requesting provision of the V2X policy. In Steps ST2806 to ST2808, the PCF provides the RAN node and the UE with the V2X policy. The PCF notifies the RAN node and the UE of the V2X communication relevant information.

In Step ST2807, the AMF associates the V2X service using the PC5 communication with an identifier indicating a network slice in which the service is implemented, and notifies the RAN node of the association information. The AMF may include the association information in the V2X communication relevant information, and notify the information. In Steps ST2807 and ST2808, the AMF associates the V2X service using the PC5 communication with the identifier indicating the network slice in which the service is implemented, and notifies the UE of the association information. The AMF may notify the association information through the RAN node. The AMF may include the association information in the V2X communication relevant information, and notify the information.

The identifier indicating the network slice may be a S-NSSAI. This enables the RAN node and the UE to recognize the network slice corresponding to the V2X service using the PC5 communication.

In the example of FIG. 39, the AMF associates the V2X service using the PC5 communication with the identifier indicating the network slice, and notifies the RAN node or the UE of the association information. As another method, the PCF may associate the V2X service using the PC5 communication with the identifier indicating the network slice, and notify the RAN node or the UE of the association information. The PCF may notify the RAN node and the UE of the information through the AMF.

The PCF may store the association information between the V2X service using the PC5 communication and the network slice in which the service is implemented. The PCF, for example, includes the association information in the V2X communication relevant information, and notifies the AMF of the information in Step ST2806. The AMF may include the association information in the V2X communication relevant information, and notify the RAN node and the UE of the information. Consequently, the PCF can provide the association information between the V2X service using the PC5 communication and the network slice in which the service is implemented, using the process of providing the V2X policy.

The use of the same processes can simplify processes of network-slicing the V2X service using the PC5 communication.

In Step ST2810, the RAN node associates an identifier of the V2X service with the identifier of the network slice, and uses the resource configured in the network slice, for the V2X service using the PC5 communication. The resource for the network slice may be preconfigured in the RAN node. Alternatively, the OAM may notify the RAN node of the resource for the network slice in advance. Examples of the resource may include radio resources and a data buffer capacity in each protocol stack. The resources may include CPU processing capability in the RAN and a storage capacity of a storage medium.

In Step ST2811, the UE associates the identifier of the V2X service with the identifier of the network slice, and uses the resource configured in the network slice, for the V2X service using the PC5 communication. The resource for the network slice may be preconfigured in the UE. Examples of the resource may include radio resources and a data buffer capacity in each protocol stack. The resources may include CPU processing capability in the UE and a storage capacity of a storage medium.

This enables the RAN node or the UE to recognize the V2X service using the PC5 communication, the network slice to be used for the service, and the resource for the slice.

The base station should slice the PC5 communication resources. The S-NSSAI should be associated with each slice. The base station should slice the PC5 communication resources when scheduling the PC5 communication. The base station determines which resource in which slice is used, from the obtained association information between the V2X service for the PC5 communication and the S-NSSAI(s), when scheduling the V2X service using the PC5 communication. The base station schedules the PC5 communication, using the resource in the slice.

The base station notifies the transmission UE performing the PC5 communication of the scheduling information. The transmission UE performing the PC5 communication performs the PC5 communication with the reception UE, using the scheduling information received from the base station. Thus, the PC5 communication between the UEs is performed in the slice corresponding to the V2X service. Consequently, the PC5 communication resources can be sliced.

The base station may slice a resource pool to be used for the PC5 communication, as the PC5 communication resources. The methods disclosed in the second modification of the second embodiment should be appropriately applied to a method for configuring the V2X service using the PC5 communication and the resource pool. Although providing a resource pool for each V2X service is described, a resource pool may be configured for each QoS flow. Furthermore, a resource pool may be used for each PC5-S link. A resource pool can be configured according to a connection state in the PC5 communication.

The S-NSSAI should be associated with each slice. The base station should slice the resource pool to be used for the PC5 communication when broadcasting the resource pool for the PC5 communication. The base station determines which resource in which slice is used, from the obtained association information between the V2X service for the PC5 communication and the S-NSSAI(s), when broadcasting the resource pool for the PC5 communication. The base station associates the S-NSSAIs with the PC5 communication resources. Alternatively, the base station associates the V2X service with the S-NSSAI(s), and associates the S-NSSAIs with the PC5 communication resources. These pieces of information may be included in the system information or the system information to be used for the PC5 communication. The base station may broadcast these pieces of information.

Although what is disclosed is that the base station broadcasts the PC5 communication resources, the base station may notify dedicatedly each UE of the PC5 communication resources. The base station may give the notification, for example, via the RRC signaling. Furthermore, a message requesting the PC5 communication resources may be provided. The UE may notify the base station of the message. The base station may notify the PC5 communication resources dedicatedly to each UE that has transmitted the message. The base station may notify dedicatedly each UE of the association information between the slice and the V2X service as the PC5 communication resource. Consequently, the PC5 communication resource can be configured for each UE.

The UE performing the PC5 communication should slice the PC5 communication resources. Examples of the PC5 communication resources include a resource pool. The UE performing the PC5 communication may slice the PC5 communication resources, using information on the V2X service which is preconfigured in the UE. Alternatively, association between the V2X service and the S-NSSAI(s) and association between the S-NSSAIs and the PC5 communication resources may be preconfigured in the UE. This enables the UE performing the PC5 communication to slice the relevant PC5 communication resource, from the V2X service and the S-NSSAI(s).

The UE performing the PC5 communication should apply the aforementioned methods, when scheduling the PC5 communication with the PC5 communication resources preconfigured in the UE. The UE performing the PC5 communication determines which resource in which slice is used, from the V2X service for the PC5 communication, the S-NSSAIs, and the PC5 communication resources corresponding to the S-NSSAIs, when scheduling the V2X service using the PC5 communication. The UE performing the PC5 communication schedules the PC5 communication, using the resource in the slice.

The transmission UE performing the PC5 communication schedules the PC5 communication with the PC5 communication resources received from the base station, for example, the resource pool information for the PC5 communication. Consequently, the UE performing the PC5 communication performs the PC5 communication with the reception UE. Thus, the PC5 communication between the UEs is performed in the slice corresponding to the V2X service. Consequently, the PC5 communication resources can be sliced.

Another method is disclosed. The AMF notifies the UE of the S-NSSAI(s) for the PC5 communication. The AMF may notify the S-NSSAI(s) for the PC5 communication together with information on the V2X service authentication to be notified to the UE. Alternatively, the AMF may include the S-NSSAI(s) for the PC5 communication in the information on authentication, and notify the S-NSSAI(s). The PCF may notify the UE of the S-NSSAI(s) for the PC5 communication. The PCF may include information associating the V2X service for the PC5 communication with the S-NSSAI(s) in the V2X policy to be notified to the UE through the AMF and the RAN node, and notify the information.

The method for providing the V2X communication relevant information or the V2X policy, which is disclosed in the first embodiment or its modification, may be applied to a method for notifying the information associating the V2X service for the PC5 communication with the S-NSSAI(s) from the CN to the UE. This can avoid complication using different processing methods, and reduce malfunctions.

The S-NSSAI(s) for the PC5 communication may be configured in the UE. The information associating the V2X service for the PC5 communication with the S-NSSAI(s) may be configured in the UE. These pieces of information may be prestored in the UE. The methods disclosed in the first embodiment may be appropriately applied to a method for storing these pieces of information in the UE. These pieces of information may be provided according to the method for notifying the information from the CN node to the UE, or updated. Consequently, the UE can recognize the association between the V2X service for the PC5 communication and the S-NSSAI(s).

The transmission UE performing the PC5 communication may notify the reception UE of S-NSSAI information for the PC5 communication. The transmission UE may notify the reception UE of the information associating the V2X service for the PC5 communication with the S-NSSAI(s). The methods disclosed in the fourth modification of the first embodiment may be applied to the notification method. The reception UE can recognize the V2X service using the PC5 communication and the S-NSSAI(s).

The radio resources in the UE performing the PC5 communication may be divided into slices. Examples of the radio resources in the UE include a buffer capacity to be used in the UE and the control processing capability in the UE. The reception UE can configure the radio resources to be used in a use UE, using the V2X service using the PC5 communication and the S-NSSAI(s) that have been received from the transmission UE. Consequently, not only the PC5 communication resources such as a resource pool but also the radio resources in the UE can be sliced.

An identifier may be provided for each PC5 communication resource. One identifier of a PC5 communication resource may be associated with one or more S-NSSAIs. This can reduce the amount of information required for associating the PC5 communication resources with the S-NSSAIs.

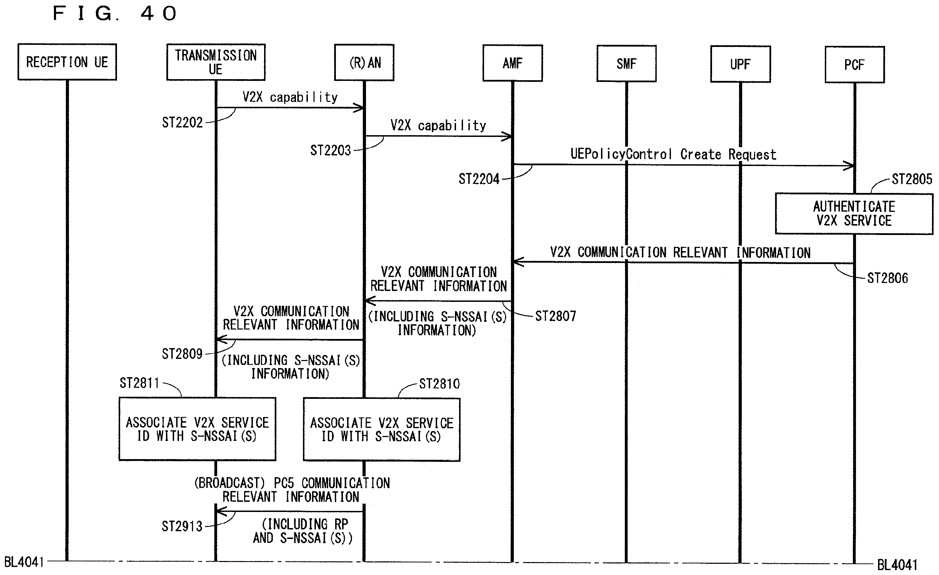

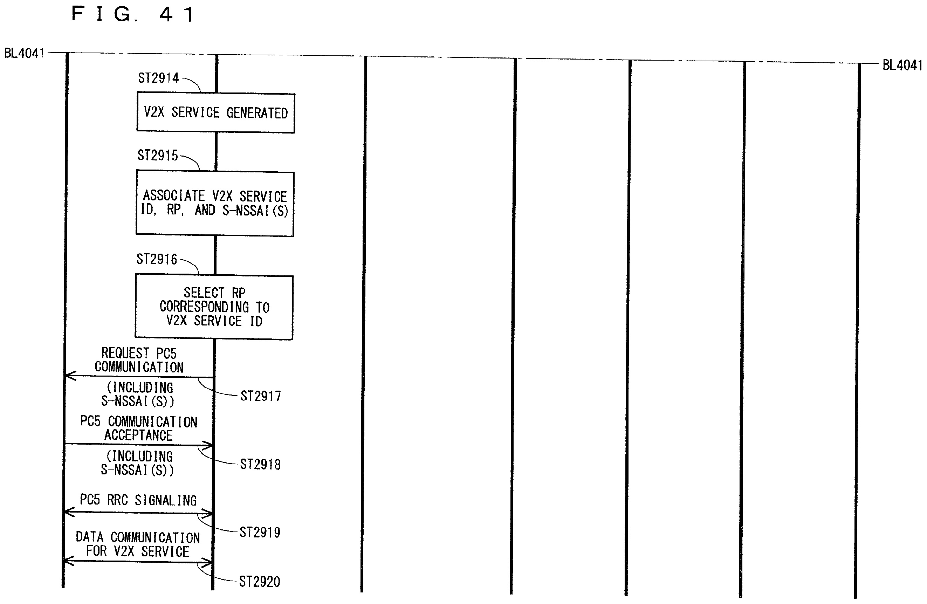

FIGS. 40 and 41 illustrate the second example sequence for performing the network slicing in the V2X service using the PC5 communication according to the third embodiment. FIGS. 40 and 41 are connected across a location of a border BL4041. In FIGS. 40 and 41, the same step numbers are applied to the steps common to those in FIG. 39, and the common description thereof is omitted.

In Steps ST2810 and ST2811, the RAN node and the transmission UE associate an identifier of the V2X service with an identifier of a network slice. In this associating, the RAN node and the transmission UE determine to use the resource configured in the network slice, for the V2X service using the PC5 communication.

In Step ST2913, the RAN node broadcasts the PC5 communication relevant information. The RAN node should broadcast the S-NSSAI information as the PC5 communication relevant information. The RAN node may associate RP information with the S-NSSAI information, and broadcast the information. Alternatively, the RAN node may associate the V2X service with the S-NSSAI information, and broadcast the information. Alternatively, the RAN node may associate the V2X service, the RP information, and the S-NSSAI information, and broadcast the information. Upon receipt of the broadcast information, the transmission UE can recognize the RP and the S-NSSAI(s) to be used for the V2X service using the PC5 communication.

In Step ST2914, a V2X service is generated in the transmission UE. In Step ST2915, the transmission UE associates the V2X service, the RP information, and the S-NSSAI information, using the PC5 communication relevant information received in Step ST2913. In Step ST2916, the transmission UE selects an RP corresponding to the generated V2X service, and schedules the PC5 communication using the RP.

In Step ST2917, the transmission UE notifies a request for performing the PC5 communication, using the scheduling result. The transmission UE should include the S-NSSAI information corresponding to the V2X service, in the request for performing the PC5 communication. The reception UE receives the request for performing the PC5 communication from the transmission UE. Upon receipt of a request for performing the PC5 communication for a desired V2X service, the reception UE transmits the PC5 communication acceptance to the transmission UE. The reception UE may include the S-NSSAI information corresponding to the V2X service, in the PC5 communication acceptance. The transmission UE can verify the S-NSSAI(s).

The reception UE determines which resource in which slice is used, using the S-NSSAI information corresponding to the V2X service which has been received in Step ST2917. The reception UE uses the resource configured in the network slice for the V2X service using the PC5 communication, using the identifier of the network slice corresponding to the V2X service. As described above, the resource for the network slice may be preconfigured in the UE. Examples of the resource may include radio resources and a data buffer capacity in each protocol stack. The resources may include the CPU processing capability in the UE and a storage capacity of a storage medium.

The transmission UE and the reception UE perform the PC5 RRC signaling using the network-sliced resource in Step ST2919, and perform data communication for the V2X service using the PC5 communication in Step ST2920. The transmission UE and the reception UE may perform the PC5-S signaling using the network-sliced resource also in Steps ST2917 and ST2918.

This enables the network slicing in the PC5 communication between the UEs. The network slicing can avoid the interference in resource with the V2X service using another slice. The QoS of the V2X service using the PC5 communication can be stably satisfied.

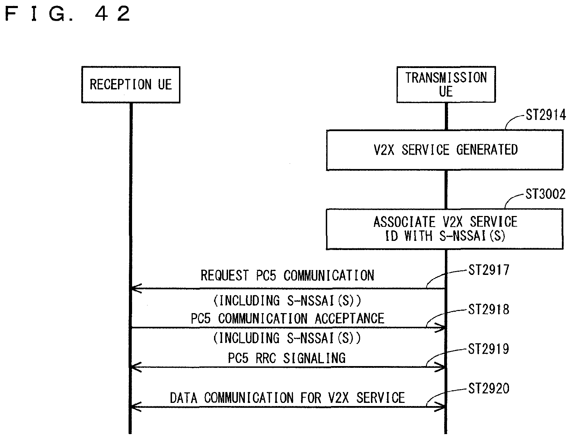

FIG. 42 illustrates the third example sequence for performing the network slicing in the V2X service using the PC5 communication according to the third embodiment. In FIG. 42, the same step numbers are applied to the steps common to those in FIGS. 40 and 41, and the common description thereof is omitted.

Information on a plurality of network slices for the PC5 communication may be preconfigured in the UE. The information on the network slices may be identifiers of the network slices. The resource information for the PC5 communication to be used in the network slices may be preconfigured in the UE. Alternatively, the V2X service using the PC5 communication and the resource information for the PC5 communication to be used for the service may be preconfigured in the UE. The association between the V2X service and the network slice in which the service is implemented may be preconfigured in the UE.

When a V2X service using the PC5 communication is generated in the transmission UE in Step ST2914, the transmission UE calculates, in Step ST3002, information for identifying a network slice in which the generated V2X service is implemented (e.g., S-NSSAI), from the association information between the V2X service and the network slice in which the service is implemented. The association information is preconfigured in the UE. The transmission UE calculates the PC5 communication resources to be used for the V2X service. The transmission UE may calculate the PC5 communication resources to be used for the network slice (e.g., the RP), from the information for identifying the network slice.

The transmission UE schedules the PC5 communication using the PC5 communication resources for the PC5 communication, and notifies a request for performing the PC5 communication using the scheduling result in Step ST2917. The transmission UE should include the S-NSSAI information corresponding to the V2X service, in the request for performing the PC5 communication. The reception UE receives the request for performing the PC5 communication from the transmission UE. Upon receipt of a request for performing the PC5 communication for a desired V2X service, the reception UE transmits the PC5 communication acceptance to the transmission UE. The reception UE may include the S-NSSAI information corresponding to the V2X service, in the PC5 communication acceptance. The transmission UE can verify the S-NSSAI(s).

The reception UE determines which resource in which slice is used, using the S-NSSAI information corresponding to the V2X service which has been received in

Step ST2917. The reception UE uses, for the V2X service using the PC5 communication, the resource configured in the network slice corresponding to the V2X service using the identifier of the network slice. As described above, the resource for the network slice may be preconfigured in the UE. Examples of the resource may include radio resources and a data buffer capacity in each protocol stack. The resources may include the CPU processing capability in the UE and a storage capacity of a storage medium.

The transmission UE and the reception UE perform the PC5 RRC signaling using the network-sliced resource in Step ST2919, and perform data communication for the V2X service using the PC5 communication in Step ST2920. The transmission UE and the reception UE may perform the PC5-S signaling in Steps ST2917 and ST2918 also using the network-sliced resource.

When the UE performing the PC5 communication is located outside the coverage of the cell, the UE can perform network slicing in the PC5 communication between the UEs, using information on the network slice preconfigured in the UE. The network slicing can avoid the interference in resource with the V2X service using another slice. The QoS of the V2X service using the PC5 communication can be stably satisfied.

The methods disclosed in the third embodiment enable the slicing in the PC5 communication. The PC5 communication resources can be sliced in the V2X service using the PC5 communication. The use of slicing enables isolation of the resource for each slice. Consequently, the slices in the V2X service using the PC5 communication can avoid the influence to other slices, that is, the interference to the other slices.

In the V2X service such as the D2D communication or the V2V communication, not only the PC5 communication but also the Uu communication is sometimes used. In the same V2X service, the slice to be used in the PC5 communication may be identical to the slice to be used in the Uu communication. In the same V2X service, the slice to be used in the PC5 communication may be identical in S-NSSAI to the slice in the Uu communication. Consequently, the same V2X service can be implemented using the resource belonging to the same slice. Conversely, different V2X services can be implemented using the resources belonging to different slices. This can avoid the interference in resource between slices, and avoid the interference in resource between different V2X services.

The S-NSSAI includes Slice Service Type (SST) information indicating a type of a slice, and Slice Differentiator (SD) information for differentiating slices in the same SST. For example, the SST may vary between the V2X service using the Uu communication and the V2X service using the PC5 communication. The Uu communication and the PC5 communication may be treated as different service types.

As another method, the SST may be consistent and the SD may vary between the V2X service using the Uu communication and the V2X service using the PC5 communication. Consequently, V2X services identical in type can be distinguished between the Uu communication and the PC5 communication.

This Description mainly discloses the D2D communication and the V2V communication. However, the embodiments and the modifications are appropriately applicable to the communication using the PC5 communication (SL communication), for example, implementation of the V2X service using the PC5 communication through Vehicle-to-Pedestrian (V2P) or Vehicle-to-Infrastructure (V2I).

The embodiments and the modifications are mere exemplifications, and can be freely combined. The arbitrary constituent elements of the embodiments and the modifications can be appropriately modified or omitted.

For example, a subframe in the embodiments and the modifications is an example time unit of communication in the fifth generation base station communication system. The subframe may be configured per scheduling. The processes described in the embodiments and the modifications as being performed per subframe may be performed per TTI, per slot, per sub-slot, or per mini-slot.

While the present invention is described in detail, the foregoing description is in all aspects illustrative and does not restrict the present invention. Therefore, numerous modifications and variations that have not yet been exemplified can be devised.

### Description of References

- 200: communication system
- 202: communication terminal device
- 203: base station device
- 210: communication system.

## Claims

1. A communication system, comprising:
- a base station configured to perform communication with a core network; and
- a communication terminal configured to perform radio communication with the base station,
wherein the base station supports a Non-Public Network,
the communication terminal is configured to implement a service using Device-to-Device communication, and
the communication terminal determines whether the base station is accessible, based on information indicating in which Non-Public Network various services using the Device-to-Device communication are available.

2. The communication system according to claim 1,
wherein the base station transmits identification information on the Non-Public Network supported by the base station, and
the communication terminal receives the identification information transmitted from the base station, and determines whether the base station is accessible, based on the received identification information, a type of the service implemented by the communication terminal, and the information indicating in which Non-Public Network the various services using the Device-to-Device communication are available.

3. The communication system according to claim 1 or 2,
wherein the information indicating in which Non-Public Network the various services using the Device-to-Device communication are available is stored in the core network, and
the communication terminal obtains the information from the core network.

4. The communication system according to claim 1 or 2,
wherein the information indicating in which Non-Public Network the various services using the Device-to-Device communication are available is stored in the communication terminal.

5. A communication terminal configured to perform radio communication with a base station,
wherein the base station supports a Non-Public Network,
the communication terminal is configured to implement a service using Device-to-Device communication, and
the communication terminal determines whether the base station is accessible, based on information indicating in which Non-Public Network various services using the Device-to-Device communication are available.

6. A base station configured to perform radio communication with a communication terminal,
wherein the base station supports a Non-Public Network,
the communication terminal is configured to implement a service using Device-to-Device communication,
the communication terminal determines whether the base station is accessible, based on identification information on the Non-Public Network supported by the base station, a type of the service implemented by the communication terminal, and information indicating in which Non-Public Network various services using the Device-to-Device communication are available, and
the base station transmits, to the communication terminal, the identification information on the Non-Public Network supported by the base station.
